(19) Europäisches Patentamt
European Patent Office
Office européen des brevets

(11) **EP 3 568 289 B1**

(12) **FASCICULE DE BREVET EUROPEEN**

(45) Date de publication et mention de la délivrance du brevet:
**06.01.2021 Bulletin 2021/01**

(21) Numéro de dépôt: **18702754.5**

(22) Date de dépôt: **10.01.2018**

(51) Int Cl.:
**B29D 30/02** *(2006.01)*  **B29C 70/24** *(2006.01)*
**B60C 17/00** *(2006.01)*  **B29D 30/06** *(2006.01)*
**B60C 7/12** *(2006.01)*  **B60C 7/14** *(2006.01)*
**B60C 7/18** *(2006.01)*

(86) Numéro de dépôt international:
**PCT/FR2018/050055**

(87) Numéro de publication internationale:
**WO 2018/130782 (19.07.2018 Gazette 2018/29)**

(54) **ASSEMBLAGE COMPRENANT UNE STRUCTURE ÉLASTIQUE ET UNE STRUCTURE PORTEUSE**

ANORDNUNG MIT EINER ELASTISCHEN STRUKTUR UND EINER STÜTZSTRUKTUR

ASSEMBLY COMPRISING AN ELASTIC STRUCTURE AND A SUPPORTING STRUCTURE

(84) Etats contractants désignés:
AL AT BE BG CH CY CZ DE DK EE ES FI FR GB GR HR HU IE IS IT LI LT LU LV MC MK MT NL NO PL PT RO RS SE SI SK SM TR

(30) Priorité: **12.01.2017 FR 1750286**

(43) Date de publication de la demande:
**20.11.2019 Bulletin 2019/47**

(73) Titulaire: **Compagnie Générale des Etablissements Michelin**
**63000 Clermont-Ferrand (FR)**

(72) Inventeurs:
• **HUG, Gregor**
**63040 Clermont-Ferrand Cedex 9 (FR)**
• **LIMOZIN, Bastien**
**63040 Clermont-Ferrand Cedex 9 (FR)**
• **RIGO, Sébastien**
**63040 Clermont-Ferrand Cedex 9 (FR)**
• **CORNILLE, Richard**
**63040 Clermont-Ferrand Cedex 9 (FR)**
• **VILCOT, Florian**
**63040 Clermont-Ferrand Cedex 9 (FR)**

(74) Mandataire: **Louret, Sylvain**
**M.F.P. MICHELIN**
**Service juridique - Propriété Intellectuelle**
**CBS/CORP/J/PI - F35 - Site de Ladoux**
**23, place des Carmes - Déchaux**
**63040 Clermont-Ferrand Cedex 9 (FR)**

(56) Documents cités:
WO-A1-2016/116491      GB-A- 542 379
JP-A- 2010 000 761      US-A- 4 235 270
US-A- 4 248 286      US-A- 5 175 034
US-A- 5 840 399      US-A1- 2007 215 266
US-B1- 6 561 245

**Description**

L'invention a pour objet un assemblage, un assemblage imprégné, un pneumatique, un ensemble monté et un procédé de fabrication d'un pneumatique.

L'invention concerne le domaine des pneumatiques destinés à équiper des véhicules. Le pneumatique est conçu préférentiellement pour des véhicules de tourisme, mais peut être utilisé sur tout autre type de véhicule tels que des véhicules à deux roues, des véhicules poids lourds, agricoles, de génie civil ou des avions ou, plus généralement, sur tout dispositif roulant.

Un pneumatique classique est une structure torique, destinée à être montée sur une jante, pressurisée par un gaz de gonflage et écrasée sur un sol sous l'action d'une charge. Le pneumatique possède en tout point de sa surface de roulement, destinée à entrer en contact avec un sol, une double courbure: une courbure circonférentielle et une courbure méridienne. Par courbure circonférentielle, on entend une courbure dans un plan circonférentiel, défini par une direction circonférentielle, tangente à la surface de roulement du pneumatique selon la direction de roulement du pneumatique, et une direction radiale, perpendiculaire à l'axe de rotation du pneumatique. Par courbure méridienne, on entend une courbure dans un plan méridien ou radial, défini par une direction axiale, parallèle à l'axe de rotation du pneumatique, et une direction radiale, perpendiculaire à l'axe de rotation du pneumatique.

Dans ce qui suit, l'expression «radialement intérieur, respectivement radialement extérieur» signifie «plus proche, respectivement plus éloigné de l'axe de rotation du pneumatique». L'expression «axialement intérieur, respectivement axialement extérieur» signifie «plus proche, respectivement plus éloigné du plan équatorial du pneumatique», le plan équatorial du pneumatique étant le plan passant par le milieu de la surface de roulement du pneumatique et perpendiculaire à l'axe de rotation du pneumatique.

Il est connu que la mise à plat du pneumatique sur un sol horizontal, dans un plan circonférentiel et dans un plan méridien, est conditionnée par les valeurs des rayons de courbure respectivement circonférentiel et méridien, au niveau des points de la surface de roulement positionnés aux limites de l'aire de contact du pneumatique avec le sol. Cette mise à plat est d'autant plus facilitée que ces rayons de courbure sont grands, c'est-à-dire que les courbures sont petites, la courbure en un point, au sens mathématique, étant l'inverse du rayon de courbure. Il est également connu que la mise à plat du pneumatique impacte les performances du pneumatique, en particulier la résistance au roulement, l'adhérence, l'usure et le bruit.

Par conséquent, l'homme du métier, spécialiste du pneumatique, cherchant à obtenir le bon compromis entre les performances attendues du pneumatique telles que, de façon non exhaustive, l'usure, l'adhérence, l'endurance, la résistance au roulement et le bruit, a développé des solutions alternatives au pneumatique classique pour optimiser sa mise à plat.

Un pneumatique classique de l'état de la technique a généralement une grande courbure méridienne, c'est-à-dire un petit rayon de courbure méridien, au niveau des extrémités axiales de la bande de roulement, appelées épaules, lorsque le pneumatique, monté sur sa jante de montage et gonflé à sa pression d'utilisation recommandée, est soumis à sa charge de service. La jante de montage, la pression d'utilisation et la charge de service sont définies par des normes, telles que, par exemple, les normes de la European Tyre and Rim Technical Organisation (ETRTO).

Un pneumatique classique porte la charge appliquée, essentiellement par les extrémités axiales de la bande de roulement, ou épaules, et par les flancs reliant la bande roulement à des bourrelets assurant la liaison mécanique du pneumatique avec sa jante de montage. Il est connu qu'une mise à plat méridienne d'un pneumatique classique, avec une petite courbure méridienne au niveau des épaules, est généralement difficile à obtenir.

Le document US 4235270 décrit un pneumatique ayant un corps annulaire en matériau élastomérique, comprenant une partie cylindrique radialement extérieure, à la périphérie du pneumatique, pouvant comprendre une bande de roulement, et une partie cylindrique radialement intérieure, destinée à être montée sur une jante. Une pluralité de parois, espacées selon la direction circonférentielle, s'étendent depuis la partie cylindrique radialement intérieure jusqu'à la partie cylindrique radialement extérieure, et assurent le port de la charge. En outre, des flancs peuvent relier les deux parties cylindriques respectivement radialement intérieure et radialement extérieure, pour former, en association avec la bande de roulement et les flancs, une cavité fermée et permettre ainsi la pressurisation du pneumatique. Un tel pneumatique a toutefois une masse élevée, par rapport à un pneumatique classique, et, en raison de son caractère massif, est susceptible de dissiper une énergie élevée, pouvant limiter son endurance, et donc sa durée de vie.

Le document WO 2009087291 décrit une structure pneumatique comprenant deux viroles annulaires respectivement interne, ou radialement intérieure, et externe, ou radialement extérieure, reliées par deux flancs et par une structure porteuse. Selon cette invention, la structure porteuse est pressurisée et partage le volume annulaire du pneumatique en une pluralité de compartiments ou d'alvéoles, et les flancs sont liés ou intégrés à la structure porteuse. Dans ce cas, la charge appliquée est portée à la fois par la structure porteuse et les flancs. La répartition de pression dans l'aire de contact n'est pas homogène dans la largeur axiale de l'aire de contact, avec des surpressions au niveau des épaules dues à la difficulté de mise à plat méridienne en raison de la liaison entre les flancs et la structure porteuse. Ces surpressions au niveau des épaules sont susceptibles de générer une usure importante des épaules de la bande de roulement.

Le document WO 2005007422 décrit une roue adaptative comprenant une bande adaptative et une pluralité de rayons s'étendant radialement vers l'intérieur depuis la bande adaptative jusqu'à un moyeu. La bande adaptative est destinée à s'adapter à la surface de contact avec un sol et à envelopper les obstacles. Les rayons transmettent la charge portée entre la bande adaptative et le moyeu, grâce à la mise en tension des rayons qui ne sont pas en contact avec le sol. Une telle roue adaptative nécessite une optimisation de la répartition des rayons pour garantir une périphérie sensiblement cylindrique. De plus, une roue adaptative a une masse relativement élevée par rapport à un pneumatique classique.

La présente invention a pour objectif de proposer un pneumatique permettant une mise à plat améliorée de la bande de roulement lorsque le pneumatique est soumis à une charge et qui soit facile à fabriquer à partir d'un assemblage adapté.

## Assemblage selon l'invention

A cet effet, l'invention a pour objet un assemblage, de préférence pour pneumatique, l'assemblage comprenant :

- une première structure de premiers éléments filaires, la première structure de premiers éléments filaires s'étendant selon une première direction générale,
- un deuxième structure de deuxièmes éléments filaires,
- une structure porteuse comprenant des éléments filaires porteurs reliant la première structure de premiers éléments filaires et la deuxième structure de deuxièmes éléments filaires entre elles, chaque élément filaire porteur comprenant au moins une portion filaire porteuse s'étendant entre la première structure de premiers éléments filaires et la deuxième structure de deuxièmes éléments filaires,

la première structure de premiers éléments filaires étant agencée de sorte que, pour une longueur au repos L de la première structure selon la première direction générale, exprimée en m, l'allongement à force maximale Art de la première structure de premiers éléments filaires selon la première direction générale vérifie :

$$Art > (2\pi \times H) / L$$

dans lequel $H0 \times K \leq H$ avec $H0$ la distance droite moyenne entre une face interne de la première structure de premiers éléments filaires et une face interne de la deuxième structure de deuxièmes éléments filaires lorsque chaque portion filaire porteuse est au repos, $H$ et $H0$ étant exprimées en m, et $K=0,50$.

Le principe de l'assemblage selon l'invention est d'avoir une structure porteuse comprenant des éléments porteurs reliant la première structure de premiers éléments filaires et la deuxième structure de deuxièmes éléments filaires, et capable, une fois l'assemblage agencé dans le pneumatique, de porter la charge appliquée au pneumatique par la mise en tension d'une partie des éléments porteurs positionnés en dehors de l'aire de contact, les éléments porteurs positionnés dans l'aire de contact étant soumis à un flambage car soumis à un effort de compression et ne participant donc pas au port de la charge appliquée.

L'assemblage selon l'invention peut être écru, c'est-à-dire dépourvu de toute composition adhésive destinée à favoriser l'adhésion entres les premiers et/ou deuxièmes éléments filaires avec une composition d'élastomère. L'assemblage selon l'invention peut également être adhérisé, c'est-à-dire revêtu au moins en partie d'au moins une composition adhésive favorisant une telle adhésion. Dans un mode de réalisation à deux couches, chaque premier et deuxième élément filaire à encoller est revêtu d'une couche d'un primaire d'adhésion et la couche de primaire d'adhésion est revêtue d'une couche de composition adhésive. Dans un mode de réalisation à une couche, chaque premier et deuxième élément filaire à encoller est directement revêtu d'une couche de composition adhésive. Un exemple de primaire d'adhésion est une résine époxy et/ou un composé isocyanate, éventuellement bloqué. La composition adhésive utilisée pourra être une colle RFL classique (Résorcinol-formaldéhyde-latex) ou bien encore les colles décrites dans les demandes WO 2013/017421, WO 2013/017422, WO 2013/017423, WO2015007641 et WO2015007642.

Par direction générale, on entend la direction générale selon laquelle s'étend la structure d'éléments filaires selon sa plus grande longueur et qui est parallèle aux bords longitudinaux de la structure d' éléments filaires. Ainsi, par exemple, une structure d'éléments filaires enroulée sur une bobine de révolution autour d'un axe présente une direction générale sensiblement parallèle à la direction de déroulage de la structure (ie la direction circonférentielle) qui est perpendiculaire aux directions axiale et radiale de la bobine.

La première structure de premiers éléments filaires étant suffisamment déformable, le procédé de fabrication du pneumatique est largement facilité. En effet, la première structure de premiers éléments filaires peut être déformée sans rompre de façon à s'allonger suffisamment pour suivre la conformation qui lui est imposée lors de la fabrication du pneumatique. Cette déformabilité de la première structure de premiers éléments filaires permet de poser la première structure de premiers éléments filaires en l'enroulant simplement autour du cylindre de confection contrairement à d'autres modes de réalisation dans lesquels d'autres solutions, beaucoup plus complexes industriellement, doivent être utilisées pour permettre à la première structure de premiers éléments filaires de suivre la conformation imposée lors de la fabrication du pneumatique.

L'allongement à la force maximale est mesuré conformément à la norme NF EN ISO 13934-1 de juillet 2013. Cet allongement à la force maximale étant mesuré selon la première direction générale, il correspond à l'allongement de la première structure de premiers éléments filaires à partir duquel au moins un premier élément filaire rompt. D'autres éléments filaires rompent sur la portion de l'allongement comprise entre l'allongement à la force maximale et l'allongement à rupture tels que définis dans la norme NF EN ISO 13934-1 de juillet 2013. Cette mesure pourra être effectuée sur un assemblage écru, un assemblage adhérisé ou bien extrait de pneumatique. De préférence, la mesure sera effectuée sur un assemblage écru ou adhérisé.

Dans la présente demande, les propriétés du premier tissu sont déterminées en soumettant le premier tissu à un essai en traction conformément à la norme NF EN ISO 13934-1 de juillet 2013. Les propriétés intrinsèques des éléments filaires sont déterminées en soumettant les éléments filaires à un essai en traction conformément à la norme ASTM D885/D885 MA de janvier 2010.

H représente, une fois l'assemblage intégré au pneumatique, la hauteur radiale moyenne de l'espace annulaire intérieur délimité radialement par la face interne de la première structure de premiers éléments filaires et la face interne de la deuxième structure de deuxièmes éléments filaires en l'absence de charge appliquée au pneumatique et en l'absence de pression dans le pneumatique. Cette hauteur radiale est au moins égale à 0,5 fois la distance droite moyenne entre les deux faces pour une portion filaire porteuse au repos de sorte que, une fois l'assemblage agencé dans le pneumatique, l'assemblage est capable de porter la charge appliquée au pneumatique par la mise en tension d'une partie des éléments porteurs positionnés en dehors de l'aire de contact, les éléments porteurs positionnés dans l'aire de contact étant soumis à un flambage car soumis à un effort de compression et ne participant donc pas au port de la charge appliquée. Ainsi, dans l'invention, on a au minimum $H = H0 \times K$ et $Art > (2\pi \times H0 \times K) / L$.

L'homme du métier sélectionnera une valeur de H supérieure ou égale à $K \times H0$ en fonction du type de pneumatique qu'il conçoit et en fonction du port de charge qu'il souhaite obtenir. De façon préférée, $H0 \times K \leq H < H0$ se sorte que, en l'absence de charge appliquée au pneumatique et en l'absence de pression dans le pneumatique, chaque portion filaire porteuse est dans un état replié.

Par élément filaire porteur, on entend tout élément longiligne de grande longueur relativement à sa section transversale, quelle que soit la forme de cette dernière, par exemple circulaire, oblongue, rectangulaire ou carrée, ou même plate, cet élément filaire pouvant être par exemple torsadé ou ondulé. Lorsqu'il est de forme circulaire, son diamètre est de préférence inférieur à 5 mm, plus préférentiellement compris dans un domaine allant de 100 $\mu$m à 1,2 mm.

Par distance droite moyenne entre la face interne de la première structure de premiers éléments filaires et la face interne de la deuxième structure de deuxièmes éléments filaires, on entend la distance mesurée perpendiculairement à ces deux faces. En d'autres termes, il s'agit de la distance la plus courte entre ces deux faces. Cette distance droite est mesurée et moyennée en au moins 5 points différents équi-répartis sur l'assemblage au repos.

Par longueur au repos de la première structure de premiers éléments filaires, on entend une longueur de la première structure de premiers éléments filaires qui n'est ni en extension ni en compression selon la première direction générale et présente donc un allongement nul selon cette première direction générale. La première structure de premiers éléments filaires n'est alors soumise à aucune contrainte extérieure autre que son propre poids.

Chaque élément filaire porteur, notamment chaque portion filaire porteuse qui relie les faces internes des première et deuxième structures respectivement de premiers et deuxièmes éléments filaires l'une à l'autre, peut être caractérisée géométriquement par sa longueur au repos $L_P$ et par sa section moyenne $S_P$, qui est la moyenne des sections obtenues par la coupe de la portion filaire porteuse par toutes les surfaces parallèles aux première et deuxième structures respectivement de premiers et deuxièmes éléments filaires et comprises entre les première et deuxième structures respectivement de premiers et deuxièmes éléments filaires. Dans le cas le plus fréquent d'une section constante de l'élément porteur et la portion filaire porteuse, la section moyenne $S_P$ est égale à cette section constante.

Chaque élément filaire porteur, notamment chaque portion porteuse, présente typiquement une plus petite dimension caractéristique E de sa section moyenne $S_P$ (qui est la moyenne des sections obtenues par la coupe de l'élément filaire porteur par toutes les surfaces parallèles aux première et deuxième structures respectivement de premiers et deuxièmes éléments filaires et comprises entre les première et deuxième structures respectivement de premiers et deuxièmes éléments filaires, préférentiellement au plus égale à 0.02 fois l'espacement maximal entre les deux faces internes des première et deuxième structures respectivement de premiers et deuxièmes éléments filaires (qui correspond à la hauteur radiale moyenne H de l'espace annulaire intérieur une fois l'assemblage agencé au sein du pneumatique en l'absence de charge appliquée au pneumatique et en l'absence de pression dans le pneumatique) et un rapport de forme R de sa section moyenne $S_P$ préférentiellement au plus égal à 3. Une plus petite dimension caractéristique E de la section moyenne $S_P$ de l'élément porteur au plus égale à 0.02 fois la hauteur radiale moyenne H de l'espace annulaire intérieur exclut tout élément porteur massif, ayant un volume important. En d'autres termes, lorsqu'il est filaire, chaque élément porteur a un élancement élevé, selon la direction radiale, lui permettant de flamber au passage dans l'aire de contact. En dehors de l'aire de contact, chaque élément porteur retrouve sa géométrie initiale, car son flambage est réversible. Un tel élément porteur a une bonne tenue à la fatigue.

Un rapport de forme R de sa section moyenne $S_P$ au plus égal à 3 signifie que la plus grande dimension caractéristique V de sa section moyenne $S_P$ est au plus égale à 3 fois la plus petite dimension caractéristique E de sa section moyenne $S_P$. A titre d'exemples, une section moyenne $S_P$ circulaire, ayant un diamètre égal à d, a un rapport de forme R=1, une section moyenne $S_P$ rectangulaire, ayant une longueur V et une largeur V', a un rapport de forme R=V/V', et une section moyenne $S_P$ elliptique, ayant un grand axe B et un petit axe B', a un rapport de forme R=B/B'.

Un élément porteur filaire a un comportement mécanique de type filaire, c'est-à-dire qu'il ne peut être soumis qu'à des efforts d'extension ou de compression selon sa ligne moyenne.

Il est à noter que tous les éléments porteurs filaires d'une structure porteuse n'ont pas nécessairement des longueurs au repos $L_P$ identiques.

Dans un mode de réalisation préféré, la structure porteuse comprend une pluralité d'éléments porteurs identiques, c'est-à-dire dont les caractéristiques géométriques et les matériaux constitutifs sont identiques.

Les éléments porteurs sont agencés de sorte qu'ils sont deux à deux non liés mécaniquement dans un espace délimité par les première et deuxième structures respectivement de premiers et deuxièmes éléments filaires. Ainsi, les éléments porteurs ont des comportements mécaniques indépendants. Par exemple, les éléments porteurs ne sont pas liés entre eux de façon à former un réseau ou un treillis.

Avantageusement, K=0,75, de préférence de K=0,80 et plus préférentiellement K=0,90.

Plus K se rapproche de 1, plus les portions filaires porteuses sont, en l'absence de charge appliquée au pneumatique et en l'absence de pression dans le pneumatique, proches de leur état au repos. Très préférentiellement, K=0,90 ce qui permet un port optimisé de la charge.

Dans un mode de réalisation préféré, la première structure de premiers éléments filaires est agencée de sorte que, pour toute contrainte non nulle, exprimée en N, inférieure ou égale à (PO x (L/2$\pi$ + H) x I) / 2 exercée sur la première structure de premiers éléments filaires selon la première direction générale, la première structure de premiers éléments filaires présente un allongement non nul selon la première direction générale avec I étant la largeur de la première structure de premiers éléments filaires exprimée en m et P0=100000.

Dans un mode de réalisation préféré, la première structure de premiers éléments filaires est agencée de sorte que, pour tout allongement de la première structure de premiers éléments filaires selon la première direction générale inférieur ou égal à (2$\pi$ x H) / L, la première structure de premiers éléments filaires développe une force, exprimée en N, selon la première direction générale inférieure ou égale à (PO x (L/2$\pi$ + H) x I) / 2 avec I étant la largeur de la première structure de premiers éléments filaires exprimée en m et P0=100000. La force développée est mesurée en appliquant la norme NF EN ISO 13934-1 de juillet 2013.

Ainsi, la première structure de premiers éléments filaires est déformable sous une contrainte relativement faible ce qui permet, lors du procédé de fabrication du pneumatique, d'utiliser une contrainte de conformation adaptée ne risquant pas de détériorer l'ébauche.

Dans un mode de réalisation, la force maximale de la première structure de premiers éléments filaires selon la première direction générale, est supérieure à (PO x (L/2$\pi$ + H) x I) / 2 avec I étant la largeur de la première structure de premiers éléments filaires exprimée en m et P0=100000. La force maximale est la force nécessairement pour obtenir l'allongement à la force maximale tel que défini dans la norme NF EN ISO 13934-1 de juillet 2013. Ainsi, à contrainte imposée, on évite de rompre la première structure de premiers éléments filaires lors de la conformation.

Avantageusement, P0=80000, de préférence P0=60000, plus préférentiellement P0=40000. Plus P0 est petit, plus il est possible d'utiliser des contraintes petites lors du procédé de fabrication du pneumatique et moins on risque de détériorer l'ébauche lors de ce procédé.

Dans un mode de réalisation préféré, chaque élément filaire porteur est textile. Par textile, on entend que chaque élément filaire porteur est non métallique, et est par exemple réalisé dans un matériau choisi parmi un polyester, un polyamide, une polycétone, un alcool polyvinylique, une cellulose, une fibre minérale, une fibre naturelle, un matériau élastomérique ou un mélange de ces matériaux. Parmi les polyesters on citera par exemple les PET (polyéthylène téréphthalate), PEN (polyéthylène naphthalate), PBT (polybutylène téréphthalate), PBN (polybutylène naphthalate), PPT (polypropylène téréphthalate), PPN (polypropylène naphthalate). Parmi les polyamides, on citera les polyamides aliphatiques tels que les polyamides 4-6, 6, 6-6 (nylon), 11 ou 12 et les polyamides aromatiques tels que l'aramide.

Par exemple, chaque élément filaire porteur est un assemblage textile comprenant une ou plusieurs fibres mono-filamentaire ou multi-filamentaires textiles, retordues ensemble ou non. Ainsi, dans un mode de réalisation, on pourra avoir un assemblage dans lequel les fibres sont sensiblement parallèles les unes aux autres. Dans un autre mode de réalisation, on pourra avoir également un assemblage dans lequel les fibres sont enroulées en hélice. Dans encore un autre mode de réalisation, chaque élément filaire porteur est constitué d'un monofilament. Chaque fibre mono-filamentaire ou multi-filamentaire présente un diamètre compris entre 5 et 20 $\mu$m, par exemple 10 $\mu$m.

Dans un autre mode de réalisation, chaque élément filaire porteur est métallique, par exemple un assemblage de monofilaments métalliques, chaque monofilament métallique présentant un diamètre typiquement inférieur à 50 μm, par exemple 10 μm. Dans un mode de réalisation, chaque élément filaire porteur est constitué d'un assemblage de plusieurs monofilaments métalliques. Dans un autre mode de réalisation, chaque élément filaire porteur est constitué d'un monofilament métallique.

Dans un mode de réalisation, chaque élément filaire porteur s'étend alternativement de la première structure de premiers éléments filaires vers la deuxième structure de deuxièmes éléments filaires et de la deuxième structure de deuxièmes éléments filaires vers la première structure de premiers éléments filaires lorsqu'on se déplace le long de l'élément filaire porteur.

**Première structure de premiers éléments filaires de l'assemblage selon l'invention**

Dans un mode de réalisation préféré, la première structure de premiers éléments filaires est un premier tissu, le premier tissu comprenant des premiers éléments filaires, dits de chaine, sensiblement parallèles entre eux et s'étendant selon une première direction, dite de chaine, sensiblement parallèle à la première direction générale.

La première direction de chaine étant sensiblement parallèle à la première direction générale et le premier tissu étant suffisamment déformable, le procédé de fabrication du pneumatique est largement facilité. En effet, le premier tissu peut être déformé sans rompre de façon à s'allonger suffisamment pour suivre la conformation qui lui est imposée lors de la fabrication du pneumatique. Cette déformabilité du premier tissu permet de poser le premier tissu en l'enroulant simplement autour du cylindre de confection contrairement à d'autres modes de réalisation dans lesquels d'autres solutions, beaucoup plus complexes industriellement, doivent être utilisées pour permettre au premier tissu de suivre la conformation imposée lors de la fabrication du pneumatique, notamment en fabricant un premier tissu dans lequel la première direction de chaine forme un angle avec la première direction générale.

Dans un mode de réalisation, le premier tissu comprend des premiers éléments filaires, dits de trame, sensiblement parallèles entre eux et s'étendant selon une première direction, dite de trame, et s'entrecroisant avec les premiers éléments filaires de chaine. Dans ce mode de réalisation préférentiel, le premier tissu comprend, de manière connue pour l'homme du métier, une armure caractérisant l'entrecroisement des premiers éléments filaires de chaine et de trame. Selon les modes de réalisation, cette armure est de type toile, serge ou satin.

De façon préférée, afin de conférer des bonnes propriétés mécaniques dans une utilisation en pneumatique, l'armure est de type toile.

Avantageusement, les premières directions de chaine et de trame forment l'une avec l'autre un angle allant de 70° à 90°, de préférence sensiblement égal à 90°.

Les caractéristiques mécaniques de tels tissus telles que leur rigidité en extension et leur force à force maximale en traction, selon le sens des éléments filaires de chaine ou de trame, dépendent des caractéristiques des éléments filaires, telles que, pour des éléments filaires textiles, le titre, exprimé en tex ou g/1000 m, la ténacité, exprimée en cN/tex, et la contraction standard, exprimée en %, ces éléments filaires étant répartis selon une densité donnée, exprimée en nombre de fils/dm. Toutes ces caractéristiques sont fonction du matériau constitutif des éléments filaires et de leur procédé de fabrication.

Dans un mode de réalisation, chaque élément filaire porteur comprend une première portion filaire d'ancrage de chaque élément filaire porteur dans la première structure de premiers éléments filaires prolongeant la portion filaire porteuse dans la première structure de premiers éléments filaires.

Préférentiellement, chaque première portion filaire d'ancrage est entrelacée avec la première structure de premiers éléments filaires. Un tel assemblage présente l'avantage de pouvoir être fabriqué en une seule étape. Toutefois, il est également possible d'envisager de fabriquer l'assemblage en deux étapes, une première étape de fabrication de la première structure de premiers éléments filaires et une deuxième étape d'entrelacement du ou des éléments filaires porteurs avec la première structure de premiers éléments filaires. Dans les deux cas, l'entrelacement de chaque élément porteur avec la première structure de premiers éléments filaires permet d'assurer l'ancrage mécanique de chaque élément porteur dans la première structure de premiers éléments filaires et ainsi de conférer les propriétés mécaniques souhaitées à la structure porteuse.

Dans un mode de réalisation, afin d'assurer l'ancrage mécanique de la portion filaire d'ancrage, chaque première portion filaire d'ancrage est enroulée au moins en partie autour d'au moins un premier élément filaire de la première structure de premiers éléments filaires.

Avantageusement, la première structure de premiers éléments filaires est un premier tissu, le premier tissu comprenant :

-   des premiers éléments filaires, dits de chaine, sensiblement parallèles entre eux et s'étendant selon une première direction, dite de chaine, sensiblement parallèle à la première direction générale, et
-   des premiers éléments filaires, dits de trame, sensiblement parallèles entre eux et s'étendant selon une première direction, dite de trame, et s'entrecroisant avec les premiers éléments filaires de chaine, chaque première portion filaire d'ancrage est enroulée au moins en partie autour d'au moins un premier élément filaire de trame du premier tissu, de préférence autour d'au moins deux premiers éléments filaire de trame adjacents selon la première direction générale.

Dans un mode de réalisation, chaque première portion filaire d'ancrage s'étend selon une direction sensiblement parallèle à la première direction générale.

De préférence, chaque première portion filaire d'ancrage passe alternativement d'une face du premier tissu à l'autre face du premier tissu entre deux premiers éléments filaires de trame adjacents autour desquels la première portion filaire d'ancrage s'enroule.

Très avantageusement, les premiers éléments filaires de chaine s'étendent continûment sur toute la longueur du premier tissu. Ainsi, les éléments filaires de chaine ne présentent aucune discontinuité sur leur longueur, à l'exception des éventuels raccords entre deux extrémités de deux éléments filaires qui forment un élément filaire de chaine néanmoins continu.

Dans un mode de réalisation préféré permettant d'assurer efficacement la conformation de la première structure de premiers éléments filaires, la première structure de premiers éléments filaires comprend :

- au moins une zone droite transversale d'un premier groupe de zone(s) droite(s) transversale(s), chaque zone droite transversale du premier groupe de zone(s) droite(s) transversale(s) étant agencée de façon à permettre un allongement sans rupture de chaque zone droite transversale du premier groupe de zone(s) droite(s) transversale(s) selon la première direction générale,
- au moins une zone droite transversale d'un deuxième groupe de zone(s) droite(s) transversale(s), chaque zone droite transversale du deuxième groupe de zone(s) droite(s) transversale(s) étant agencée de façon à empêcher une rupture de chaque zone droite transversale du deuxième groupe de zone(s) droite(s) transversale(s).

chaque zone droite transversale de chaque premier et deuxième groupe de zone(s) droite(s) transversale(s) s'étendant sur toute la largeur de la première structure de premiers éléments filaires.

De préférence, chaque zone droite transversale du premier groupe de zone(s) droite(s) transversale(s) étant agencée de façon à, pour toute contrainte non nulle inférieure ou égale à $(PO \times (L/2\pi + H) \times I) / 2$, I étant exprimée en m et P0=100000, exercée sur la première structure de premiers éléments filaires selon la première direction général, et pour tout allongement de la première structure de premiers éléments filaires selon la première direction générale inférieur ou égal à $(2\pi \times H) / L$, permettre un allongement sans rupture de chaque zone droite transversale du premier groupe de zone(s) droite(s) transversale(s) selon la première direction générale.

De préférence, chaque zone droite transversale du deuxième groupe de zone(s) droite(s) transversale(s) étant agencée de façon à, pour toute contrainte non nulle inférieure ou égale à $(PO \times (L/2\pi + H) \times I) / 2$, I étant exprimée en m et P0=100000, exercée sur la première structure de premiers éléments filaires selon la première direction générale, et pour tout allongement de la première structure de premiers éléments filaires selon la première direction générale inférieur ou égal à $(2\pi \times H) / L$, empêcher une rupture de chaque zone droite transversale du deuxième groupe de zone(s) droite(s) transversale(s).

Dans un mode de réalisation permettant d'obtenir des zones droites transversales du deuxième groupe de zone(s) droite(s) transversale(s) indéformables, chaque zone droite transversale du deuxième groupe de zone(s) droite(s) transversale(s) est agencée de façon à empêcher un allongement de chaque zone droite transversale du deuxième groupe de zone(s) droite(s) transversale(s) selon la première direction générale.

De préférence, chaque zone droite transversale du deuxième groupe de zone(s) droite(s) transversale(s) étant agencée de façon à, pour toute contrainte non nulle inférieure ou égale à $(PO \times (L/2\pi + H) \times I) / 2$, I étant exprimée en m et P0=100000, exercée sur la première structure de premiers éléments filaires selon la première direction générale, et pour tout allongement de la première structure de premiers éléments filaires selon la première direction générale inférieur ou égal à $(2\pi \times H) / L$, empêcher un allongement de chaque zone droite transversale du deuxième groupe de zone(s) droite(s) transversale(s) selon la première direction générale.

Dans un autre mode de réalisation permettant d'obtenir des zones droites transversales du deuxième groupe de zone(s) droite(s) transversale(s) déformables, chaque zone droite transversale du deuxième groupe de zone(s) droite(s) transversale(s) est agencée de façon à permettre un allongement de chaque zone droite transversale du deuxième groupe de zone(s) droite(s) transversale(s) selon la première direction générale, cet allongement étant avantageusement au plus égal à 20%, de préférence à 15%, et plus préférentiellement à 10% de l'allongement de chaque zone droite transversale du premier groupe de zone(s) droite(s) transversale(s) selon la première direction générale.

De préférence, chaque zone droite transversale du deuxième groupe de zone(s) droite(s) transversale(s) étant agencée de façon à, pour toute contrainte non nulle inférieure ou égale à $(PO \times (L/2\pi + H) \times I) / 2$, I étant exprimée en m et P0=100000, exercée sur la première structure de premiers éléments filaires selon la première direction générale, et pour tout allongement de la première structure de premiers éléments filaires selon la première direction générale inférieur ou égal à $(2\pi \times H) / L$, permettre un allongement de chaque zone droite transversale du deuxième groupe de zone(s) droite(s) transversale(s) selon la première direction générale, cet allongement étant avantageusement au plus égal à 20%, de préférence à 15%, et plus préférentiellement à 10%

de l'allongement de chaque zone droite transversale du premier groupe de zone(s) droite(s) transversale(s) selon la première direction générale.

Par définition, une zone droite transversale est délimitée longitudinalement par deux droites imaginaires sensiblement perpendiculaires à la première direction générale de la structure d'éléments filaires. Une zone droite transversale s'étend sur toute la largeur de la structure d'éléments filaires, c'est-à-dire que la zone droite transversale est délimitée transversalement par les bords longitudinaux de la structure d'éléments filaires.

Dans un mode de réalisation préféré, la première structure de premiers éléments filaires est un premier tissu, le premier tissu comprenant des premiers éléments filaires, dits de chaine, sensiblement parallèles entre eux et s'étendant selon une première direction, dite de chaine, sensiblement parallèle à la première direction générale.

Dans un mode de réalisation préféré, chaque zone droite transversale du premier groupe de zone(s) droite(s) transversale(s) est agencée de façon à permettre un allongement sans rupture de chaque premier élément filaire de chaine selon la première direction générale dans chaque zone droite transversale du premier groupe de zone(s) droite(s) transversale(s).

De préférence, chaque zone droite transversale du premier groupe de zone(s) droite(s) transversale(s) est agencée de façon à, pour toute contrainte non nulle inférieure ou égale à (PO x (L/2$\pi$ + H) x l) / 2, l étant exprimée en m et P0=100000, exercée sur le premier tissu selon la première direction générale, et pour tout allongement du premier tissu selon la première direction générale inférieur ou égal à (2$\pi$ x H) / L, permettre un allongement sans rupture de chaque premier élément filaire de chaine selon la première direction générale dans chaque zone droite transversale du premier groupe de zone(s) droite(s) transversale(s).

Optionnellement, le premier tissu comprenant des premiers éléments filaires, dits de trame, sensiblement parallèles entre eux et s'entrecroisant avec les premiers éléments filaires de chaine, chaque zone droite transversale du premier groupe de zone(s) droite(s) transversale(s) est agencée de façon à permettre un écartement des éléments filaire de trame les uns par rapport aux autres selon la première direction générale dans chaque zone droite transversale du premier groupe de zone(s) droite(s) transversale(s).

De préférence, chaque zone droite transversale du premier groupe de zone(s) droite(s) transversale(s) est agencée de façon à, pour toute contrainte non nulle inférieure ou égale à (PO x (L/2$\pi$ + H) x l) / 2, l étant exprimée en m et P0=100000, exercée sur le premier tissu selon la première direction générale, et pour tout allongement du premier tissu selon la première direction générale inférieur ou égal à (2$\pi$ x H) / L, permettre un écartement des éléments filaire de trame les uns par rapport aux autres selon la première direction générale dans chaque zone droite transversale du premier groupe de zone(s) droite(s) transversale(s).

Dans un mode de réalisation préféré, chaque zone droite transversale du deuxième groupe de zone(s) droite(s) transversale(s) est agencée de façon à empêcher une rupture de chaque premier élément filaire de chaine dans chaque zone droite transversale du deuxième groupe de zone(s) droite(s) transversale(s).

De préférence, chaque zone droite transversale du deuxième groupe de zone(s) droite(s) transversale(s) est agencée de façon à, pour toute contrainte non nulle inférieure ou égale à (P0 x (L/2$\pi$ + H) x l) / 2, l étant exprimée en m et P0=100000, exercée sur le premier tissu selon la première direction générale, et pour tout allongement du premier tissu selon la première direction générale inférieur ou égal à (2$\pi$ x H) / L, empêcher une rupture de chaque premier élément filaire de chaine dans chaque zone droite transversale du deuxième groupe de zone(s) droite(s) transversale(s).

Dans un mode de réalisation permettant d'obtenir des zones droites transversales du deuxième groupe de zone(s) droite(s) transversale(s) indéformables, chaque zone droite transversale du deuxième groupe de zone(s) droite(s) transversale(s) est agencée de façon à empêcher un allongement de chaque premier élément filaire de chaine selon la première direction générale dans chaque zone droite transversale du deuxième groupe de zone(s) droite(s) transversale(s).

De préférence, chaque zone droite transversale du deuxième groupe de zone(s) droite(s) transversale(s) est agencée de façon à, pour toute contrainte non nulle inférieure ou égale à (PO x (L/2$\pi$ + H) x l) / 2, l étant exprimée en m et P0=100000, exercée sur le premier tissu selon la première direction générale, et pour tout allongement du premier tissu selon la première direction générale inférieur ou égal à (2$\pi$ x H) / L, empêcher un allongement de chaque premier élément filaire de chaine selon la première direction générale dans chaque zone droite transversale du deuxième groupe de zone(s) droite(s) transversale(s).

Dans un autre mode de réalisation permettant d'obtenir des zones droites transversales du deuxième groupe de zone(s) droite(s) transversale(s) déformables, chaque zone droite transversale du deuxième groupe de zone(s) droite(s) transversale(s) est agencée de façon à permettre un allongement de chaque premier élément filaire de chaine selon la première direction générale dans chaque zone droite transversale du deuxième groupe de zone(s) droite(s) transversale(s), cet allongement étant avantageusement au plus égal à 20%, de préférence à 15%, et plus préférentiellement à 10% de l'allongement de chaque premier élément filaire de chaine selon la première direction générale dans chaque zone droite transversale du premier groupe de zone(s) droite(s) transversale(s).

De préférence, chaque zone droite transversale du deuxième groupe de zone(s) droite(s) transversale(s) est agencée de façon à, pour toute contrainte non nulle inférieure ou égale à (PO x (L/2$\pi$ + H) x l) / 2, l étant exprimée en m et P0=100000, exercée sur le premier tissu selon la première direction générale, et pour tout allongement du premier tissu selon la première direction générale inférieur ou égal à ($2\pi$ x H) / L, permettre un allongement de chaque premier élément filaire de chaine selon la première direction générale dans chaque zone droite transversale du deuxième groupe de zone(s) droite(s) transversale(s), cet allongement étant avantageusement au plus égal à 20%, de préférence à 15%, et plus préférentiellement à 10% de l'allongement de chaque premier élément filaire de chaine selon la première direction générale dans chaque zone droite transversale du premier groupe de zone(s) droite(s) transversale(s).

Optionnellement, dans le mode de réalisation utilisant des zones droites transversales du deuxième groupe de zone(s) droite(s) transversale(s) indéformables, chaque zone droite transversale du deuxième groupe de zone(s) droite(s) transversale(s) est agencée de façon à empêcher un écartement des premiers éléments filaire de trame les uns par rapport aux autres selon la première direction générale dans chaque zone droite transversale du deuxième groupe de zone(s) droite(s) transversale(s).

De préférence, chaque zone droite transversale du deuxième groupe de zone(s) droite(s) transversale(s) est agencée de façon à, pour toute contrainte non nulle inférieure ou égale à (PO x (L/$2\pi$ + H) x l) / 2, l étant exprimée en m et P0=100000, exercée sur le premier tissu selon la première direction générale, et pour tout allongement du premier tissu selon la première direction générale inférieur ou égal à ($2\pi$ x H) / L, empêcher un écartement des premiers éléments filaire de trame les uns par rapport aux autres selon la première direction générale dans chaque zone droite transversale du deuxième groupe de zone(s) droite(s) transversale(s).

Optionnellement, dans le mode de réalisation utilisant des zones droites transversales du deuxième groupe de zone(s) droite(s) transversale(s) déformables, chaque zone droite transversale du deuxième groupe de zone(s) droite(s) transversale(s) est agencée de façon à permettre un écartement des premiers éléments filaire de trame les uns par rapport aux autres selon la première direction générale dans chaque zone droite transversale du deuxième groupe de zone(s) droite(s) transversale(s).

De préférence, chaque zone droite transversale du deuxième groupe de zone(s) droite(s) transversale(s) est agencée de façon à, pour toute contrainte non nulle inférieure ou égale à (PO x (L/$2\pi$ + H) x l) / 2, l étant exprimée en m et P0=100000, exercée sur le premier tissu selon la première direction générale, et pour tout allongement du premier tissu selon la première direction générale inférieur ou égal à ($2\pi$ x H) / L, permettre un écartement des premiers éléments filaire de trame les uns par rapport aux autres selon la première direction générale dans chaque zone droite transversale du deuxième groupe de zone(s) droite(s) transversale(s).

Dans les modes de réalisation préférés décrits ci-dessus, chaque zone droite transversale du premier groupe est une zone dite déformable. De telles zones sont déformables dans les conditions de conformation et participent à la conformabilité de la première structure de premiers éléments filaires. Chaque zone droite transversale du deuxième groupe est une zone dite non rompable. Optionnellement, dans un mode de réalisation, chaque zone droite transversale du deuxième groupe est indéformable. Dans un autre mode de réalisation, chaque zone droite transversale du deuxième groupe est déformable mais dans une bien moindre mesure que chaque zone droite transversale du premier groupe. De telles zones sont non rompables dans les conditions de conformation et ne participent pas ou peu à la conformabilité de la première structure de premiers éléments filaires. Ainsi, chaque zone droite transversale dite déformable du premier groupe se déforme suffisamment pour permettre la conformation de l'assemblage et compense le non allongement ou le faible allongement des zones droites transversales non rompables du deuxième groupe. L'allongement à force maximale de l'ensemble des zones droites transversales du premier groupe sera d'autant plus grand que les zones droites transversales dites déformables du premier groupe sont courtes et peu nombreuses par rapport aux zones droites transversales non rompables du deuxième groupe. Dans le mode de réalisation utilisant un premier tissu en tant que première structure de premiers éléments filaires, à l'échelle des éléments filaires de chaine, les portions de chaque premier élément filaire de chaine situées dans chaque zone droite transversale dite déformable du premier groupe se déforment suffisamment pour permettre la conformation de l'assemblage et compense le non allongement ou le faible allongement des portions de chaque premier élément filaire de chaine situées dans les zones droites transversales non rompables du deuxième groupe.

Aussi, chaque zone dite déformable du premier groupe est déformable sous une contrainte relativement faible ce qui permet, lors du procédé de fabrication du pneumatique, d'utiliser une contrainte de conformation adaptée ne risquant pas de détériorer l'ébauche au contraire de chaque zone non rompable du deuxième groupe.

Ainsi, dans un mode de réalisation préféré, toutes les zones droites transversales du premier groupe de zone(s) droite(s) transversale(s) étant identiques, l'allongement à force maximale Art1 de chaque zone droites transversales du premier groupe de zone(s) droite(s) transversale(s) selon la première direction générale vérifie Art1 > ($2\pi$ x H) / SLd1 avec SLd1 étant la somme des longueurs au repos Ld1 de toutes les zones droites transversales du premier groupe de zone(s) droite(s) transversale(s). L'allongement à la force maximale est mesuré conformément à la norme NF EN ISO 13934-1 de juillet 2013 sur des échantillons de zones droites transversales du premier groupe de zone(s) droite(s) transversale(s).

Ainsi, avantageusement, dans le mode de réalisation précédent, l'allongement à rupture Arc de chaque premier élément filaire de chaine vérifie Arc > ($2\pi$ x H) / SLd1. L'allongement à rupture Arc est mesuré selon la norme ASTM D885/D885 MA de janvier 2010.

De préférence, pour tout allongement de chaque zone droite transversale du premier groupe de zone(s) droite(s) transversale(s) selon la première direction générale inférieur ou égal à ($2\pi$ x H) / SLd1, la première structure de premiers éléments filaires développe une force, exprimée en N, selon la première direction générale inférieure ou égale à (PO x (L/$2\pi$ + H) x l) / 2 avec l étant la largeur de la première structure de premiers éléments filaires exprimée en m, P0=100000 et SLd1 étant la somme des longueurs au repos de toutes les zones droites transversales du premier groupe de zone(s) droite(s) transversales exprimée en m. L'allongement, la contrainte exercée et la force développée sont déterminés conformément à la norme NF EN ISO 13934-1 de juillet 2013.

Dans un mode de réalisation préféré, chaque élément filaire porteur comprenant une première portion filaire d'ancrage de chaque élément filaire porteur dans la première structure de premiers éléments filaires prolongeant la portion filaire porteuse dans la première structure de premiers éléments filaires :

- chaque zone droite transversale du premier groupe de zone(s) droite(s) transversale(s) est dépourvue de toute première portion filaire d'ancrage sur toute la largeur de la première structure de premiers éléments filaires,
- chaque zone droite transversale du deuxième groupe de zone(s) droite(s) transversale(s) comprend au moins une première portion filaire d'ancrage sur la largeur de la première structure de premiers éléments filaires.

De préférence, chaque zone droite transversale du deuxième groupe de zone(s) droite(s) transversale(s) est agencée de façon à empêcher une rupture de chaque première portion filaire d'ancrage.

De préférence, chaque zone droite transversale du deuxième groupe de zone(s) droite(s) transversale(s) est agencée de façon à, pour toute contrainte non nulle inférieure ou égale à (PO x (L/$2\pi$ + H) x l) / 2, l étant exprimée en m et P0=100000, exercée sur la première structure de premiers éléments filaires selon la première direction générale, et pour tout allongement de la première structure de premiers éléments filaires selon la première direction générale inférieur à ou égal à ($2\pi$ x H) / L, empêcher une rupture de chaque première portion filaire d'ancrage.

Ainsi, chaque zone droite comprenant au moins une première portion filaire d'ancrage est non rompable et ce, même sous une contrainte relativement élevée ce qui permet, lors du procédé de fabrication du pneumatique, d'utiliser une contrainte de conformation adaptée ne risquant pas de détériorer l'ébauche.

Dans un mode de réalisation, chaque zone droite transversale du deuxième groupe de zone(s) droite(s) transversale(s) est agencée de façon à empêcher un allongement de chaque première portion filaire d'ancrage selon la première direction générale.

De préférence, chaque zone droite transversale du deuxième groupe de zone(s) droite(s) transversale(s) est agencée de façon à, pour toute contrainte non nulle inférieure ou égale à (PO x (L/$2\pi$ + H) x l) / 2, l étant exprimée en m et P0=100000, exercée sur la première structure de premiers éléments filaires selon la première direction générale, et pour tout allongement de la première structure de premiers éléments filaires selon la première direction générale inférieur à ou égal à ($2\pi$ x H) / L, empêcher un allongement de chaque première portion filaire d'ancrage selon la première direction générale.

Dans un autre mode de réalisation, chaque zone droite transversale du deuxième groupe de zone(s) droite(s) transversale(s) est agencée de façon à permettre un allongement de chaque première portion filaire d'ancrage selon la première direction générale.

De préférence, chaque zone droite transversale du deuxième groupe de zone(s) droite(s) transversale(s) est agencée de façon à, pour toute contrainte non nulle inférieure ou égale à (PO x (L/$2\pi$ + H) x l) / 2, l étant exprimée en m et P0=100000, exercée sur la première structure de premiers éléments filaires selon la première direction générale, et pour tout allongement de la première structure de premiers éléments filaires selon la première direction générale inférieur à ou égal à ($2\pi$ x H) / L, permettre un allongement de chaque première portion filaire d'ancrage selon la première direction générale.

Avantageusement, P0=80000, de préférence P0=60000, plus préférentiellement P0=40000. Plus P0 est petit, plus il est possible d'utiliser des contraintes petites lors du procédé de fabrication du pneumatique et moins on risque de détériorer l'ébauche lors de ce procédé.

De façon préférée, chaque zone droite transversale du premier groupe de zone(s) droite(s) transversale(s) alterne, selon la première direction générale, avec une zone droite transversale du deuxième groupe de zone(s) droite(s) transversale(s).

Ainsi, à l'échelle de la première structure de premiers éléments filaires, on obtient une déformation homogène de l'ensemble de la première structure de premiers éléments filaires, cette déformation étant d'autant plus homogène que la longueur au repos de chaque zone droite transversale selon la première direction générale est petite. Par longueur au repos d'une zone droite transversale selon la première direction générale, on entend la longueur de la zone selon la direction longitudinale en l'absence de toute contrainte extérieure exercée sur la zone (autre que la pression atmosphérique). Une zone droite transversale au repos selon la première direction générale n'est ni en extension ni en compression selon cette direction et présente donc un allongement nul selon cette direction.

Optionnellement, chaque premier élément filaire de chaine comprend au moins un brin multifilamentaire comprenant plusieurs monofilaments chacun constitué d'un matériau choisi parmi un polyester, un polyamide, une polycétone, un polyuréthane, une fibre naturelle, une fibre minérale, de préférence choisi parmi un polyester, un polyamide, une polycétone, un polyuréthane et un assemblage de ces matériaux.

De préférence, chaque premier élément filaire de chaine comprend un unique brin multifilamentaire.

## Deuxième structure de deuxièmes éléments filaires de l'assemblage selon l'invention

Avantageusement, la deuxième structure de deuxièmes éléments filaires s'étendant selon une deuxième direction générale, la deuxième direction générale est sensiblement parallèle à la première direction principale.

Dans un mode de réalisation préféré, la deuxième structure de deuxièmes éléments filaires est un deuxième tissu ou tricot.

Dans un mode de réalisation, la deuxième structure de deuxièmes éléments filaires est un tissu comprenant :

- des deuxièmes éléments filaires, dits de chaine, sensiblement parallèles entre eux et s'étendant selon une deuxième direction, dite de chaine, et
- des deuxièmes éléments filaires, dits de trame, sensiblement parallèles entre eux et s'étendant selon une deuxième direction, dite de trame et s'entrecroisant avec les deuxièmes éléments filaires de chaine.

Dans ce mode de réalisation préférentiel, le deuxième tissu comprend, de manière connue pour l'homme du métier, une armure caractérisant l'entrecroisement des deuxièmes éléments filaires de chaine et de trame. Selon les modes de réalisation, cette armure est de type toile, serge ou satin. De façon préférée, afin de conférer des bonnes propriétés mécaniques dans une utilisation en pneumatique, l'armure est de type toile.

Avantageusement, les deuxièmes directions de chaine et de trame forment l'une avec l'autre un angle allant de 70° à 90°, de préférence sensiblement égal à 90°.

Avantageusement, le deuxième tissu s'étendant selon une deuxième direction générale, la deuxième direction de chaine des deuxièmes éléments filaires étant sensiblement parallèle à la deuxième direction générale. Un tel deuxième tissu permet un procédé de fabrication de l'assemblage et du pneumatique largement facilité.

Dans un autre mode de réalisation, le deuxième tissu ou tricot est un tricot comprenant des boucles entrelacées.

Dans un mode de réalisation, chaque élément filaire porteur comprend une deuxième portion filaire d'ancrage de chaque élément filaire porteur dans la deuxième structure de deuxièmes éléments filaires prolongeant la portion filaire porteuse dans la deuxième structure de deuxièmes éléments filaires.

Préférentiellement, chaque deuxième portion filaire d'ancrage est entrelacée avec la deuxième structure de deuxièmes éléments filaires. Un tel assemblage présente l'avantage de pouvoir être fabriqué en une seule étape. Toutefois, il est également possible d'envisager de fabriquer l'assemblage en deux étapes, une première étape de fabrication de la deuxième structure de deuxièmes éléments filaires et une deuxième étape d'entrelacement du ou des éléments filaires porteurs avec la deuxième structure de deuxièmes éléments filaires. Dans les deux cas, l'entrelacement de chaque élément porteur avec la deuxième structure de deuxièmes éléments filaires permet d'assurer l'ancrage mécanique de chaque élément porteur dans la deuxième structure de deuxièmes éléments filaires et ainsi de conférer les propriétés mécaniques souhaitées à la structure porteuse.

Dans un mode de réalisation, afin d'assurer l'ancrage mécanique de la portion filaire d'ancrage, chaque deuxième portion filaire d'ancrage est enroulée au moins en partie autour d'au moins un deuxième élément filaire de la deuxième structure de deuxièmes éléments filaires.

Avantageusement, la deuxième structure de deuxièmes éléments filaires est un tissu comprenant :

- des deuxièmes éléments filaires, dits de chaine, sensiblement parallèles entre eux et s'étendant selon une deuxième direction, dite de chaine, et
- des deuxièmes éléments filaires, dits de trame, sensiblement parallèles entre eux et s'étendant selon une deuxième direction, dite de trame et s'entrecroisant avec les deuxièmes éléments filaires de chaine,

chaque deuxième portion filaire d'ancrage est enroulée au moins en partie autour d'au moins un deuxième élément filaire de trame du deuxième tissu, de préférence autour d'au moins deux deuxièmes éléments filaire de trame adjacents selon la deuxième direction générale.

Dans un mode de réalisation, chaque deuxième portion filaire d'ancrage s'étend selon une direction sensiblement parallèle à la deuxième direction générale.

De préférence, chaque deuxième portion filaire d'ancrage passe alternativement d'une face du deuxième tissu à l'autre face du deuxième tissu entre deux deuxièmes éléments filaires de trame adjacents autour desquels la deuxième portion filaire d'ancrage s'enroule.

Très avantageusement, les deuxièmes éléments filaires de chaine s'étendent continûment sur toute la longueur du deuxième tissu.

## Assemblage imprégné selon l'invention.

Un autre objet de l'invention est un assemblage imprégné, de préférence pour pneumatique, comprenant :

- des première et deuxième couches respectivement de première et deuxième compositions polymériques;
- un assemblage tel que défini ci-dessus dans lequel :
    - la première structure de premiers éléments filaires est imprégnée au moins en partie de la première composition polymérique;
    - la deuxième structure de deuxièmes éléments filaires est imprégnée au moins en partie de la deuxième composition polymérique.

Chaque première et deuxième structure d'éléments filaires de l'assemblage est imprégnée par la composition polymérique correspondante. Ainsi, on peut envisager plusieurs modes de réalisation. Dans un mode de réalisation préféré, chaque structure d'éléments filaires comprend un tissu imprégné par la composition polymérique correspondante. Dans encore un autre mode de réalisation, la première structure de premiers éléments filaires comprend un tissu imprégné par la première composition polymérique et la deuxième structure de deuxièmes éléments filaires comprend un tricot imprégné par la deuxième composition.

Par imprégnée, on entend que chaque composition polymérique pénètre au moins en surface la structure d'éléments filaires. On peut donc avoir une imprégnation unifaciale avec une couverture d'une face de la structure d'éléments filaires par la composition polymérique ou une imprégnation bifaciale avec une couverture des deux faces de la structure d'éléments filaires par la composition polymérique. Dans les deux cas, l'imprégnation permet de créer un ancrage mécanique grâce à la pénétration de la composition polymérique dans les interstices présents dans de la structure d'éléments filaires.

Dans un mode de réalisation, chaque composition polymérique comprend au moins un élastomère, de préférence un élastomère diénique. Par élastomère ou caoutchouc (les deux termes étant synonymes) du type diénique, on entend de manière générale un élastomère issu au moins en partie (i.e. un homopolymère ou un copolymère) de monomères diènes (monomères porteurs de deux doubles liaisons carbone-carbone, conjuguées ou non). Cette composition peut alors se trouver soit à l'état crue ou à l'état cuit.

De manière particulièrement préférentielle, l'élastomère diénique de la composition de caoutchouc est choisi dans le groupe constitué par les polybutadiènes (BR), les polyisoprènes de synthèse (IR), le caoutchouc naturel (NR), les copolymères de butadiène, les copolymères d'isoprène et les mélanges de ces élastomères. De tels copolymères sont plus préférentiellement choisis dans le groupe constitué par les copolymères de butadiène-styrène (SBR), les copolymères d'isoprène-butadiène (BIR), les copolymères d'isoprène-styrène (SIR), les copolymères d'isoprène-butadiène-styrène (SBIR) et les mélanges de tels copolymères.

Chaque composition polymérique peut contenir un seul élastomère diénique ou un mélange de plusieurs élastomères diéniques, le ou les élastomères diéniques pouvant être utilisés en association avec tout type d'élastomère synthétique autre que diénique, voire avec des polymères autres que des élastomères, par exemple des polymères thermoplastiques.

Par ailleurs, dans ce mode de réalisation, chaque composition polymérique comprend, en plus de l'élastomère, de préférence diénique, une charge renforçante, par exemple du noir de carbone, un système de réticulation, par exemple un système de vulcanisation et des additifs divers.

Dans un autre mode de réalisation, chaque composition polymérique comprend au moins un polymère thermoplastique. Un polymère thermoplastique est par définition thermofusible. Des exemples de tels polymères thermoplastiques sont les polyamides aliphatiques, par exemple le nylon, les polyesters, par exemple le PET ou le PEN, et les élastomères thermoplastiques.

Les élastomères thermoplastiques (en abrégé "TPE") sont des élastomères se présentant sous la forme de copolymères blocs à base de blocs thermoplastiques. De structure intermédiaire entre polymères thermoplastiques et élastomères, ils sont constitués de manière connue de séquences rigides thermoplastiques, notamment polystyrène reliées par des séquences souples élastomère, par exemple polybutadiène ou polyisoprène pour des TPE insaturés ou poly(éthylène/butylène) pour des TPE saturés. C'est la raison pour laquelle, de manière connue, les copolymères blocs TPE ci-dessus se caractérisent généralement par la présence de deux pics de transition vitreuse, le premier pic (température la plus basse, généralement négative) étant relatif à la séquence élastomère du copolymère TPE, le second pic (température la plus haute, positive, typiquement supérieure à 80°C pour des élastomères préférentiels du type TPS) étant relatif à la partie thermoplastique (par exemple blocs styrène) du copolymère TPE. Ces élastomères TPE sont souvent des élastomères triblocs avec deux segments rigides reliés par un segment souple. Les segments rigides et souples peuvent être disposés linéairement, en étoile ou branchés. Ces élastomères TPE peuvent être aussi des élastomères diblocs avec un seul segment rigide relié à un segment souple. Typiquement, chacun de ces segments ou blocs contient au minimum plus de 5, généralement plus de 10 unités de base (par exemple unités styrène et unités isoprène pour un copolymère blocs styrène/ isoprène/ styrène).

De préférence, l'élastomère thermoplastique est insaturé. Par élastomère TPE insaturé, on entend par définition et de manière bien connue un élastomère TPE qui est pourvu d'insaturations éthyléniques, c'est-à-dire qui comporte des doubles liaisons carbone-carbone (conjuguées ou non) ; réciproquement, un élastomère TPE dit saturé est bien entendu un élastomère TPE qui est dépourvu de telles doubles liaisons.

Les première et deuxième compositions polymériques peuvent être différentes ou identiques. Par exemple, la première composition polymérique peut comprendre un élastomère diénique et la deuxième composition polymérique peut comprendre un élastomère thermoplastique ou inversement.

**Pneumatique selon l'invention**

L'invention a encore pour objet un pneumatique de révolution autour d'un axe principal comprenant :

- une première structure de révolution comprenant une première structure de premiers éléments filaires,
- une deuxième structure de révolution comprenant une deuxième structure de deuxièmes éléments filaires, la deuxième structure de révolution étant agencée radialement à l'intérieur de la première structure de révolution,
- une structure porteuse comprenant des éléments filaires porteurs reliant la première structure de premiers éléments filaires et la deuxième structure de deuxièmes éléments filaires entre elles, chaque élément filaire porteur comprenant au moins une portion filaire porteuse s'étendant entre la première structure de premiers éléments filaires et la deuxième structure de deuxièmes éléments filaires,
- un espace annulaire intérieur délimité radialement par une face interne de la première structure de premiers éléments filaires et une face interne de la deuxième structure de deuxièmes éléments filaires, avec :

  ○ H0 étant la hauteur radiale moyenne de l'espace annulaire intérieur lorsque chaque portion filaire porteuse est au repos,
  ○ H étant la hauteur radiale moyenne de l'espace annulaire intérieur en l'absence de charge appliquée au pneumatique et en l'absence de pression dans le pneumatique, tel que H0 x K ≤ H avec K=0,50,

pneumatique dans lequel la première structure de premiers éléments filaires présente, au moins sur une partie de sa longueur, un allongement non nul selon la direction circonférentielle du pneumatique et est non rompu.

Conformément à l'invention et comme expliqué ci-dessus, un tel pneumatique est facile à fabriquer.

Par portion filaire porteuse au repos, on entend une portion filaire porteuse qui n'est ni en extension ni en compression et présente donc un allongement nul. La portion filaire porteuse n'est alors soumise à aucune contrainte extérieure autre que son propre poids et le poids des éléments auxquels elle est liée.

Par hauteur radiale moyenne de l'espace annulaire intérieur, on entend la moyenne de la hauteur radiale correspondante mesurée en au moins 5 points différents circonférentiellement équi-répartis autour du pneumatique et mesurée dans le plan circonférentiel médian du pneumatique défini comme le plan qui est normal à l'axe de rotation du pneumatique et qui se situe à équidistance des structures de renfort de chaque bourrelet.

La première structure de révolution radialement extérieure du pneumatique est destinée à assurer, entre autres fonctions, la liaison de l'assemblage avec une structure de révolution de sommet. La deuxième structure de révolution radialement intérieure du pneumatique est destinée à assurer, entre autres fonctions, la liaison de l'assemblage, et donc du pneumatique, avec le moyen de montage.

La première structure de révolution radialement extérieure du pneumatique présente un axe de révolution confondu avec l'axe de rotation du pneumatique. La deuxième de révolution radialement intérieure du pneumatique est coaxiale à la première structure de révolution radialement extérieure du pneumatique.

En l'absence de charge appliquée au pneumatique et en l'absence de pression dans le pneumatique, l'espace annulaire intérieur a une hauteur radiale moyenne H. Lorsque le pneumatique est soumis à une charge radiale nominale $Z_N$ et est en contact avec un sol plan par une surface de contact A, les éléments porteurs, reliés à la portion de la première structure de révolution radialement extérieure du pneumatique en contact avec le sol par l'intermédiaire de la première structure de premiers éléments filaires, sont soumis à un flambage en compression et au moins une partie des éléments porteurs, reliés à la portion de première structure de révolution radialement extérieure du pneumatique non en contact avec le sol, sont en tension.

Afin de supporter la charge appliquée, la densité surfacique moyenne DS de portions filaires porteuses par unité de surface de la première structure de révolution radialement extérieure, exprimée en 1/m2, étant au moins égale à $(S/S_E)^* Z_N /(A*Fr)$, où S est la surface, en m2, de la face radialement intérieure d'une structure de révolution de sommet, $S_E$ est la surface de liaison entre la face externe de la première structure de révolution radialement extérieure et la face radialement intérieure de la structure de révolution de sommet, en m2, $Z_N$ est la charge radiale nominale, en N, appliquée au pneumatique, A est la surface de contact au sol, en m2, du pneumatique, et Fr la force à rupture, en N, de chaque portion porteuse. La charge radiale nominale $Z_N$ est la charge recommandée pour l'utilisation du pneumatique. La surface de contact au sol A est la surface selon laquelle le pneumatique est écrasé sur le sol sous l'action de la charge radiale nominale $Z_N$.

L'expression selon laquelle DS est au moins égale à $(S/S_E)^* Z_N /(A*Fr)$ traduit, en particulier, le fait que la densité surfacique moyenne DS des portions porteuses est d'autant plus forte que la charge radiale nominale $Z_N$ élevée et/ou que le rapport de surfaces $S_E/S$, représentant le taux de recouvrement de la face radialement intérieure de la structure de révolution de sommet par la première structure de révolution radialement extérieure, est faible. La densité surfacique moyenne DS des portions porteuses est d'autant plus faible que la force à rupture en traction Fr d'une portion porteuse est élevée.

Une telle densité surfacique moyenne DS des portions porteuses permet, d'une part, aux éléments porteurs en extension en dehors de l'aire de contact de porter la charge radiale nominale $Z_N$, et, d'autre part, aux éléments porteurs en compression dans l'aire de contact de garantir une mise à plat de la bande de roulement, à la fois dans un plan circonférentiel et dans un plan méridien, améliorée par rapport aux pneumatiques connus de l'état de la technique.

Généralement, la densité surfacique des portions porteuses est constante à la fois selon la direction circonférentielle et selon la direction axiale, c'est-à-dire que la répartition des portions porteuses est uniforme à la fois circonférentiellement et axialement : la densité surfacique moyenne DS est donc égale à la densité surfacique constante. L'avantage d'une densité surfacique constante est de contribuer à conférer à la bande de roulement une géométrie quasi cylindrique, avec un effet dit de « mise en marguerite » diminué par rapport à d'autres pneumatiques de l'état de la technique.

Toutefois, dans certains modes de réalisation, la densité surfacique des portions porteuses peut être variable selon la direction circonférentielle et/ou selon la direction axiale, c'est-à-dire que la répartition des portions porteuses n'est pas nécessairement uniforme circonférentiellement et/ou axialement, d'où l'introduction de la caractéristique de densité surfacique moyenne DS de portions porteuses.

La densité surfacique DS des portions porteuses, exprimée en 1/m2, est avantageusement au moins égale à $3*(S/S_E)* Z_N /(A*Fr)$. Une densité surfacique plus élevée de portions porteuses améliore l'homogénéisation des pressions dans l'aire de contact au sol et garantit un coefficient de sécurité plus élevé vis-à-vis de la charge appliquée et vis-à-vis de l'endurance.

La densité surfacique DS des portions porteuses, exprimée en 1/m2, est encore plus avantageusement au moins égale à $6*(S/S_E)* Z_N /(A*Fr)$. Une densité surfacique encore plus élevée de portions porteuses améliore encore davantage l'homogénéisation des pressions dans l'aire de contact au sol et permet d'augmenter encore le coefficient de sécurité vis-à-vis de la charge appliquée et vis-à-vis de l'endurance.

La densité surfacique moyenne DS des portions porteuses, exprimée en 1/m2, est avantageusement au moins égale à 5000.

Dans certains modes de réalisation, la surface $S_E$ est sensiblement égale à la surface S, c'est-dire que la première structure de révolution radialement extérieure recouvre intégralement la face radialement intérieure de la structure de révolution de sommet. Dans ces conditions, la densité surfacique moyenne DS des portions porteuses minimale est égale à $Z_N /(A*Fr)$.

Dans d'autres modes de réalisation, $S_E$ est différente de S et même $S_E<S$. En effet, la première structure de révolution n'est pas obligatoirement continue (axialement et/ou circonférentiellement) et peut être constituée de portions de structure d'éléments filaires juxtaposées : dans ce cas, la surface $S_E$ est la somme des surfaces de liaison entre les faces externes de la première structure de révolution radialement extérieure et la face radialement intérieure de la structure de révolution de sommet. Ainsi, quand $S_E<S$, la première structure de révolution radialement extérieure ne recouvre pas intégralement c'est-à-dire ne recouvre que partiellement, la face radialement intérieure de la structure de révolution de sommet.

Cette conception permet avantageusement d'avoir un assemblage pouvant être fabriquée de façon indépendante et intégrée d'un seul bloc lors de la fabrication du pneumatique. L'assemblage utilisé peut être solidarisé à d'autres éléments du pneumatique par vulcanisation, collage ou tout autre procédé de liaison des première et deuxième couches des première et deuxième compositions polymériques.

La première structure de premiers éléments filaires radialement extérieure et la deuxième structure de deuxièmes éléments filaires radialement intérieure servent d'interfaces entre les éléments porteurs et les structures de révolution respectivement radialement extérieure et radialement intérieure qui ne sont donc pas en contact direct.

Grâce au pneumatique décrit, on observe une mise à plat améliorée de la bande de roulement, en particulier dans un plan méridien, par une augmentation des rayons de courbure méridiens au niveau des extrémités axiales de la bande roulement.

Il en résulte, en particulier, une homogénéisation des pressions dans l'aire de contact au sol, ce qui contribue à une augmentation de la durée de vie en usure et de l'adhérence du pneumatique.

Enfin, la résistance au roulement d'un tel pneumatique est sensiblement diminuée, ce qui est favorable à une baisse de la consommation de carburant du véhicule.

En outre, dans un mode de réalisation préféré, H0x K ≤ H <H0, ce qui signifie que, en l'absence de charge appliquée au pneumatique et en l'absence de pression dans le pneumatique, les portions filaires porteuses des éléments filaires porteurs se trouvent dans un état replié.

Avantageusement, la première structure de révolution comprend une première couche d'une première composition polymérique, la première structure de premiers éléments filaires étant imprégnée au moins en partie de la première composition polymérique et la deuxième structure de révolution comprend une deuxième couche d'une deuxième composition polymérique, la deuxième structure de deuxièmes éléments filaires étant imprégnée au moins en partie de la deuxième composition polymérique.

Chaque première et deuxième composition polymérique permet d'assurer la cohésion physico-chimique de l'assemblage avec les autres éléments du pneumatique.

Dans un mode de réalisation, le pneumatique comprend :

- une structure de révolution de sommet agencée radialement à l'extérieur de la première structure de révolution ;
- deux flancs reliant entre elles chaque extrémité axiale de la première structure de révolution et chaque extrémité axiale de la deuxième structure de révolution, les deux flancs délimitant axialement l'espace annulaire intérieur ; l'espace annulaire intérieur formant une cavité apte à être pressurisée par un gaz de gonflage.

De façon préférentielle, chaque flanc ayant une longueur curviligne $L_F$, la longueur curviligne $L_F$ de chaque flanc est avantageusement au moins égale à 1.05 fois, de préférence, 1.15 fois la hauteur radiale moyenne H de l'espace annulaire intérieur. Encore plus avantageusement, la longueur curviligne $L_F$ de chaque flanc est au moins égale à 1.3 fois et au plus égale à 1.6 fois la hauteur radiale moyenne H de l'espace annulaire intérieur. Cette caractéristique de longueur de flanc garantit que la déformation du flanc ne va pas perturber la mise à plat méridienne du pneumatique en raison d'une trop faible courbure.

Avantageusement, les flancs ne sont pas liés directement à l'assemblage et de préférence ne sont pas liés directement aux éléments porteurs. Les flancs participent en partie au port de la charge, selon leur propre rigidité structurelle. Toutefois, les flancs ont un comportement mécanique indépendant et n'interfèrent pas dans le comportement mécanique de la structure porteuse. Les flancs comprennent généralement au moins un matériau élastomérique et peuvent comprendre éventuellement une armature de renforcement.

Dans le cas d'une pressurisation effective par un gaz de gonflage, le pneumatique présente alors une rigidité pneumatique, due à la pression, qui va également contribuer au port de la charge appliquée. Usuellement, pour une utilisation sur un véhicule de tourisme, la pression est au moins égale à 0.5 bar, de préférence au moins égale à 1 bar. Plus la pression est élevée, plus la contribution de la rigidité pneumatique au port de la charge appliquée est élevée, et, corrélativement, plus la contribution de la rigidité structurelle de la structure porteuse et/ou des flancs et/ou des première et deuxième structures de révolution au port de la charge appliquée est faible.

Dans un mode de réalisation préféré, le pneumatique comprend une structure de révolution de carcasse agencée radialement entre la première structure de révolution et la structure de révolution de sommet.

Avantageusement, la structure de révolution de carcasse s'étend continûment entre chaque extrémité axiale de la deuxième structure de révolution radialement au travers de chaque flanc et axialement sur toute la largeur axiale de la première structure de révolution. Ainsi, une telle structure de carcasse permet de reprendre une partie des efforts exercés par la pression à l'intérieur du pneumatique.

Dans un mode de réalisation particulièrement préféré, la structure de révolution de carcasse comprend une nappe de carcasse comprenant des éléments de renforts de carcasse sensiblement parallèles les uns aux autres selon une direction faisant un angle supérieur ou égal à 65°, de préférence supérieur ou égal à 80° et plus préférentiellement sensiblement égal à 90° avec la direction circonférentielle du pneumatique. Une telle structure de révolution de carcasse favorise la déformation uniforme de la première structure de premiers éléments filaires, et dans les modes de réalisation correspondants, la déformation uniforme des zones droites transversales dites déformables. Les inventeurs émettent l'hypothèse que les efforts de déformation selon la première direction générale de la première structure de premiers éléments filaires sont, lors du procédé de fabrication du pneumatique, transmis le long de la première structure de premiers éléments filaires par la structure de révolution de carcasse.

Avantageusement, la structure de révolution de sommet comprend deux nappes de travail, chaque nappe de travail comprenant des éléments de renfort de travail sensiblement parallèles les uns aux autres selon une direction faisant un angle allant de 15° et 40°, de préférence allant de 20° à 30° avec la direction circonférentielle du pneumatique, les éléments de renfort de travail étant croisés d'une nappe de travail par rapport à l'autre.

Avantageusement, la structure de révolution de sommet comprend une nappe de frettage comprenant des éléments de renfort filaires de frettage sensiblement parallèles les uns aux autres formant un angle au plus égal à 10°, de préférence allant de 5° à 10° avec la direction circonférentielle du pneumatique.

Dans un mode de réalisation préféré, la nappe de frettage est agencée radialement à l'extérieur des nappes de travail.

Dans un mode de réalisation, la deuxième structure de deuxièmes éléments filaires est un deuxième tissu ou tricot.

Dans un mode de réalisation particulièrement préféré, la première structure de premiers éléments filaires étant un premier tissu comprenant des premiers éléments filaires, dits de chaine, sensiblement parallèles entre eux et s'étendant selon une première direction, dite de chaine, la direction circonférentielle du pneumatique forme un angle inférieur ou égal à 10° avec la première direction de chaine et chaque premier élément filaire de chaine présente, au moins sur une partie de sa longueur, un allongement non nul selon la première direction de chaine et est non rompu. Ainsi, Chaque premier élément filaire de chaine est non rompu, en d'autres termes H < (L x Art) / (2 π) avec L étant la longueur avant conformation du premier tissu.

Dans un mode de réalisation préféré permettant d'assurer efficacement la conformation de la première structure de premiers éléments filaires, lequel la première structure de premiers éléments filaires comprend :

- au moins une zone droite transversale d'un premier groupe de zone(s) droite(s) transversale(s), chaque zone droite transversale du premier groupe de zone(s) droite(s) transversale(s) présentant un allongement non nul selon la direction circonférentielle du pneumatique et est non rompue,
- au moins une zone droite transversale d'un deuxième groupe de zone (s) droite(s) transversale(s), chaque zone droite transversale du deuxième groupe de zone(s) droite(s) transversale(s) étant non rompue,

chaque zone droite transversale de chaque premier et deuxième groupe de zone(s) droite(s) transversale(s) s'étendant sur toute la largeur de la première structure de premiers éléments filaires.

Dans un mode de réalisation permettant d'obtenir des zones droites transversales du deuxième groupe de zone(s) droite(s) transversale(s) indéformables, chaque zone droite transversale du deuxième groupe de zone(s) droite(s) transversale(s) présente un allongement sensiblement nul selon la direction circonférentielle du pneumatique.

Dans un autre mode de réalisation permettant d'obtenir des zones droites transversales du deuxième groupe de zone(s) droite(s) transversale(s) déformables, chaque zone droite transversale du deuxième groupe de zone(s) droite(s) transversale(s) présente un allongement selon la direction circonférentielle du pneumatique, cet allongement étant avantageusement au plus égal à 20%, de préférence à 15%, et plus préférentiellement à 10% de l'allongement de chaque zone droite transversale du premier groupe de zone(s) droite(s) transversale(s) selon la direction circonférentielle du pneumatique.

Dans un mode de réalisation préféré, la première structure de premiers éléments filaires est un premier tissu comprenant des premiers éléments filaires, dits de chaine, sensiblement parallèles entre eux et s'étendant selon une première direction, dite de chaine, la direction circonférentielle du pneumatique formant un angle inférieur ou égal à 10° avec la première direction de chaine.

Dans un mode de réalisation préféré, chaque premier élément filaire de chaine de chaque zone droite transversale du premier groupe de zone(s) droite(s) transversale(s) présente un allongement non nul selon la première direction de chaine et est non rompue.

Dans un mode de réalisation préféré, chaque premier élément filaire de chaine de chaque zone droite transversale du deuxième groupe de zone(s) droite(s) transversale(s) est non rompue.

Dans un mode de réalisation permettant d'obtenir des zones droites transversales du deuxième groupe de zone(s) droite(s) transversale(s) indéformables, chaque premier élément filaire de chaine de chaque zone droite transversale du deuxième groupe de zone(s) droite(s) transversale(s) présente un allongement sensiblement nul selon la direction circonférentielle du pneumatique.

Dans ces modes de réalisation préférés, toutes les zones droites transversales du premier groupe de zone(s) droite(s) transversale(s) étant identiques, l'allongement de chaque zone droite transversale du premier groupe de zone(s) droite(s) transversale(s) selon la première direction générale est sensiblement égal à $(2\pi \times H) / SLd1$ avec SLd1 étant la somme des longueurs au repos Ld1 de toutes les zones droites transversales du premier groupe de zone(s) droite(s) transversale(s). L'allongement est mesuré conformément à la norme NF EN ISO 13934-1 de juillet 2013. La longueur allongée de chaque zone droite transversale du premier groupe de zone(s) droite(s) transversale(s) selon la première direction général est sensiblement égale à $((2\pi \times H) + SLd1)/N$ avec N étant le nombre de zones droites transversales du premier groupe de zone(s) droite(s) transversale(s) comprise sur la circonférence du pneumatique et par enroulement circonférentiel de première structure de premiers éléments filaires autour de l'axe principal de révolution du pneumatique et SLd1 étant la somme des longueurs au repos Ld1 des zones droites transversales du premier groupe de zone(s) droite(s) transversale(s) selon la première direction générale. Chaque zone droite transversale du premier groupe de zone(s) droite(s) transversale(s) étant allongée et non rompue, la somme des longueurs allongées de chaque zone droite transversale du premier groupe de zone(s) droite(s) transversale(s) selon la première direction générale est sensiblement égale à $((2\pi \times H) + SLd1)$.

Toujours dans ce mode de réalisation, toutes les zones droites transversales du deuxième groupe de zone(s) droite(s) transversale(s) étant identiques, l'allongement de chaque zone droite transversale du deuxième groupe de zone(s) droite(s) transversale(s) selon la première direction générale est sensiblement nul. L'allongement est mesuré conformément à la norme NF EN ISO 13934-1 de juillet 2013. La longueur de chaque zone droite transversale du deuxième groupe de zone(s) droite(s) transversale(s) selon la première direction générale est alors sensiblement égale à la longueur au repos de chaque zone droite transversale du deuxième groupe de zone(s) droite(s) transversale(s). Ainsi, la conformation de la première structure de premiers éléments filaires est obtenue uniquement grâce à l'allongement des zones droites transversales dites déformables du premier groupe de zone(s) droite(s) transversale(s sans contribution d'aucun allongement ni rupture des zones droites transversales dites indéformables et non rompables du deuxième groupe de zone(s) droite(s) transversale(s).

Dans un autre mode de réalisation permettant d'obtenir des zones droites transversales du deuxième groupe de zone(s) droite(s) transversale(s) déformables, chaque premier élément filaire de chaine de chaque zone droite transversale du deuxième groupe de zone(s) droite(s) transversale(s) présente un allongement selon la direction circonférentielle du pneumatique, cet allongement étant avantageusement au plus égal à 20%, de préférence à 15%, et plus préférentiellement à 10% de l'allongement de chaque premier élément filaire de chaine selon la première direction générale dans chaque zone droite transversale du premier groupe de zone(s) droite(s) transversale(s).

Optionnellement, le premier tissu comprenant des premiers éléments filaires, dits de trame, sensiblement parallèles entre eux et s'entrecroisant avec les premiers éléments filaires de chaine, les premiers éléments filaire de trame de chaque zone droite transversale du premier groupe de zone(s) droite(s) transversale(s) présentent un écartement deux à deux selon la direction circonférentielle du pneumatique supérieur à l'écartement deux à deux selon la direction circonférentielle du pneumatique entre les premiers éléments filaire de trame de chaque zone droite transversale du deuxième groupe de zone(s) droite(s) transversale(s).

Par écartement deux à deux selon la direction circonférentielle du pneumatique, on entend l'écart selon la direction circonférentielle du pneumatique entre chaque couple d'éléments filaires adjacents.

Dans un mode de réalisation préféré, chaque élément filaire porteur comprenant une première portion filaire d'ancrage de chaque élément filaire porteur dans la première structure de premiers éléments filaires prolongeant la portion filaire porteuse dans la première structure de premiers éléments filaires:

- chaque zone droite transversale du premier groupe de zone(s) droite(s) transversale(s) est dépourvue de toute première portion filaire d'ancrage sur toute la largeur de la première structure de premiers éléments filaires,
- chaque zone droite transversale du deuxième groupe de zone(s) droite(s) transversale(s) comprend au moins une première portion filaire d'ancrage sur la largeur de la première structure de premiers éléments filaires.

Avantageusement, chaque portion filaire d'ancrage est non rompue.

Dans un mode de réalisation, chaque portion filaire d'ancrage présente un allongement sensiblement nul selon la direction circonférentielle du pneumatique.

Dans un autre mode de réalisation, chaque portion filaire d'ancrage présente un allongement non nul selon la direction circonférentielle du pneumatique.

Avantageusement, chaque zone droite transversale du premier groupe de zone(s) droite(s) transversale(s) alterne, selon la direction circonférentielle du pneumatique, avec une zone droite transversale du deuxième groupe de zone(s) droite(s) transversale(s).

Dans un premier mode de réalisation dans lequel la première structure de premiers éléments filaires est un premier tissu comprenant des premiers éléments filaires, dits de chaine, sensiblement parallèles entre eux et s'étendant selon une première direction, dite de chaine, la première direction de chaine et la direction circonférentielle du pneumatique forment un angle sensiblement nul.

Dans ce premier mode de réalisation, avantageusement, l'assemblage s'étend circonférentiellement sur au plus un tour complet autour de l'axe principal de façon à ce que la première structure de révolution forme un enroulement cylindrique axialement continu de l'assemblage entre les deux flancs du pneumatique. Ainsi, on utilise au plus un tour complet, c'est-à-dire au moins un tour mais moins de deux tours complets. La jonction entre les deux extrémités de l'assemblage peut être réalisée par recouvrement ou aboutage.

Dans un deuxième mode de réalisation dans lequel la première structure de premiers éléments filaires est un premier tissu comprenant des premiers éléments filaires, dits de chaine, sensiblement parallèles entre eux et s'étendant selon une première direction, dite de chaine, la première direction de chaine et la direction circonférentielle du pneumatique forment un angle sensiblement non nul inférieur à 10°, de préférence un angle sensiblement non nul inférieur ou égal à 5°

Dans ce deuxième mode de réalisation, avantageusement, l'assemblage s'étend circonférentiellement sur plusieurs tours complets autour de l'axe principal de façon à ce que la première structure de révolution forme un enroulement hélicoïdal axialement discontinu de l'assemblage entre les deux flancs du pneumatique. A l'inverse du mode de réalisation précédent, l'assemblage est enroulé sur plusieurs tours complets sans qu'il soit nécessaire de joindre les deux extrémités de l'assemblage.

Dans une première variante du mode de réalisation utilisant les zones droites transversales du premier groupe dites déformables et les zones droites transversales du deuxième groupe dites non rompables, chaque extrémité circonférentielle de chaque zone droite transversale du premier groupe de zone(s) droite(s) transversale(s) d'un tour est axialement sensiblement alignée avec chaque extrémité circonférentielle de chaque zone droite transversale du premier groupe de zone(s) droite(s) transversale(s) de chaque tour adjacent. Ainsi, on permet une conformation axialement identique et plus aisée de l'assemblage.

Dans une deuxième variante du mode de réalisation utilisant les zones droites transversales du premier groupe dites déformables et les zones droites transversales du deuxième groupe dites non rompables, chaque extrémité circonférentielle de chaque zone droite transversale du premier groupe de zone(s) droite(s) transversale(s) d'un tour se situe entre les prolongements axiaux des deux extrémités circonférentielles de chaque zone droite transversale du premier groupe de zone(s) droite(s) transversale(s) de chaque tour adjacent. Ainsi, on réparti axialement les zones déformables et les zones non rompables.

Dans une troisième variante du mode de réalisation utilisant les zones droites transversales du premier groupe dites déformables et les zones droites transversales du deuxième groupe dites non rompables, certaines extrémités circonférentielles de certaines zones droites transversales du premier groupe de zone(s) droite(s) transversale(s) d'un tour sont axialement sensiblement alignées avec des extrémités circonférentielles d'au moins une zone droite transversale du premier groupe de zone(s) droite(s) transversale(s) de chaque tour adjacent et certaines extrémités circonférentielles de certaines zones droites transversales du premier groupe de zone(s) droite(s) transversale(s) d'un tour se situent entre les prolongements axiaux des deux extrémités circonférentielles de certaines zones droites transversales du premier groupe de zone(s) droite(s) transversale(s) de chaque tour adjacent.

## Ensemble monté selon l'invention

En outre, l'invention a pour objet un ensemble monté comprenant un pneumatique tel que défini ci-dessus, le pneumatique étant monté sur un moyen de montage de l'ensemble monté sur un véhicule.

Le moyen de montage est par exemple une jante. De préférence, le moyen de montage comprend une face coopérant avec une face externe du pneumatique selon l'invention. Les deux faces coopérante sont maintenues au contact l'une de l'autre, par exemple par collage ou bien par les forces de pression résultant du gonflage du pneumatique.

## Procédé selon l'invention

Enfin, l'invention a pour objet un procédé de fabrication d'un pneumatique dans lequel :

- on enroule, autour d'un cylindre de confection sensiblement de révolution autour d'un axe de révolution, un assemblage comprenant :

  - une première structure de premiers éléments filaires,

- une deuxième structure de deuxièmes éléments filaires,
- une structure porteuse comprenant des éléments filaires porteurs reliant la première structure de premiers éléments filaires et la deuxième structure de deuxièmes éléments filaires entre elles, chaque élément filaire porteur comprenant au moins une portion filaire porteuse s'étendant entre la première structure de premiers éléments filaires et la deuxième structure de deuxièmes éléments filaires,
- on écarte radialement par rapport à l'axe de révolution la première structure de premiers éléments filaires de façon à :

- former un espace annulaire intérieur délimité radialement par une face interne de la première structure de premiers éléments filaires et une face interne de la deuxième structure de deuxièmes éléments filaires et distante l'une de l'autre d'une distance radiale moyenne H telle que H0 x K $\leq$ H avec K=0,50 et H0 étant la hauteur radiale moyenne entre la face interne de la première structure de premiers éléments filaires et la face interne de la deuxième structure de deuxièmes éléments filaires lorsque chaque portion filaire porteuse est au repos,
- ce que la première structure de premiers éléments filaires s'allonge selon la direction circonférentielle du cylindre de confection sur au moins une partie de sa longueur sans rompre.

Conformément à l'invention et comme expliqué ci-dessus, un tel procédé est facile à mettre en oeuvre.

En outre, de façon préférée, à l'issu de l'étape d'écartement radial, H0 x K $\leq$ H < H0 ce qui signifie que, en l'absence de charge appliquée au pneumatique et en l'absence de pression dans le pneumatique, les éléments filaires porteurs se trouvent dans un état replié.

Avantageusement, lors de l'étape d'écartement de la première structure de premiers éléments filaires par rapport à l'axe de révolution, on exerce sur la première structure de premiers éléments filaires une force, exprimée en N, selon la direction circonférentielle du cylindre de confection, inférieure ou égale à (PO x (L/2$\pi$ + H) x l) / 2 avec l étant la largeur de la première structure de premiers éléments filaires, L étant la longueur au repos de la première structure de premiers éléments filaires selon la première direction générale, l et L étant exprimées en m et P0=100000. Ainsi, la première structure de premiers éléments filaires se déforme sous une contrainte relativement faible ce qui permet, lors du procédé de fabrication du pneumatique, d'utiliser une contrainte de conformation adaptée ne risquant pas de détériorer l'ébauche.

Dans un mode de réalisation, lors de l'étape d'écartement de la première structure de premiers éléments filaires par rapport à l'axe de révolution, on exerce sur la première structure de premiers éléments filaires une force, selon la direction circonférentielle du cylindre de confection, inférieure à la force maximale de la première structure de premiers éléments filaires. La force maximale est la force nécessairement pour obtenir l'allongement à la force maximale tel que défini dans la norme NF EN ISO 13934-1 de juillet 2013. Ainsi, à contrainte imposée, on évite de rompre la première structure de premiers éléments filaires.

Avantageusement, P0=80000, de préférence P0=60000, plus préférentiellement P0=40000. Plus P0 est faible, plus la contrainte de conformation est faible et moindre est le risque de détériorer l'ébauche.

Dans un mode de réalisation préféré, la deuxième structure de deuxièmes éléments filaires est un deuxième tissu ou tricot.

Dans un mode de réalisation également préféré, la première structure de premiers éléments filaires étant un premier tissu comprenant des premiers éléments filaires, dits de chaine, sensiblement parallèles entre eux et s'étendant selon une première direction, dite de chaine :

- on enroule l'assemblage autour du cylindre de confection de sorte que la première direction de chaine et la direction circonférentielle du cylindre de confection forment un angle inférieur ou égal à 10°, et
- on écarte radialement par rapport à l'axe de révolution le premier tissu de façon à ce que chaque premier élément filaire de chaine s'allonge selon la première direction de chaine sur au moins une partie de sa longueur sans rompre.

Ainsi, chaque premier élément filaire de chaine est, à l'issu de l'étape d'écartement radial, non rompu. En d'autres termes H < (L x Art) / (2 $\pi$).

Dans un mode de réalisation préféré permettant d'assurer efficacement la conformation de la première structure de premiers éléments filaires, la première structure de premiers éléments filaires comprend :

- au moins une zone droite transversale d'un premier groupe de zone(s) droite(s) transversale(s),
- au moins une zone droite transversale d'un deuxième groupe de zone(s) droite(s) transversale(s),

chaque zone droite transversale de chaque premier et deuxième groupe de zone(s) droite(s) transversale(s) s'étendant sur toute la largeur de la première structure de premiers éléments filaires,
on allonge sans rompre chaque zone droite transversale du premier groupe de zone(s) droite(s) transversale(s) selon la direction circonférentielle du cylindre de confection, et
on ne rompt sensiblement aucune zone droite transversale du deuxième groupe de zone(s) droite(s) transversale(s)

Dans un mode de réalisation permettant d'obtenir des zones droites transversales du deuxième groupe de zone(s) droite(s) transversale(s) indéformables, on n'allonge selon la direction circonférentielle du cylindre de confection aucune zone droite transversale du deuxième groupe de zone(s) droite(s) transversale(s).

Dans un autre mode de réalisation permettant d'obtenir des zones droites transversales du deuxième groupe de zone(s) droite(s) transversale(s) déformables, on allonge selon la direction circonférentielle du cylindre de confection chaque zone droite transversale du deuxième groupe de zone(s) droite(s) transversale(s), et avantageusement, on allonge selon la direction circonférentielle du cylindre de confection chaque zone droite transversale du deuxième groupe de zone(s) droite(s) transversale(s) d'au plus de 20%, de préférence de 15%, et plus préférentiellement de 10% de l'allongement de chaque zone droite transversale du premier groupe de zone(s) droite(s) transversale(s) selon la direction circonférentielle du cylindre de confection (80).

Dans un mode de réalisation préféré, la première structure de premiers éléments filaires est un premier tissu comprenant des premiers éléments filaires, dits de chaine, sensiblement parallèles entre eux et s'étendant selon une première direction, dite de chaine, la direction circonférentielle du cylindre de confection formant un angle inférieur ou égal à 10° avec la première direction de chaine.

Dans un mode de réalisation préféré, on allonge sans rompre chaque premier élément filaire de chaine selon la première direction de chaine de chaque zone droite transversale du premier groupe de zone(s) droite(s) transversale(s).

Dans un mode de réalisation préféré, on ne rompt sensiblement aucun premier élément filaire de chaine de chaque zone droite transversale du deuxième groupe de zone(s) droite(s) transversale(s).

Dans un mode de réalisation permettant d'obtenir des zones droites transversales du deuxième groupe de zone(s) droite(s) transversale(s) indéformables, on n'allonge selon la première direction de chaine aucun premier élément filaire de chaine de chaque zone droite transversale du deuxième groupe de zone(s) droite(s) transversale(s).

Dans un autre mode de réalisation permettant d'obtenir des zones droites transversales du deuxième groupe de zone(s) droite(s) transversale(s) déformables, on allonge selon la première direction de chaine chaque premier élément filaire de chaine de chaque zone droite transversale du deuxième groupe de zone(s) droite(s) transversale(s), et avantageusement on allonge selon la première direction de chaine chaque premier élément filaire de chaine de chaque zone droite transversale du deuxième groupe de zone(s) droite(s) transversale(s) d'au plus 20%, de préférence 15%, et plus préférentiellement 10% de l'allongement de chaque premier élément filaire de chaine de chaque zone droite transversale du premier groupe de zone(s) droite(s) transversale(s).

Par sensiblement aucun, on entend que l'on ne rompt et/ou que l'on n'allonge aucun premier élément filaire de chaine ou un nombre insuffisant de premiers éléments filaires de chaine ou bien avec un allongement non significatif pour participer à la conformation du premier tissu.

Optionnellement, le premier tissu comprenant des premiers éléments filaires, dits de trame, sensiblement parallèles entre eux et s'entrecroisant avec les premiers éléments filaires de chaine, on écarte deux à deux selon la direction circonférentielle les premiers éléments filaires de trame de chaque zone droite transversale du premier groupe de zone(s) droite(s) transversale(s) et on maintient l'écart deux à deux selon la direction circonférentielle entre les premiers éléments filaire de trame de chaque zone droite transversale du deuxième groupe de zone(s) droite(s) transversale(s).

Avantageusement, chaque élément filaire porteur comprenant une première portion filaire d'ancrage de chaque élément filaire porteur dans la première structure de premiers éléments filaires prolongeant la portion filaire porteuse dans la première structure de premiers éléments filaires:

- chaque zone droite transversale du premier groupe de zone(s) droite(s) transversale(s) est dépourvue de toute première portion filaire d'ancrage sur toute la largeur de la première structure de premiers éléments filaires,
- chaque zone droite transversale du deuxième groupe de zone(s) droite(s) transversale(s) comprend au moins une première portion filaire d'ancrage sur la largeur de la première structure de premiers éléments filaires.

Avantageusement, on ne rompt sensiblement aucune première portion filaire d'ancrage.

Dans un mode de réalisation, on n'allonge selon la direction circonférentielle du cylindre de confection aucune première portion filaire d'ancrage.

Dans un autre mode de réalisation, on allonge selon la direction circonférentielle du cylindre de confection chaque première portion filaire d'ancrage.

Par sensiblement aucune, on entend que l'on ne rompt et/ou que l'on n'allonge aucune première portion filaire d'ancrage ou un nombre insuffisant de premières portions filaires d'ancrage ou bien avec un allongement non significatif pour participer à la conformation de la première structure de premiers éléments filaires.

De préférence, chaque zone droite transversale du premier groupe de zone(s) droite(s) transversale(s) alterne, selon la direction circonférentielle, avec une zone droite transversale du deuxième groupe de zone(s) droite(s) transversale(s).

Dans un premier mode de réalisation dans lequel la première structure de premiers éléments filaires est un premier tissu comprenant des premiers éléments filaires, dits de chaine, sensiblement parallèles entre eux et s'étendant selon une première direction, dite de chaine, la première direction de chaine et la direction circonférentielle du cylindre de confection forment un angle sensiblement nul.

Dans ce premier mode de réalisation, avantageusement, on enroule l'assemblage circonférentiellement sur au plus un tour complet autour de l'axe principal de façon à ce que la première structure de révolution forme un enroulement hélicoïdal axialement continu de l'assemblage entre les deux flancs du pneumatique.

Dans un deuxième mode de réalisation dans lequel la première structure de premiers éléments filaires est un premier tissu comprenant des premiers éléments filaires, dits de chaine, sensiblement parallèles entre eux et s'étendant selon une première direction, dite de chaine, la première direction de chaine et la direction circonférentielle du cylindre de confection forment un angle sensiblement non nul inférieur à 10°, de préférence un angle sensiblement non nul inférieur ou égal à 5°.

Dans ce deuxième mode de réalisation, avantageusement, on enroule l'assemblage circonférentiellement sur plusieurs tours complets autour de l'axe principal de façon à ce que la première structure de révolution forme un enroulement cylindrique axialement discontinu de l'assemblage entre les deux flancs du pneumatique.

Dans une première variante du mode de réalisation utilisant les zones droites transversales du premier groupe dites déformables et les zones droites transversales du deuxième groupe dites non rompables, on enroule l'assemblage de sorte que chaque extrémité circonférentielle de chaque zone droite transversale du premier groupe de zone(s) droite(s) transversale(s) d'un tour est axialement sensiblement alignée avec chaque extrémité circonférentielle de chaque zone droite transversale du premier groupe de zone(s) droite(s) transversale(s) de chaque tour adjacent.

Dans une deuxième variante du mode de réalisation utilisant les zones droites transversales du premier groupe dites déformables et les zones droites transversales du deuxième groupe dites non rompables, on enroule l'assemblage de sorte que chaque extrémité circonférentielle de chaque zone droite transversale du premier groupe de zone(s) droite(s) transversale(s) d'un tour se situe entre les prolongements axiaux des deux extrémités circonférentielles de chaque zone droite transversale du premier groupe de zone(s) droite(s) transversale(s) de chaque tour adjacent.

Dans une troisième variante du mode de réalisation utilisant les zones droites transversales du premier groupe dites déformables et les zones droites transversales du deuxième groupe dites non rompables, on enroule l'assemblage de sorte que certaines extrémités circonférentielles de certaines zones droites transversales du premier groupe de zone(s) droite(s) transversale(s) d'un tour sont axialement sensiblement alignées avec des extrémités circonférentielles d'au moins une zone droite transversale du premier groupe de zone(s) droite(s) transversale(s) de chaque tour adjacent et de sorte que certaines extrémités circonférentielles de certaines zones droites transversales du premier groupe de zone(s) droite(s) transversale(s) d'un tour se situent entre les prolongements axiaux des deux extrémités circonférentielles de certaines zones droites transversales du premier groupe de zone(s) droite(s) transversale(s) de chaque tour adjacent.

Optionnellement :

- préalablement à l'étape d'enroulage de l'assemblage autour du cylindre de confection, on imprègne la première structure de premiers éléments filaires et la deuxième structure de deuxièmes éléments filaires respectivement par une première couche d'une première composition polymérique et une deuxième couche d'une deuxième composition polymérique, de façon à former lors de l'étape d'enroulage de l'assemblage une première structure de révolution comprenant la première structure de premiers éléments filaires imprégnée au moins en partie de la première composition polymérique et de façon à former une deuxième structure de révolution comprenant lequel la deuxième structure de deuxièmes éléments filaires imprégnée au moins en partie de la deuxième composition polymérique ;

- préalablement à l'étape de formation de l'espace annulaire intérieur, on relie entre elles chaque extrémité axiale de la première structure de révolution et chaque extrémité axiale de la deuxième structure de révolution par un flanc de façon à constituer l'espace annulaire intérieur, les deux flancs délimitant axialement l'espace annulaire intérieur.

Avantageusement, préalablement à l'étape de formation de l'espace annulaire intérieur, on enroule une structure de révolution de carcasse radialement à l'extérieur de la première structure de révolution.

De façon préférée, on relie continûment chaque extrémité axiale de la deuxième structure de révolution par la structure de révolution de carcasse s'étendant radialement au travers de chaque flanc et axialement sur toute la largeur axiale de la première structure de révolution.

De préférence, on forme l'espace annulaire intérieur par pressurisation par un gaz de gonflage de l'espace annulaire intérieur.

Avantageusement, après l'étape de formation de l'espace annulaire intérieur, on enroule une structure de révolution de sommet radialement à l'extérieur de la première structure de premiers éléments filaires, et de préférence radialement à l'extérieur de la structure de révolution de carcasse.

Avantageusement, après l'étape de formation de l'espace annulaire intérieur, on enroule une bande de roulement radialement à l'extérieur de la première structure de premiers éléments filaire, de préférence radialement à l'extérieur de la structure de révolution de sommet.

De préférence, on enroule simultanément radialement à l'extérieur de la première structure de premiers éléments filaire, et de préférence radialement à l'extérieur de la structure de révolution de carcasse, la structure de révolution de sommet et la bande de roulement préalablement assemblées ensemble.

L'invention sera mieux comprise à la lecture de la description qui va suivre, donnée uniquement à titre d'exemple non limitatif et faite en se référant aux dessins dans lesquels:

- la figure 1 est une vue en perspective et en coupe partielle d'un pneumatique selon un premier mode de réalisation de l'invention représenté en l'absence de charge appliquée et de pression ;
- la figure 2 est une vue de détail de structures de révolution du pneumatique de la figure 1, notamment d'une structure porteuse comprenant des éléments filaires porteurs ;
- la figure 3 est une vue en coupe circonférentielle du pneumatique de la figure 1, représenté dans un état écrasé sous l'effet d'une charge et en présence de pression ;
- la figure 4 est une vue en coupe méridienne du pneumatique de la figure 3;
- la figure 5 est une vue en arraché du pneumatique de la figure 1 illustrant une première structure de premiers éléments filaires d'un l'assemblage selon l'invention intégré au pneumatique de la figure 1;
- la figure 6 est une vue analogue à celle de la figure 3 du pneumatique de la figure 1 sur laquelle chaque portion filaire porteuse de chaque élément filaire porteur est au repos ;
- la figure 7 est une vue analogue à celle de la figure 3 du pneumatique de la figure 1 en l'absence de charge appliquée et de pression ;
- la figure 8 est une vue d'un élément filaire porteur de la structure porteuse ;
- la figure 9 est une de dessus de l'assemblage de la figure 5 avant son intégration au pneumatique ;
- la figure 10 est une vue en coupe de l'assemblage de la figure 9 selon le plan de coupe P-P' illustrant des éléments porteurs dans un état replié ;
- la figure 11 est une vue analogue à celle de la figure 10 illustrant des éléments porteurs dans un état au repos du pneumatique de la figure 6 ;
- la figure 12 est une vue analogue à celle de la figure 10 illustrant des éléments porteurs en l'absence de charge appliquée et de pression du pneumatique des figures 1 et 7;
- les figures 13 à 17 sont des vues schématiques des différentes étapes du procédé de fabrication du pneumatique de la figure 1 ;
- les figures 18 et 19 sont des vues schématiques du pneumatique respectivement avant et après la formation d'un espace annulaire intérieur ;
- la figure 20 est une vue analogue à celle de la figure 1 d'un pneumatique selon un deuxième mode de réalisation de l'invention ;
- la figure 21 est une vue analogue à celle de la figure 5 d'une première variante du pneumatique de la figure 20 ;
- la figure 22 est une vue analogue à celle de la figure 5 d'une deuxième variante du pneumatique de la figure 20.

Dans les figures, on a représenté un repère X, Y, Z correspondant aux orientations habituelles respectivement axiale (selon la direction YY'), radiale (selon la direction ZZ') et circonférentielle (selon la direction XX') d'un pneumatique. Sur les figures, les axes ZZ' et XX' définissent le plan circonférentiel médian du pneumati-

que.

## ENSEMBLE MONTE, PNEUMATIQUE, ASSEMBLA-GE IMPREGNE ET ASSEMBLAGE SELON UN PREMIER MODE DE REALISATION DE L'INVENTION

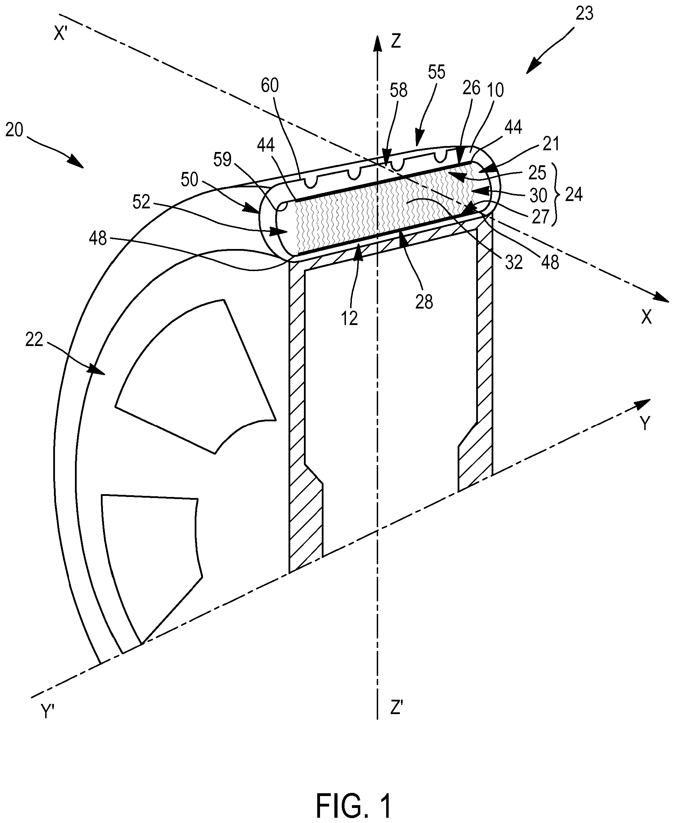

On a représenté sur la figure 1 un pneumatique conforme à un premier mode de réalisation de l'invention et désigné par la référence générale 20. Le pneumatique 20 est sensiblement de révolution autour d'un axe principal sensiblement parallèle à la direction axiale YY'. Le pneumatique 20 est ici destiné à un véhicule de tourisme. Sur la figure 1, le pneumatique 20 est monté sur un moyen de montage 22, ici une jante, formant ainsi un ensemble monté 23 selon l'invention pour véhicule.

Le pneumatique 20 comprend une première structure de révolution 25 et une deuxième structure de révolution 27. La deuxième structure de révolution 27 est agencée radialement à l'intérieur de la première structure de révolution 25. Ces première et deuxième structures de révolution 25, 27 forment une partie d'un assemblage imprégné 21 décrit plus en détails ci-dessous.

Comme illustré sur les figures 1, 2, 4 et 10 à 12, la première structure de révolution 25 comprend une première structure 10 d'éléments filaires, ici un premier tissu 26, et une première couche 33 d'une première composition polymérique 34, le premier tissu 26 étant imprégné au moins en partie de la première composition polymérique 34. La deuxième structure de révolution 27 comprend une deuxième structure 12 d'éléments filaires, ici un deuxième tissu ou tricot 28et de préférence un tissu 28, et une deuxième couche 35 d'une deuxième composition polymérique 36, le deuxième tissu 28 étant imprégné au moins en partie de la deuxième composition polymérique 36. En variante, la deuxième structure 27 comprend un tricot imprégné au moins en partie par la deuxième composition polymérique 36.

Dans le pneumatique 20, le premier tissu 26 est agencé radialement à l'extérieur par rapport au deuxième tissu 28. Chaque première et deuxième composition polymérique 34, 36 comprend par exemple une composition élastomérique comprenant au moins un élastomère, de préférence diénique, par exemple du caoutchouc naturel.

L'assemblage imprégné 21 comprend un assemblage 24 comprenant les premier et deuxième tissus 26, 28 imprégnés, chaque premier et deuxième tissu 26, 28 imprégné formant respectivement chaque première et deuxième structures de révolution 25, 27. L'assemblage 24 comprend également une structure porteuse 30 comprenant des éléments filaires porteurs 32 reliant les premier et deuxième tissus 26, 28 entre eux. La structure porteuse 30 est ici constituée d'une pluralité d'éléments filaires porteurs 32 tous identiques.

Le pneumatique 20 comprend une structure de révolution de carcasse 51 et une structure de révolution de sommet 55. La structure de révolution de carcasse 51 est agencée radialement entre la première structure de révolution 25 et la structure de révolution de sommet 55.

La structure de révolution de carcasse 51 comprend une nappe de carcasse 53 comprenant des éléments de renfort de carcasse sensiblement parallèles les uns aux autres selon une direction faisant un angle supérieur ou égal à 65°, de préférence supérieur ou égal à 80° et ici plus préférentiellement sensiblement égal à 90° avec la direction circonférentielle XX' du pneumatique 20. En l'espèce, les éléments de renfort sont des éléments de renfort filaires textiles, par exemple comprenant deux brins de polyester de 144 tex enroulés à 290 tours ensemble.

La structure de révolution de sommet 55 agencée radialement à l'extérieur de la structure de révolution de carcasse 51 comprend deux nappes de travail 54, 56. Chaque nappe de travail 54, 56 comprend des éléments de renfort de travail sensiblement parallèles les uns aux autres selon une direction faisant un angle allant de 15° et 40°, de préférence allant de 20° à 30° avec la direction circonférentielle du pneumatique et ici égal à 26°. Les éléments de renfort de travail sont croisés d'une nappe de travail 54, 56 par rapport à l'autre. En l'espèce, les éléments de renfort de travail sont des éléments de renfort filaires métalliques, par exemple des câbles de structure 2x0.30 mm.

La structure de révolution de sommet 55 comprend également une nappe de frettage 57 agencée radialement à l'extérieur des nappes de travail 54, 56. La nappe de frettage 57 comprend des éléments de renfort filaires de frettage sensiblement parallèles les uns aux autres formant un angle au plus égal à 10°, de préférence allant de 5° à 10° avec la direction circonférentielle du pneumatique 10 et ici égal à 5°. En l'espèce, les éléments de renfort de frettage sont des éléments de renfort filaires textiles, par exemple comprenant deux brins d'aramide de 167 tex enroulés à 315 tours ensemble.

Le pneumatique 20 comprend également une bande de roulement 58 comme illustré sur les figures 1, 2 et 4 agencée radialement à l'extérieur de la structure de révolution de sommet 55.

La structure de révolution de carcasse 51 comprend une face radialement intérieure 59 et la bande de roulement 58 comprend une face radialement extérieure 60.

Chaque nappe de carcasse 53, de travail 54, 56 et de frettage 57 comprend une composition polymérique, par exemple une composition élastomérique comprenant au moins un élastomère, de préférence diénique, par exemple du caoutchouc naturel, dans laquelle sont noyés les éléments de renfort correspondants.

La bande de roulement 58 est destinée à entrer en contact avec un sol. La bande de roulement 58 est constituée d'une composition polymérique, par exemple une composition élastomérique comprenant au moins un élastomère, de préférence diénique, par exemple du caoutchouc naturel.

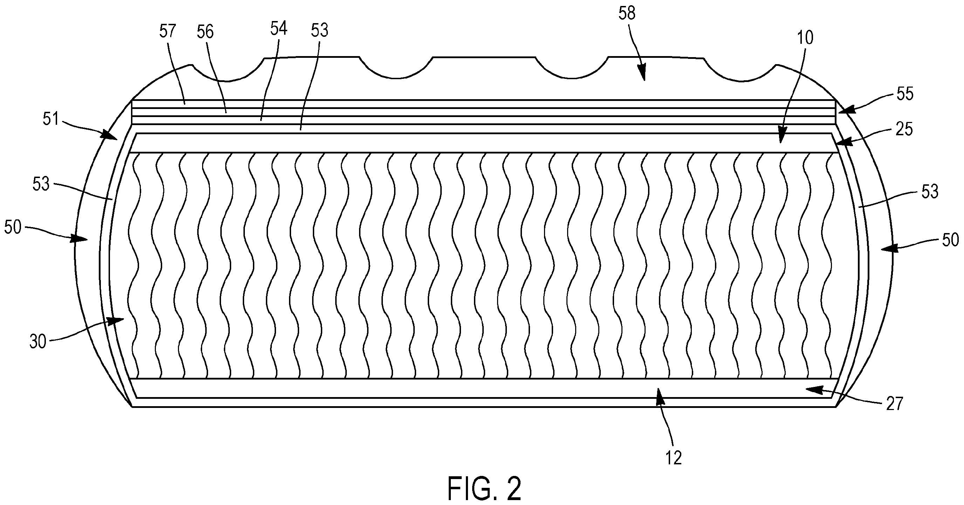

Comme illustré sur les figures 1 et 2, la première structure de révolution 25, la deuxième structure de révolution 27, la structure de carcasse 51, la structure de révolution de sommet 55 et la bande de roulement 58 présentent un axe de révolution commun, en l'espèce l'axe de rotation YY' du pneumatique 20.

En référence aux figures 1, 4 et 10 à 12, la première structure de révolution 25 présente une face interne 42 et une face externe 43 ainsi que deux extrémités axiales 44. La face interne 42 est une face interne du premier tissu 26 et la face externe 43 est une face externe de la première couche 33. Le premier tissu 26 comprend également une face externe 41 agencée radialement, au sein du pneumatique 20, à l'extérieur de la face interne 42. Au sein du pneumatique 20, la face interne 42 est agencée radialement à l'intérieur de la face externe 43 et la face externe 43 est au contact de la face 59 radialement intérieure de la structure de révolution de carcasse 51.

La deuxième structure de révolution 27 présente une face interne 46 et une face externe 47 ainsi que deux extrémités axiales 48. La face interne 46 est une face interne du deuxième tissu 28 et la face externe 47 est une face externe de la deuxième couche 35. Le deuxième tissu 28 comprend également une face externe 49 agencée radialement, au sein du pneumatique 20, à l'intérieur de la face interne 46. Au sein du pneumatique 20, la face interne 46 est agencée radialement à l'extérieur de la face externe 47.

Les deux faces 42 et 46 sont en regard l'une de l'autre et sensiblement parallèle l'une à l'autre. Au sein du pneumatique 20, chaque surface 42, 46 décrit un cylindre de révolution autour de l'axe YY' du pneumatique 20.

En référence à la figure 1, le pneumatique 20 comprend également deux flancs 50. Chaque flanc 50 relie entre elles chaque extrémité axiale 44 de la première structure de révolution 25 et chaque extrémité axiale 48 de la deuxième structure de révolution 27. La structure de révolution de carcasse 51 s'étend continûment entre chaque extrémité axiale 48 de la deuxième structure de révolution 27 radialement au travers de chaque flanc 50 et axialement sur toute la largeur axiale de la première structure de révolution 25.Le pneumatique 20 comprend également un espace annulaire intérieur 52 délimité d'une part radialement, par chaque face interne 42 et 46 et, d'autre part axialement, par les deux flancs 50. L'espace annulaire intérieur 52 forme une cavité fermée apte à être pressurisée par un gaz de gonflage, par exemple de l'air. Les éléments porteurs 32 sont deux à deux indépendants dans l'espace annulaire intérieur 52.

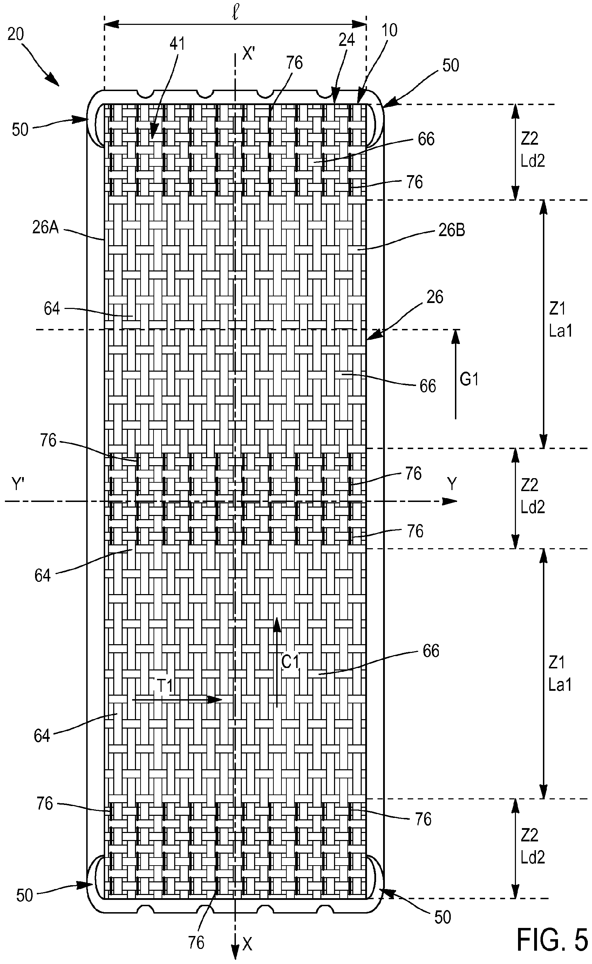

Dans ce premier mode de réalisation, l'assemblage 24 s'étend circonférentiellement sur au plus un tour complet autour de l'axe principal du pneumatique 20 de façon à ce que la première structure de révolution 25 forme un enroulement cylindrique axialement continu de l'assemblage 24 entre les deux flancs 50 du pneumatique 20 comme cela est illustré sur la figure 5.

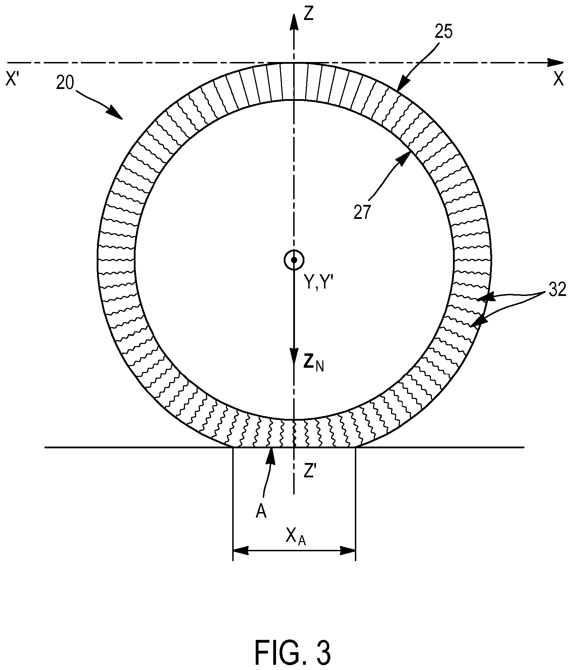

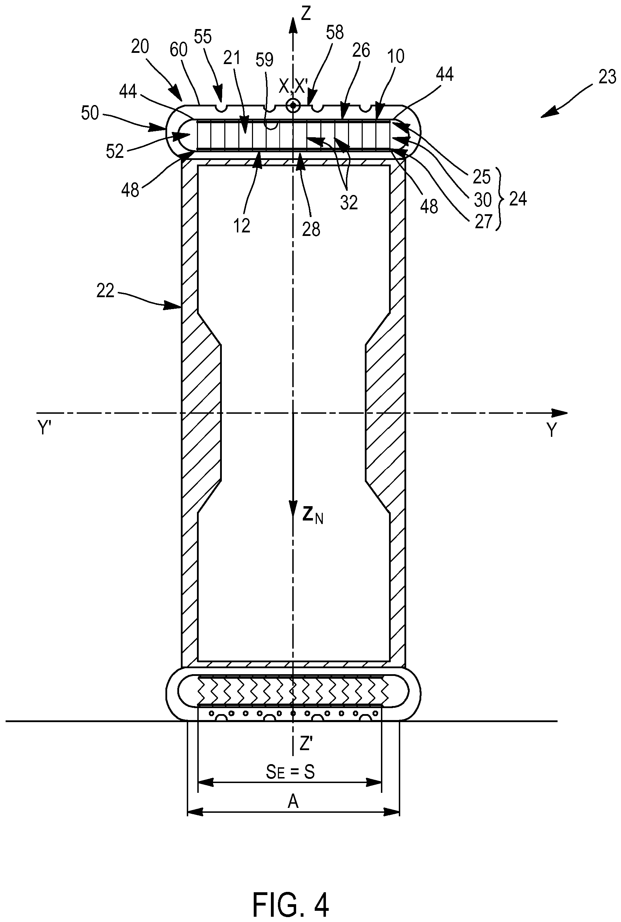

Sur les figures 3 et 4, le pneumatique 20 est représenté soumis à une charge radiale nominale $Z_N$. Le pneumatique 20 est en contact avec un sol plan par une surface de contact A, ayant une longueur circonférentielle $X_A$. Les éléments porteurs 32, reliés à la portion de la première structure de révolution 25 en contact avec le sol par l'intermédiaire de la bande de roulement, sont soumis à flambage en compression, alors qu'au moins une partie des éléments porteurs 32, reliés à la portion de la première structure de révolution 25 non en contact avec le sol, sont en tension. Le pneumatique 20 illustré sur la figure 3 est gonflé a une pression P comprise entre 1.5 bar et 2.5 bars et est soumis à une charge radiale $Z_N$ égale à 600 daN.

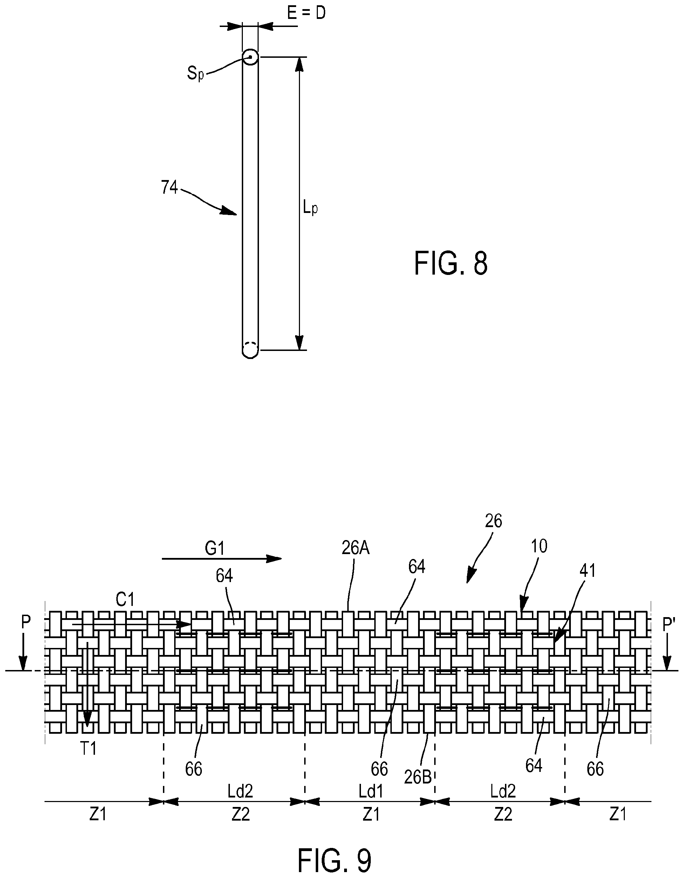

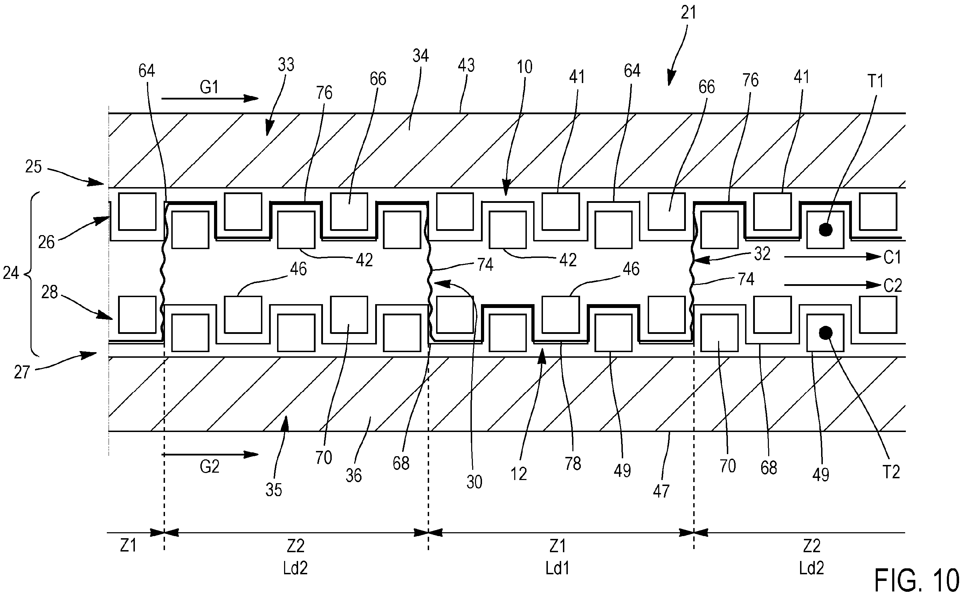

On a représenté sur la figure 5, la face externe 41 du premier tissu 26 intégré dans le pneumatique 20. On a volontairement omis de représenter la première couche 33 de composition polymérique 34 ainsi que les structures de révolution de carcasse 51, de sommet 55 et la bande de roulement 58 pour des raisons de clarté de l'exposé. On a représenté sur la figure 9 la même face 41 du premier tissu 26 avant son intégration dans la pneumatique 20. On a représenté sur les figures 10, 11 et 12 le premier tissu 26 dans différents états que nous allons décrire en détails ci-dessous.

En référence aux figures 5, 9 et 10 à 12, le premier tissu 26 comprend deux bords longitudinaux 26A et 26B. Le premier tissu 26 s'étend selon une première direction générale G1 sensiblement parallèle à chaque bord longitudinal 26A, 26B. Le premier tissu 26 comprend des premiers éléments filaires 64, appelés premiers éléments filaires de chaine, et des premiers éléments filaires 66, appelés premiers éléments filaires de trame. Les premiers éléments filaires de chaine 64 du premier tissu 26 sont sensiblement parallèles entre eux et s'étendent selon une première direction dite de chaine C1, sensiblement parallèle à la première direction générale G1. Les premiers éléments filaires de trame 66 du premier tissu 26 sont sensiblement parallèles entre eux et s'étendent selon une première direction dite de trame T1 et s'entrecroisent avec les premiers éléments filaires de chaine 64. Les premiers éléments filaires de chaine 64 s'étendent continûment sur toute la longueur du premier tissu 26.

De façon analogue au premier tissu 26, le deuxième tissu 28 comprend deux bords longitudinaux 28A et 28B. Le deuxième tissu 28 s'étend selon une deuxième direction générale G2 sensiblement parallèle à chaque bord longitudinal 28A, 28B. En l'espèce, la deuxième direction générale G2 est sensiblement parallèle à la première direction générale G1. Le deuxième tissu 28 comprend des deuxièmes éléments filaires 68, appelés deuxièmes éléments filaires de chaine, et des deuxièmes éléments filaires 70, appelés deuxièmes éléments filaires de trame. Les deuxièmes éléments filaires de chaine 68 du deuxième tissu 28 sont sensiblement parallèles entre eux et s'étendent selon une deuxième direction dite de chaine C2, sensiblement parallèle à la deuxième direction générale G2. Les deuxièmes éléments filaires de trame 70 du deuxième tissu 28 sont sensiblement parallèles entre eux et s'étendent selon une deuxième direction dite de trame T2 et s'entrecroisent avec les deuxièmes éléments filaires de chaine 68. Les deuxièmes éléments filaires de chaine 68 s'étendent continûment sur toute la longueur du premier tissu 28.

Au sein de chaque premier et deuxième tissu 26, 28, les directions de chaine et de trame forment l'une avec l'autre un angle allant de 70° à 90°. En l'espèce, l'angle est sensiblement égal à 90°.

Au sein du pneumatique 20, chaque première et deuxième direction de chaine forme un angle inférieur ou égal à 10° avec la direction circonférentielle XX' du pneumatique 20. Dans le premier mode de réalisation, chaque première et deuxième direction de chaine forme un angle sensiblement nul avec la direction circonférentielle XX' du pneumatique 20.

Chaque élément filaire 64, 66, 68, 70 est un élément filaire textile.

Les éléments filaires 64 sont tous sensiblement identiques. Chaque premier élément filaire 64 de chaine comprend au moins un brin multifilamentaire comprenant plusieurs monofilaments chacun constitué d'un matériau choisi parmi un polyester, un polyamide, une polycétone, un polyuréthane, une fibre naturelle, une fibre minérale, de préférence choisi parmi un polyester, un polyamide, une polycétone, un polyuréthane et un assemblage de ces matériaux. Chaque premier élément filaire de chaine comprend un unique brin multifilamentaire. En l'espèce, chaque premier élément filaire comprend un unique brin multifilamentaire en élasthanne présentant un titre égal à 128 tex et un module égal à 11 cN/tex..

Les éléments filaires 66, 68, 70 sont tous sensiblement identiques, ici réalisés en polyéthylène téréphtalate (PET). En l'espèce, chaque élément filaire 66, 68, 70 est un élément filaire filé présentant une masse linéique égale à 170 tex et une ténacité égale à 66 cN/tex.

Chaque élément filaire porteur 32 s'étend alternativement du premier tissu 26 vers le deuxième tissu 28 et du deuxième tissu 28 vers le premier tissu 26 lorsqu'on se déplace le long de l'élément filaire porteur 32. Chaque élément filaire porteur 32 est un élément filaire porteur textile, ici réalisé en polyéthylène téréphtalate (PET). En l'espèce, chaque élément porteur 32 est un élément filaire filé présentant une masse linéique égale à 55 tex et une ténacité égale à 54 cN/tex.

Chaque élément filaire porteur 32 comprend une portion filaire porteuse 74 s'étendant entre les premier et deuxième tissus 26, 28, notamment entre les faces internes 42 et 46. Chaque élément filaire porteur 32 comprend des première et deuxième portions filaires d'ancrage 76, 78 de l'élément filaire porteur 32 respectivement dans le premier tissu 26 et le deuxième tissu 28. Chaque première et deuxième portion filaire d'ancrage 76, 78 prolonge la portion porteuse 74 respectivement dans chaque premier tissu 26 et deuxième tissu 28. Chaque première et deuxième portion filaire d'ancrage 76, 78 est entrelacée respectivement avec chaque premier tissu 26 et deuxième tissu 28. Chaque première et deuxième portion filaire d'ancrage 76, 78 est enroulée au moins en partie autour respectivement d'au moins un premier élément filaire 64, 66 du premier tissu 26 et d'au moins un deuxième élément filaire 68, 70 du deuxième tissu 28. Ainsi, chaque portion filaire d'ancrage 76, 78 relie deux portions filaires porteuses 74 entre elles et chaque portion filaire porteuse 74 relie deux portion filaire d'ancrage 76, 78 entre elles.

En l'espèce, chaque première portion filaire d'ancrage 76 est enroulée au moins en partie autour d'au moins un premier élément filaire de trame 66 du premier tissu 26 et ici, de préférence, autour d'au moins deux premiers éléments filaire de trame 66 adjacents selon la première direction générale G1. De façon analogue, chaque deuxième portion filaire d'ancrage 78 est enroulée au moins en partie autour d'au moins un deuxième élément filaire de trame 68 du deuxième tissu 28, de préférence autour d'au moins deux deuxièmes éléments filaire de trame 66 adjacents selon la deuxième direction générale G2.

Chaque première et deuxième portion filaire d'ancrage 76, 78 s'étend selon une direction sensiblement parallèle à respectivement la première et deuxième direction générale G1, G2.

Chaque première portion filaire d'ancrage 76 passe alternativement de la face 41 à la face 42 entre deux premiers éléments filaires de trame 66 adjacents autour desquels la première portion filaire d'ancrage 76 s'enroule. De façon analogue, chaque deuxième portion filaire d'ancrage 78 passe alternativement de la face 46 à la face 49 entre deux deuxièmes éléments filaires de trame 68 adjacents autour desquels la deuxième portion filaire d'ancrage 78 s'enroule.

En référence aux figures 5 et 9, le premier tissu 26 comprend des zones droites transversales Z1 d'un premier groupe de zones droites transversales, chaque zone droite transversale Z1 présentant une longueur au repos Ld1 selon la première direction générale G1 et s'étendant sur toute la largeur du premier tissu 26. Cette longueur Ld1 est la même pour toutes les zones droites transversales Z1 ici égale à 7,9 mm. Toutes les zones droites transversales Z1 du premier groupe de zones droites transversales sont identiques.

Le premier tissu 26 comprend également des zones droites transversales Z2 d'un deuxième groupe de zones droites transversales, chaque zone droite transversale Z2 présentant une longueur au repos Ld2 selon la première direction générale G1 et s'étendant sur toute la largeur du premier tissu 26. Cette longueur Ld2 est la même pour toutes les zones droites transversales Z2 est ici égale à 5,8 mm. Toutes les zones droites transversales Z2 du deuxième groupe de zones droites transversales sont identiques.

Chaque zone droite transversale Z1 du premier groupe de zones droites transversales alterne, selon la première direction générale ou selon la direction circonférentielle XX', avec une zone droite transversale Z2 du deuxième groupe de zones droites transversales.

Lorsque le premier tissu est au repos comme cela est représenté sur la figure 9, la somme des longueurs au repos Ld1 et Ld2 de toutes les zones droites transversales selon la première direction générale G1 est sensiblement égale à L. En l'espèce, pour une longueur L de l'assemblage 24 et donc une longueur L du premier tissu L=1692 mm présentant une largeur l=220 mm, la somme SLd1 des longueurs au repos Ld1 des zones droites transversales Z1 est égale à 975 mm et la somme des longueurs au repos Ld2 des zones droites transversales Z2 est égale à 717 mm. Le premier tissu comprend ainsi 123 zones droites transversales Z1 et Z2 entières ainsi qu'une zone droite transversale Z2 incomplète.

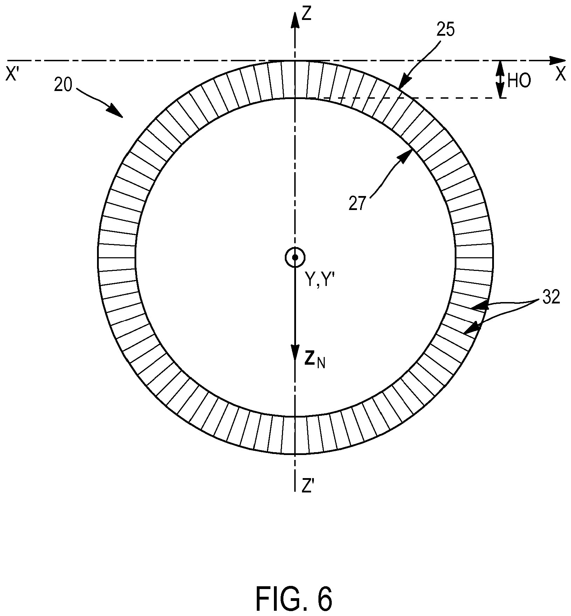

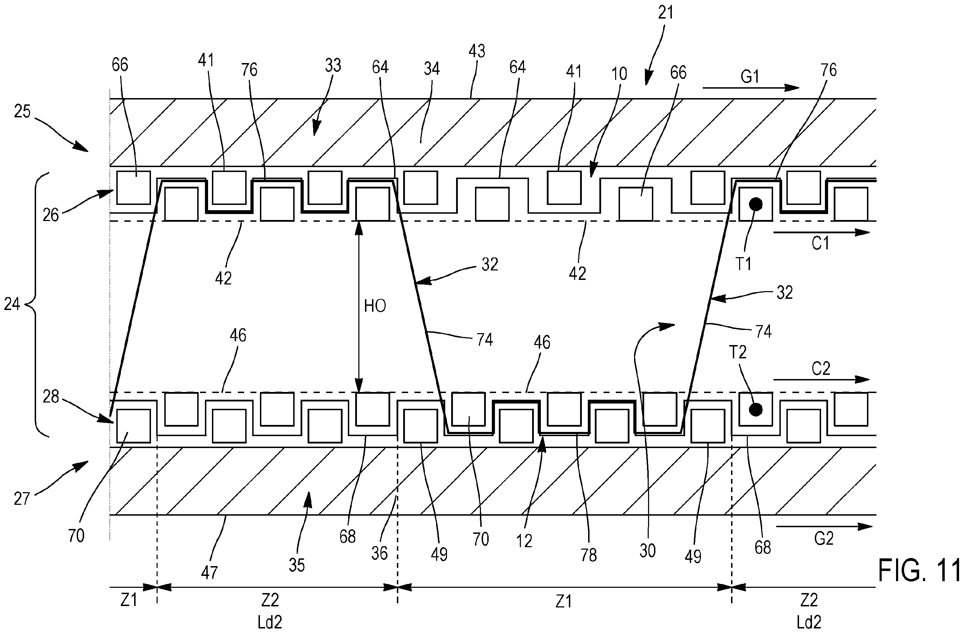

En référence aux figures 6 et 11, la face interne 42 du premier tissu 26 et la face interne 46 du deuxième tissu 28 sont distantes d'une distance droite H0 lorsque chaque portion filaire porteuse 74 est au repos. Ici, H0=47 mm.

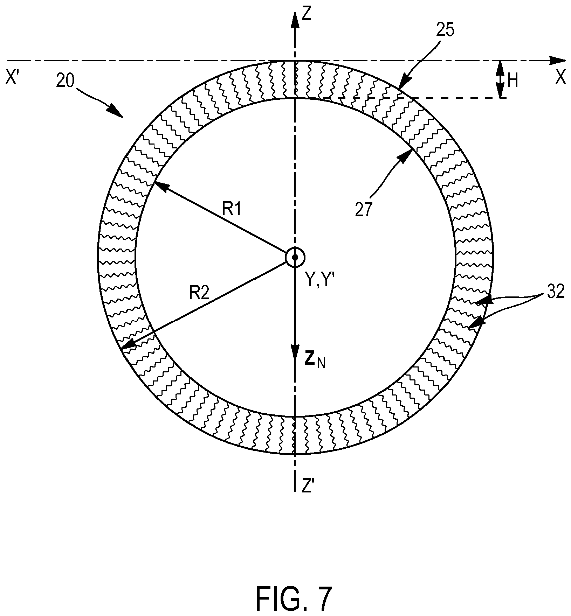

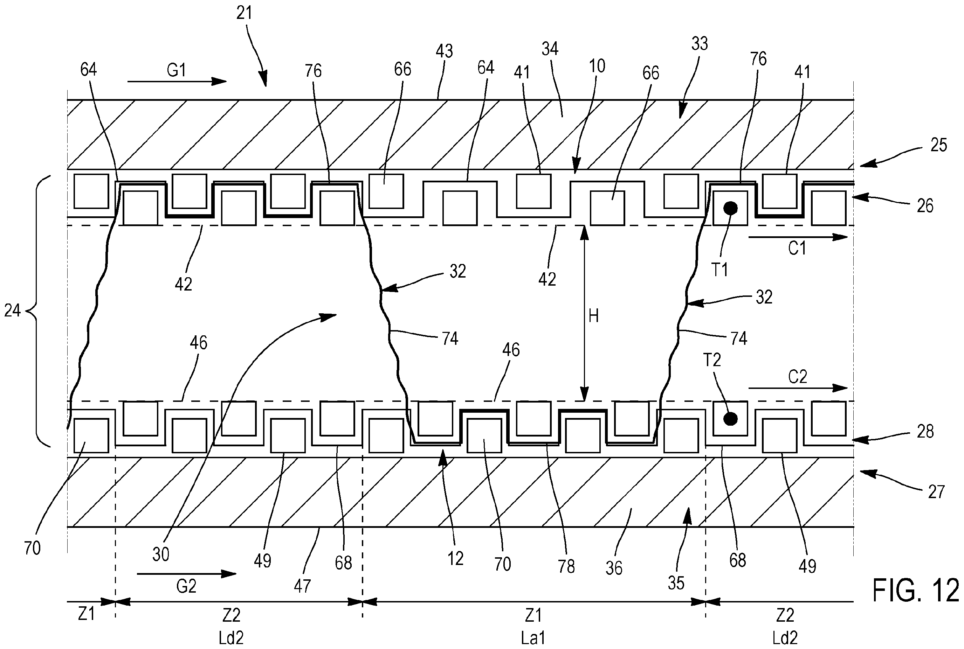

En référence aux figures 7 et 12 représentant un assemblage intégré dans le pneumatique 20 représenté à la figure 7, la face interne 42 du premier tissu 26 et la face interne 46 du deuxième tissu 28 sont distantes d'une distance droite moyenne H ici égale à 45 mm. Dans le pneumatique 20, H représente également la H la hauteur radiale moyenne de l'espace annulaire intérieur 52 en l'absence de charge appliquée au pneumatique 20 et en l'absence de pression dans le pneumatique 20.

En référence à la figure 7 sur laquelle le pneumatique 20 est représenté en l'absence de charge appliquée et en l'absence de pression, la première structure de révolution radialement extérieure 25 a un rayon moyen R1 égal à 313 mm et la deuxième structure de révolution radialement intérieure 27 a un rayon moyen R2 égal à 268 mm.

H et H0 sont telles que H0 x K ≤ H avec K=0,50. Avantageusement K=0,75, de préférence de K=0,80 et plus préférentiellement ici K=0,90. De plus, on a préférentiellement ici H < H0. En effet, ici H/H0=45/47=0,96.

On a représenté sur la figure 8 une portion filaire porteuse 74 d'un élément filaire porteur 32. La portion filaire porteuse 74 présente une section moyenne $S_P$ circulaire, définie par une plus petite dimension caractéristique E et une plus grande dimension caractéristique D toutes deux égales, dans l'exemple présenté, au diamètre du cercle, et caractérisée par son rapport de forme R égal à D/E, donc égal à 1 dans le cas présent. En outre, la plus petite dimension caractéristique E de la section moyenne $S_P$ de la portion filaire porteuse 74, c'est-à-dire, dans le cas présent, son diamètre, est au plus égale à 0.02 fois la hauteur radiale moyenne H de l'espace annulaire intérieur 52. La portion porteuse 74 a une longueur au repos $L_P$ au moins égale à la hauteur moyenne H de l'espace annulaire intérieur 52. Les portions filaires d'ancrage 76, 78 présentent la même section moyenne $S_P$ circulaire et la même plus petite dimension caractéristique E de la section moyenne $S_P$.

Chaque élément filaire porteur 32 présente une section moyenne $S_P$ égale à $7*10^{-8}$ m² et une contrainte à rupture $F_r/S_P$ égale à 470 MPa. La densité surfacique moyenne D des portions filaires porteuses 74 par unité de surface de la première structure de révolution 25 et par unité de surface de la deuxième structure de révolution 27 est égale à 85000 fils/m². La force à rupture Fr est ici égale à 33 N.

Le premier tissu 26 est agencé de sorte que, pour toute contrainte non nulle, exprimée en N, inférieure ou égale à (PO x (L/2π + H) x l) / 2 exercée sur le premier tissu 26 selon la première direction générale G1, le premier tissu 26 présente un allongement non nul selon la première direction générale G1 avec l étant la largeur du premier tissu 26 exprimée en m et P0=100000. De plus, le premier tissu 26 est agencé de sorte que, pour tout allongement du premier tissu 26 selon la première direction générale G1 inférieur ou égal à (2π x H) / L, le premier tissu 26 développe une force, exprimée en N, selon la première direction générale G1 inférieure ou égale à (PO x (L/2π + H) x l) / 2. Ici, pour tout allongement inférieur ou égal à 2π x H / L= 2π x 0,045 / 1,692 = 16,7 %, la force maximale développée par le premier tissu 26 selon la première direction générale G1 est égale à 47 N, valeur bien inférieure à (PO x (L/2π + H) x l) / 2= 100000 x ((1,692/2π + 0,045)) x 0,22=3460 N. Cette valeur de contrainte, ici 47 N, représente la contrainte en dessous de laquelle le premier tissu s'allonge sans rompre selon la première direction générale G1 pour permettre la conformation.

En revenant aux figures 5 et 9, chaque zone droite transversale Z1 est dépourvue de toute première portion filaire d'ancrage 76 sur toute la largeur l du premier tissu 26. Ainsi, chaque zone droite transversale Z1 est agencée de façon à, pour toute contrainte non nulle inférieure ou égale à (PO x (L/2π + H) x l) / 2 exercée sur le premier tissu 26 selon la première direction générale G1, et pour tout allongement du premier tissu 26 selon la première direction générale G1 inférieur ou égal à (2π x H) / L, permettre un allongement sans rupture de chaque zone droite transversale Z1 selon la première direction générale G1. En l'espèce, chaque zone droite transversale Z1 est agencée de façon à permettre, dans chaque zone droite transversale Z1, d'une part un écartement des éléments filaire de trame 66 les uns par rapport aux autres selon la première direction générale G1, d'autre part un allongement sans rupture de chaque premier éléments filaire de chaine 64 selon la première direction générale G1, et ce, pour toute contrainte non nulle inférieure ou égale à (PO x (L/2π + H) x l) / 2 exercée sur le premier tissu 26 selon la première direction générale G1 et pour tout allongement du premier tissu 26 selon la première direction générale G1 inférieur ou égal à (2π x H) / L. Ainsi, chaque zone droite transversale Z1 est dite déformable.

Contrairement aux zones droites transversales Z1, chaque zone droite transversale Z2 comprend au moins une première portion filaire d'ancrage 76 sur la largeur du premier tissu 26. Ainsi, chaque zone droite transversale Z2 est agencée de façon à, pour toute contrainte non nulle inférieure ou égale à (PO x (L/2π + H) x l) / 2 exercée sur le premier tissu 26 selon la première direction générale G1, et pour tout allongement du premier tissu 26 selon la première direction générale G1 inférieur ou égal à (2π x H) / L, empêcher un allongement de chaque zone droite transversale Z2 selon la première direction générale G1 et une rupture de chaque zone droite transversale Z2. En l'espèce, chaque zone droite transversale Z2 est agencée de façon à empêcher, dans chaque zone droite transversale Z2, d'une part un écartement des premiers éléments filaire de trame 66 les uns par rapport aux autres selon la première direction générale, d'autre part un allongement de chaque premier élément filaire de chaine 64 selon la première direction générale G1, et enfin une rupture de chaque premier élément filaire de chaine 64 et ce, pour toute contrainte non nulle inférieure ou égale à (PO x (L/2π + H) x l) / 2 exercée sur le premier tissu 26 selon la première direction générale G1 et pour tout allongement du premier tissu 26 selon la première direction générale G1 inférieur ou égal à (2π x H) / L. Ainsi, par opposition à chaque zone droite transversale Z1, chaque zone droite transversale Z2 est non rompable et dans ce mode de réalisation, indéformable. En variante, et comme décrit à la fin de la présente demande, on pourra tout à fait envisager un premier tissu 26 dans lequel chaque zone droite transversale Z2 est non rompable et déformable.

Chaque zone droite transversale Z2 est également agencée de façon à empêcher d'une part un allongement de chaque première portion filaire d'ancrage 76 selon la première direction générale G1 et, d'autre part, une rupture de chaque première portion filaire d'ancrage 76, et ce, sous une contrainte au plus égale à (PO x (L/2π + H) x l) / 2 exercée sur le premier tissu 26 selon la première direction générale G1 et pour tout allongement du premier tissu 26 selon la première direction générale G1 inférieur ou égal à (2π x H) / L.

Comme illustré sur la figure 5, les premiers éléments filaire de trame 66 de chaque zone droite transversale Z1 présentent un écartement deux à deux selon la direction circonférentielle XX' supérieur à l'écartement deux à deux selon la direction circonférentielle XX' entre les premiers éléments filaire de trame 66 de chaque zone droite transversale Z2.

Dans le mode de réalisation illustré, on a (PO x (L/2π + H) x l) / 2=3460 N. Cette valeur de contrainte représente la contrainte en dessous de laquelle chaque zone droite transversale Z1 dite déformable peut s'allonger selon la première direction générale G1 sans rompre et en dessous de laquelle chaque zone droite transversale Z2 dite indéformable et non rompable présente un allongement sensiblement nul selon la première direction générale G1 et est non rompue.

En référence à la figure 9, le premier tissu 26 est agencé de sorte que, pour une longueur au repos L du premier tissu 26 selon la première direction générale

G1, exprimée en m, l'allongement à force maximale Art de la première structure 10 de premiers éléments filaires 64, 66 selon la première direction générale G1, ici l'allongement à force maximale Art du premier tissu 26 selon la première direction générale G1 vérifie Art > (2π x H) / L. Dans le mode de réalisation représenté Art=289 % qui est bien supérieur à 16,7 % qui est l'allongement selon la première direction générale G1 que présente le premier tissu 26 une fois intégré dans le pneumatique 20 conformé.

Ainsi, comme représenté sur la figure 5, la première structure 10 de premiers éléments filaires 64, 66 présente, au moins sur une partie de sa longueur, un allongement non nul selon la direction circonférentielle XX' du pneumatique 20 et est non rompu.

Au sein du pneumatique 20, chaque zone droite transversale Z1 présente un allongement non nul selon la direction circonférentielle XX' et est non rompue alors que chaque zone droite transversale Z2 présente un allongement sensiblement nul selon la direction circonférentielle et est non rompue.

En l'espèce, au sein du pneumatique 20, chaque premier élément filaire 64 de chaine présente, au moins sur une partie de sa longueur, un allongement non nul selon la première direction de chaine C1 et est non rompu. Plus précisément, dans chaque zone droite transversale Z1 dite déformable, chaque premier élément filaire 64 de chaine présente un allongement non nul selon la première direction de chaine C1 et est non rompu alors que dans chaque zone droite transversale Z2 dite indéformable et non rompable, chaque premier élément filaire 64 de chaine présente un allongement sensiblement nul selon la première direction de chaine et est non rompu. Par ailleurs, dans chaque zone droite transversale Z2 dite indéformable et non rompable, chaque portion filaire d'ancrage 76 présente un allongement sensiblement nul selon la direction circonférentielle XX' et est non rompu.

En l'espèce et en revenant à la figure 9, chaque zone droite transversale Z1 dite déformable devant compenser l'allongement sensiblement nul de chaque zone droite transversale Z2 dite indéformable et non rompable, l'allongement à force maximale de chaque zone droites transversales Z1 du premier groupe de zone(s) droite(s) transversale(s) selon la première direction générale vérifie Art1 > (2π x H) / SLd1 avec SLd1 étant la somme des longueurs au repos de toutes les zones droites transversales Z1 dites déformables.

Ici, chaque zone droite transversale Z1 dite déformable présente une longueur allongée La1 sensiblement égale à ((2π x H) + SLd1)/N avec N étant le nombre de zones droite transversale Z1 dite déformables sur la circonférence du pneumatique et par enroulement circonférentiel du premier tissu autour de l'axe principal YY' de révolution du pneumatique 20, ici égale à 10,22 mm. La somme des longueurs allongées La1 de chaque zone droite transversale Z1 selon la première direction générale est sensiblement égale à ((2π x H) + SLd1)= 1257 mm.

Chaque zone droite transversale Z1 dite déformable présente donc un allongement selon la première direction générale G1 égal à 29 %, bien supérieur à l'allongement à force maximale Art1 mesuré, selon la norme EN ISO 13934-1 de juillet 2013, à 500 %. L'allongement à rupture Arc de chaque premier élément filaire 64 de chaine vérifie Arc > (2π x H) / SLd1. L'allongement à rupture Arc mesuré selon la norme ASTM D885/D885 MA de janvier 2010 est ici égal à 500 %, valeur bien supérieure à 29 %.

De plus, pour tout allongement de chaque zone droite transversale Z1 dite déformable selon la première direction générale G1 inférieur ou égal à (2π x H) / SLd1, chaque zone droite transversale Z1 dite déformable développe une force, exprimée en N, selon la première direction générale inférieure ou égale à (PO x (L/2π + H) x I) / 2=3460 N.

## PROCEDE SELON UN PREMIER MODE DE REALISATION DE L'INVENTION

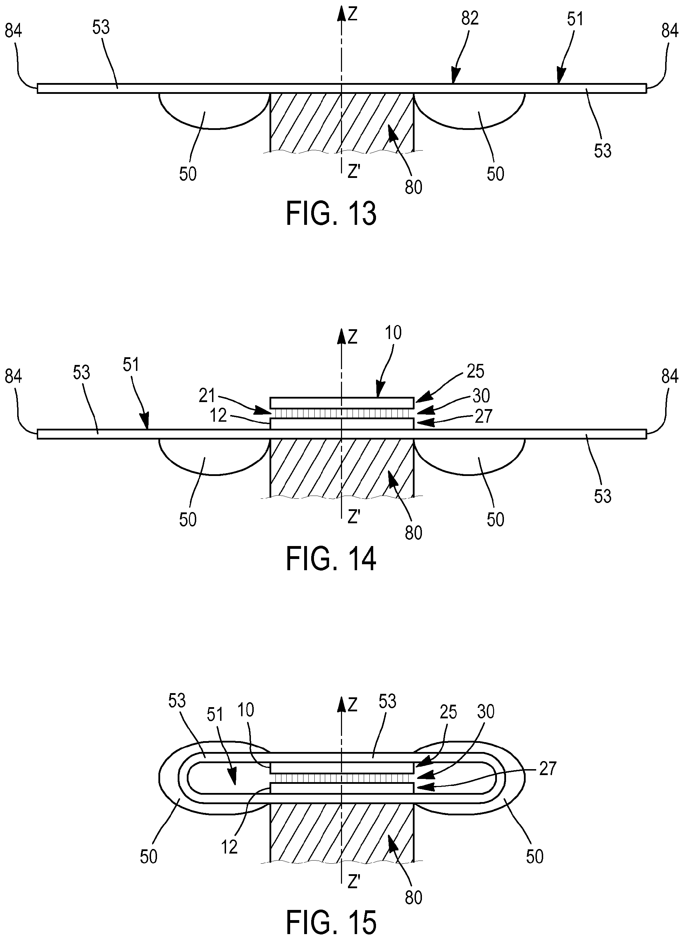

On va maintenant décrire, en référence aux figures 13 à 19, un procédé selon un premier mode de réalisation de l'invention permettant de fabriquer le pneumatique 20 selon le premier mode de réalisation décrit ci-dessus.

Dans une étape de préparation de l'assemblage imprégné 21, on maintien la face interne 42 du premier tissu 26 au contact de la face interne 46 du deuxième tissu 28. Puis, dans une étape d'imprégnation des premier et deuxième tissus 26, 28, on imprègne chaque premier et deuxième tissu 26, 28 respectivement avec les première et deuxième compositions polymériques 34, 36 de façon à former, lors d'une étape d'enroulage de l'assemblage 21 (décrite ci-après) la première structure de révolution 25 et la deuxième structure de révolution 27.

On obtient alors l'assemblage imprégné 21 représenté sur la figure 10. Sur cette figure 10, chaque portion filaire porteuse 74 est dans un état replié ou fléchi.

Comme illustré sur les figures 13 à 19, on dispose d'un cylindre de confection 80 dont le diamètre est égal à celui du moyen de montage sur lequel est destiné à être monté le pneumatique 20. Le cylindre de confection 80 est sensiblement de révolution autour d'un axe de révolution coaxial à l'axe de révolution YY' du pneumatique 20.

Tout d'abord, comme illustré sur la figure 13, on pose sur le cylindre de confection 80 un ensemble 82 comprenant la structure de révolution de carcasse 51 et les flancs 50.

Puis, comme illustré sur la figure 14, on enroule l'assemblage imprégné 21 de la figure 11 de sorte que la première direction de chaine C1 et la direction circonférentielle du cylindre de confection 80, ici sensiblement confondue avec la direction circonférentielle XX' du pneumatique 20, forment un angle inférieur ou égal à 10° et, dans ce premier mode de réalisation, un angle sensiblement nul. On agence l'assemblage imprégné 21 radialement à l'extérieur de l'ensemble préalablement posé.

Dans le premier mode de réalisation, on enroule l'assemblage imprégné 21 circonférentiellement sur au plus un tour complet autour de l'axe principal de façon à ce que la première structure de révolution 25 forme un enroulement cylindrique axialement continu de l'assemblage imprégné 21 entre les deux flancs du pneumatique 20. L'enroulement cylindrique axialement continu présente une largeur axiale supérieure ou égale à 50%, de préférence à 75% à la largeur axiale de la bande de roulement 58. Dans ce mode de réalisation, l'assemblage imprégné 21 est déposé selon un seul tour d'enroulement cylindrique. On parle alors de pose en pleine largeur, puisque la largeur axiale visée l'assemblage imprégné 21 est obtenue en un seul tour d'enroulement cylindrique. L'avantage d'une pose en pleine largeur est la productivité de fabrication. En revanche, une pose en pleine largeur implique nécessairement l'existence d'au moins une zone de recouvrement, ou soudure, selon la direction circonférentielle, entre les extrémités circonférentielles l'assemblage imprégné 21, en particulier en fin d'enroulement.

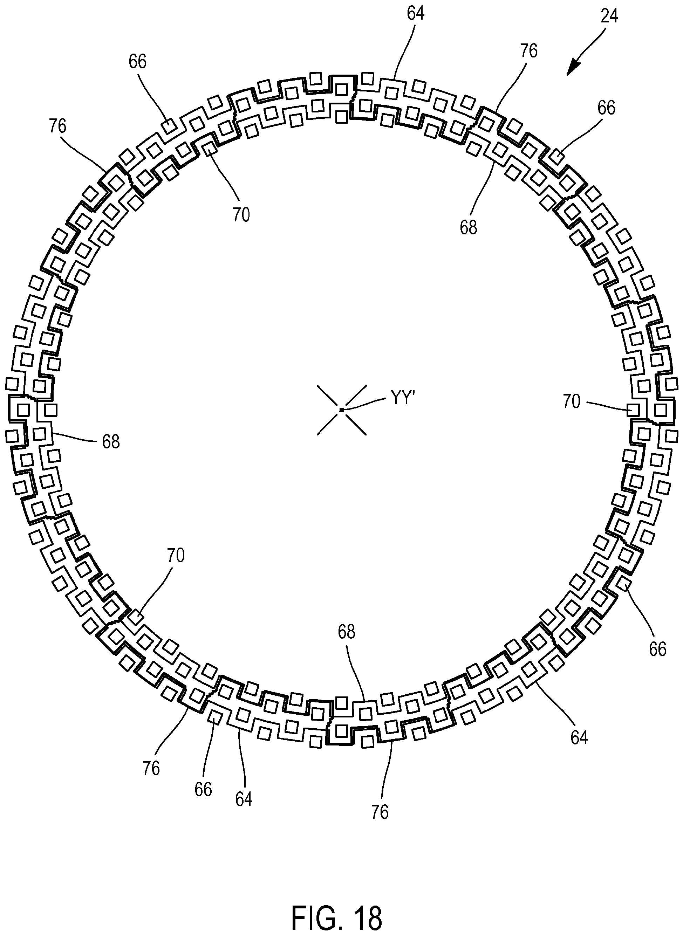

Puis, comme illustré sur la figure 15, préalablement à l'étape de formation de l'espace annulaire intérieur 52, dans le mode de réalisation décrit, on relie entre elles chaque extrémité axiale 44 de la première structure de révolution 25 et chaque extrémité axiale 48 de la deuxième structure de révolution 27 par un des flancs 50 de façon à constituer l'espace annulaire intérieur 52. On dispose également la structure de révolution de carcasse 51 radialement à l'extérieur de la première structure de révolution 25 en rabattant les deux extrémités axiales 84 de l'ensemble 82. On relie alors continûment chaque extrémité axiale 48 de la deuxième structure de révolution 27 par la structure de révolution de carcasse 51 qui s'étend radialement au travers de chaque flanc 50 et axialement sur toute la largeur axiale de la première structure de révolution 25. On obtient alors l'assemblage selon l'invention représenté sur la figure 18.

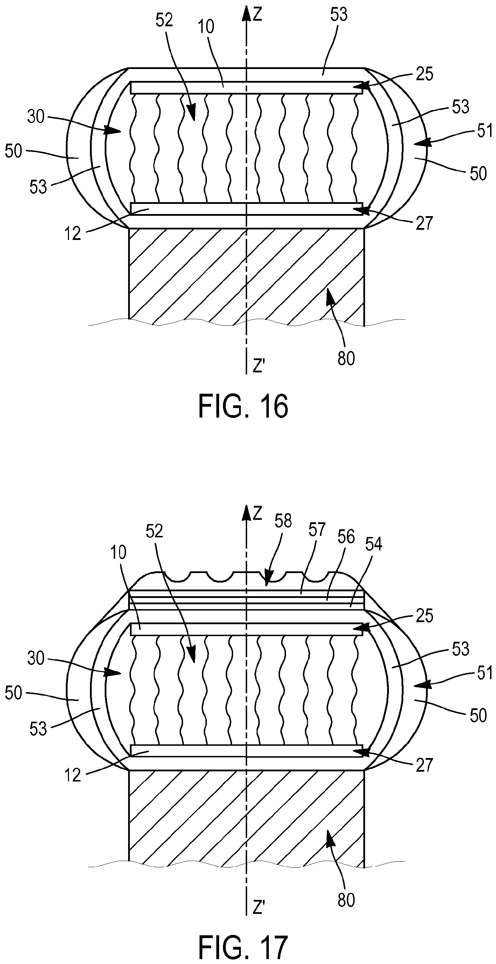

Puis, en référence à la figure 16, on écarte radialement par rapport à l'axe de révolution du pneumatique 20 le premier tissu 26 de façon à former l'espace annulaire intérieur 52 délimité radialement par la face interne 42 du premier tissu 26 et par la face interne 46 du deuxième tissu 28 et distante l'une de l'autre d'une distance radiale moyenne H telle que H0 x K ≤ H avec K=0,50 et de façon à ce que la première structure 10 de premiers éléments filaires 64, 66 s'allonge selon la direction circonférentielle XX' du cylindre de confection 80 sur au moins une partie de sa longueur sans rompre. Ici, on allonge sans rompre chaque zone droite transversale Z1 selon la direction circonférentielle XX' du cylindre de confection 80. En l'espèce, chaque premier élément filaire 64 de chaine s'allonge selon la première direction de chaine C1 sur au moins une partie de sa longueur sans rompre et plus précisément on allonge sans rompre chaque premier élément filaire 64 de chaine selon la première direction de chaine de chaque zone droite transversale Z1 dite déformable.

On n'allonge selon la direction circonférentielle XX' du cylindre de confection 80 et on ne rompt sensiblement aucune zone droite transversale Z2 du deuxième groupe de zone(s) droite(s) transversale(s). Ici, on n'allonge selon la première direction de chaine et on ne rompt sensiblement aucun premier élément filaire 64 de chaine selon la première direction de chaine de chaque zone droite transversale Z2 dite indéformable et non rompable.

Par ailleurs, on n'allonge selon la direction circonférentielle XX' du cylindre de confection 80 et on ne rompt sensiblement aucune portion filaire d'ancrage 76 de chaque zone droite transversale Z2 dite indéformable et non rompable.

Lors de l'étape d'écartement du premier tissu 26 par rapport à l'axe de révolution YY', on écarte deux à deux selon la direction circonférentielle XX' les premiers éléments filaires de trame 66 de chaque zone droite transversale Z1 et on maintient l'écart deux à deux selon la direction circonférentielle XX' les premiers éléments filaires de trame 66 de chaque zone droite transversale Z2.

On forme l'espace annulaire intérieur 52 par déploiement de l'espace annulaire intérieur 52 par pressurisation par un gaz de gonflage de l'espace annulaire intérieur 52, par exemple de l'air.

Lors de l'étape d'écartement du premier tissu par rapport à l'axe de révolution, on exerce, selon la direction circonférentielle XX', sur le premier tissu 26 une force égale à 2076 N inférieure à la force maximale permettant de rompre le premier tissu 26 égale à 3296 N et, inférieure ou égale à (PO x (L/2$\pi$ + H) x I) / 2=3460 N.

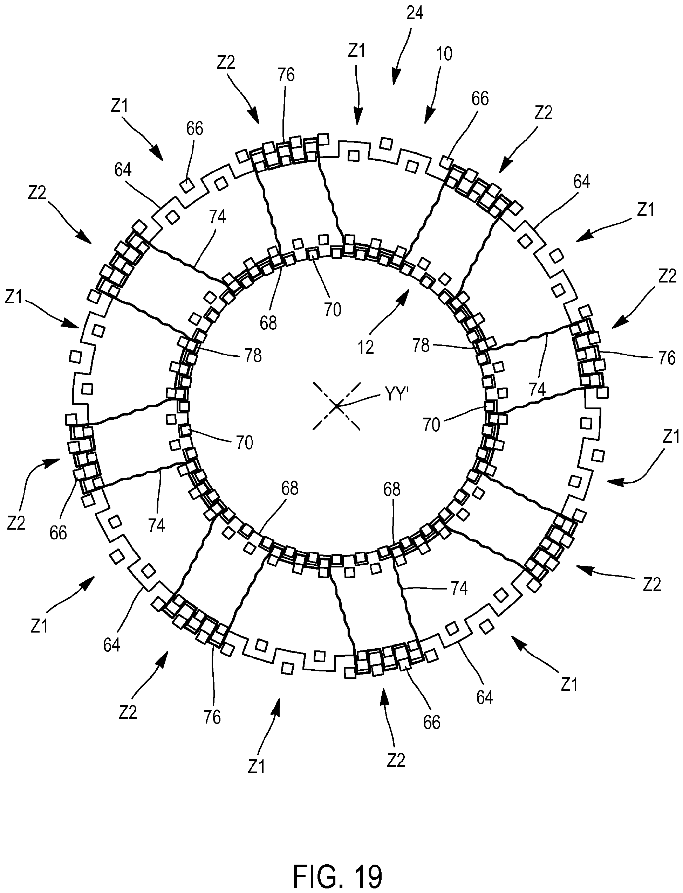

Lors de l'écartement radial du premier tissu 26 par rapport à l'axe de révolution YY' du pneumatique 20, généralement appelé conformation, le diamètre du premier tissu 26 et de la première structure de révolution 25 du pneumatique 20, augmente alors que le diamètre de la deuxième structure de révolution radialement 27 du pneumatique 20, et donc du deuxième tissu 28, reste sensiblement constant. La distance radiale par rapport à l'axe de révolution YY' du pneumatique 20 du premier tissu 26 augmente de façon significative au cours de la conformation ainsi que sa longueur circonférentielle, augmentation absorbée par l'allongement du premier tissu 26 conformément à l'invention. La distance radiale par rapport à l'axe de révolution YY' du pneumatique 20 du deuxième tissu 28 reste sensiblement constante au cours de la conformation et sa longueur circonférentielle ne varie sensiblement pas. On obtient alors l'assemblage selon l'invention représenté sur la figure 19.

Puis, après l'étape de formation de l'espace annulaire intérieur 52, on enroule simultanément radialement à l'extérieur du premier tissu 25 et de la structure de révolution de carcasse 51 la structure de révolution de sommet 55 et la bande de roulement 58 préalablement assemblées ensemble. On obtient alors le pneumatique 20 illustré sur la figure 17.

Ensuite, on dépressurise l'espace annulaire intérieur 52 jusqu'à la pression atmosphérique ambiante. On obtient alors le pneumatique 20 à l'état cru schématisé sur la figure 14 comprenant l'assemblage imprégné illustré sur la figure 12.

Enfin, on réticule le pneumatique 20, par exemple par vulcanisation, afin d'obtenir le pneumatique 20 à l'état cuit.

## ENSEMBLE MONTE, PNEUMATIQUE, ASSEMBLAGE IMPREGNE, ASSEMBLAGE ET PROCEDE SELON UN DEUXIEME MODE DE REALISATION DE L'INVENTION

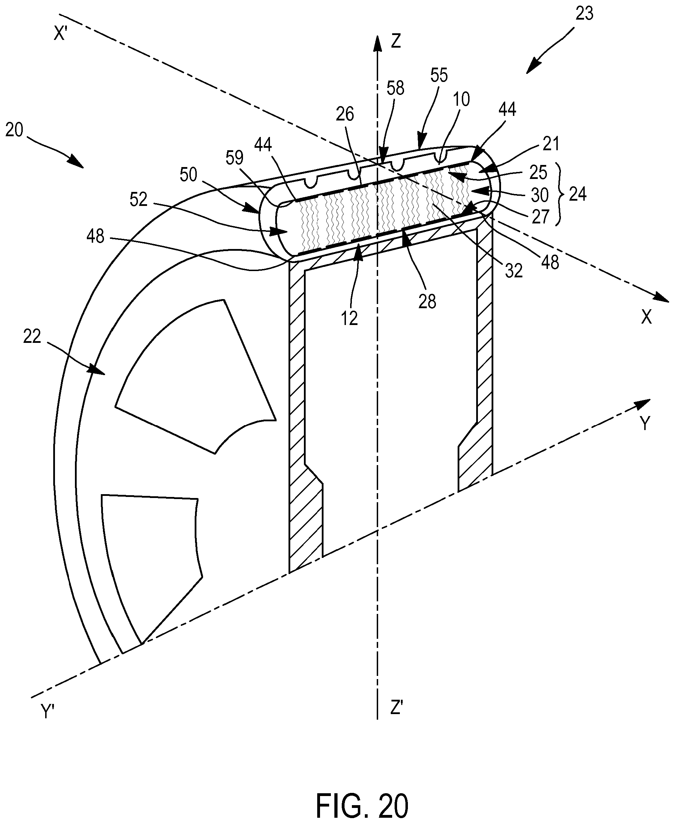

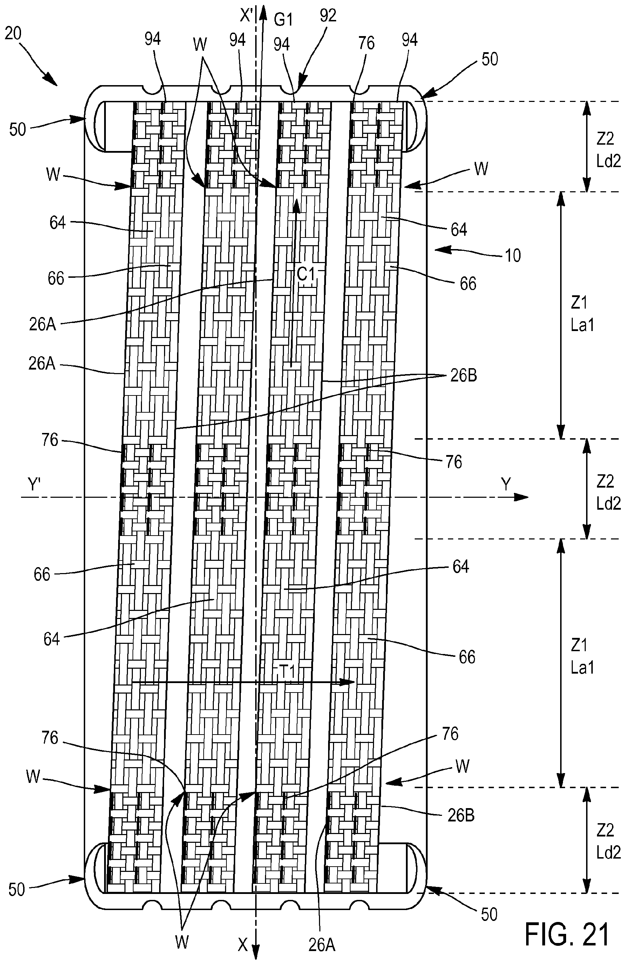

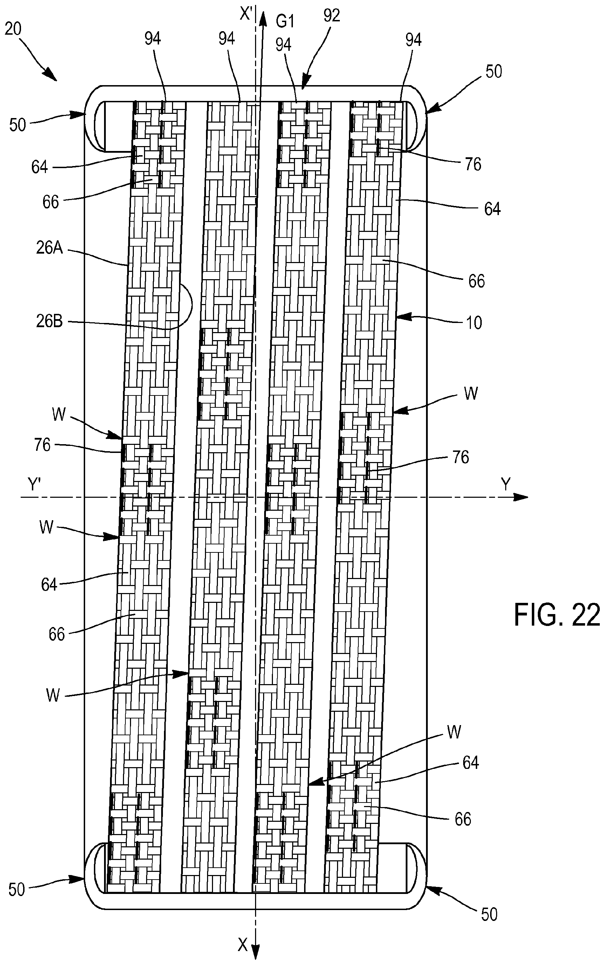

On a représenté sur les figures 20, 21 et 22 un pneumatique 20 selon un deuxième mode de réalisation selon des première et deuxième variantes représentées respectivement sur les figures 21 et 22. Les éléments analogues à ceux représentées sur les figures précédentes sont désignés par des références identiques.

A la différence du pneumatique selon le premier mode de réalisation, dans le pneumatique 20 selon le deuxième mode de réalisation, la première direction de chaine et la direction circonférentielle XX' du pneumatique 20 forment un angle sensiblement non nul inférieur à 10°, de préférence un angle sensiblement non nul inférieur ou égal à 5° et ici égal à 5°.

L'assemblage 24 s'étend circonférentiellement sur plusieurs tours complets autour de l'axe principal de façon à ce que la première structure de révolution 25 forme un enroulement hélicoïdal axialement discontinu de l'assemblage 24 entre les deux flancs 50 du pneumatique 20.

Dans ce mode de réalisation, l'assemblage imprégné 21 est enroulé autour de l'axe du pneumatique 20 de façon à former l'enroulement hélicoïdal d'une bandelette d'assemblage 92, les portions axiales 94 de la bandelette 92 étant axialement juxtaposées. Par bandelette, on entend un assemblage imprégné 21 ayant une largeur axiale limitée, au plus égale à 30% de la largeur axiale de la bande de roulement 58, et de grande longueur au moins égale à deux fois la circonférence de la bande de roulement 58, de façon à ce que la bandelette à poser puisse être stockée sous forme de rouleau. Une telle bandelette est ainsi déroulée selon une hélice, ayant pour axe de révolution l'axe de révolution du pneumatique 20. Le nombre de tours d'enroulement hélicoïdal de la bandelette est déterminé par la largeur axiale totale de l'enroulement hélicoïdal visée et par la densité d'éléments porteurs 32. La pose de la bandelette peut être jointive, c'est-dire que les portions de bandelette sont en contact deux à deux par leurs bords axiaux, ou non jointives, c'est-à-dire que les bords axiaux des portions axiales 94 de bandelette sont espacées d'un espace sensiblement non nul. L'avantage d'une pose en bandelette est l'absence de zones de recouvrement, ou soudures, selon la direction circonférentielle, entre des portions axiales de bandelette, en fin d'enroulement.

Dans une conception de type bandelette, la surface de liaison $S_E$ de la face externe 43 de la première structure de révolution 25 avec la face radialement intérieure 59 de la structure de révolution de sommet 55 est la somme des surfaces de liaison des portions axiales 94 de bandelette 92 juxtaposés.

L'assemblage imprégné 21 est enroulé hélicoïdalement autour de l'axe de révolution du pneumatique 20 de sorte que, avant conformation, la première direction de chaine et la direction circonférentielle du cylindre de confection forment un angle sensiblement non nul inférieur à 10°, de préférence un angle sensiblement non nul inférieur à 5°.

Dans la première variante de ce deuxième mode de réalisation représentée sur la figure 21, on enroule l'assemblage imprégné 21 de sorte que chaque extrémité W circonférentielle de chaque zone droite transversale Z1 d'un tour est axialement sensiblement alignée avec chaque extrémité W circonférentielle de chaque zone droite transversale Z1 de chaque tour adjacent. Ainsi, tout comme dans le premier mode de réalisation, chaque zone droite transversale Z1 dite déformable présente une longueur allongée La1 sensiblement égale à $((2\pi \times H) + SLd1)/N$ avec N étant le nombre de zones droite transversale Z1 dite déformables sur la circonférence du pneumatique et par enroulement circonférentiel du premier tissu autour de l'axe principal YY' de révolution du pneumatique 20, ici égale à 10,22 mm. Chaque zone droite transversale Z1 dite déformable présente donc un allongement selon la première direction générale G1 égal à 29 %.

Dans la deuxième variante de deuxième mode de réalisation représentée sur la figure 22, on enroule l'assemblage imprégné 21 de sorte que chaque extrémité circonférentielle W de chaque zone droite transversale Z1 du premier groupe de zone(s) droite(s) transversale(s) d'un tour se situe entre les prolongements axiaux des deux extrémités circonférentielles W de chaque zone droite transversale Z1 de chaque tour adjacent.

L'invention ne se limite pas aux modes de réalisation décrits ci-dessus, mais est définie par les revendications annexées.

En effet, dans un mode de réalisation non décrit précédemment, on peut mettre en œuvre un procédé avec un assemblage non imprégné, la jante 22 et la structure de révolution de sommet 55 assurant l'étanchéité radiale de l'espace annulaire intérieur 52.

On pourra également envisager d'utiliser des premières structures de premiers éléments filaires permettant la conformation dans les conditions encore plus avantageuses que celles décrites précédemment, et pour lesquels P0=80000, de préférence P0=60000, plus préférentiellement P0=40000.

On pourra également envisager d'exploiter le mode de réalisation dans lequel les zones droites transversales Z2 sont déformables. De telles zones transversales Z2 seraient agencées de façon à permettre un allongement de chaque zone droite transversale Z2 selon la première direction générale G1 au plus égal à 20%, de préférence à 15%, et plus préférentiellement à 10% de l'allongement de chaque zone droite transversale Z1 du premier groupe de zone(s) droite(s) transversale(s) selon la première direction générale G1, par exemple ici de façon à contribuer à hauteur de 3% de l'allongement du premier tissu 26. Chaque zone droite transversale Z1 contribuerait alors à hauteur de 27 % de l'allongement du premier tissu 26. Une telle zone droite transversale Z2 est agencée de façon à permettre un allongement de chaque premier élément filaire de chaine 64 selon la première direction générale G1 dans chaque zone droite transversale Z2 au plus égal à 20%, de préférence à 15%, et plus préférentiellement à 10% de l'allongement de chaque premier élément filaire de chaine 64 selon la première direction générale G1 dans chaque zone droite transversale Z1. En outre, dans ce mode de réalisation, chaque zone droite transversale Z2 est agencée de façon à permettre un allongement de chaque première portion filaire d'ancrage 76 selon la première direction générale G1.

Toujours dans ce mode de réalisation utilisant des zones droites transversales Z2 déformables, le pneumatique 20 est tel que chaque zone droite transversale Z2 présente un allongement selon la direction circonférentielle XX' au plus égal à 20%, de préférence à 15%, et plus préférentiellement à 10%, de l'allongement de chaque zone droite transversale Z1 selon la direction circonférentielle XX' du pneumatique 20, ici 27%. Ainsi, chaque premier élément filaire 64 de chaine de chaque zone droite transversale Z2 présente un allongement selon la direction circonférentielle XX' au plus égal à 20%, de préférence à 15%, et plus préférentiellement à 10% de l'allongement de chaque premier élément filaire de chaine 64 selon la première direction générale G1 dans chaque zone droite transversale Z1. Dans ce mode de réalisation, chaque portion filaire d'ancrage 76 présente un allongement non nul selon la direction circonférentielle XX' du pneumatique 20.

Enfin, toujours dans ce mode de réalisation utilisant des zones droites transversales Z2 déformables, le procédé est tel qu'on allonge selon la direction circonférentielle XX' du cylindre de confection 80 chaque zone droite transversale Z2 au plus de 20%, de préférence de 15%, et plus préférentiellement de 10%, de l'allongement de chaque zone droite transversale Z1 selon la direction circonférentielle XX' du cylindre de confection 80, ici égal à 27 %. Ainsi, on allonge selon la première direction de chaine chaque premier élément filaire 64 de chaine de chaque zone droite transversale Z2 d'au plus 20%, de préférence 15%, et plus préférentiellement 10% de l'allongement de chaque premier élément filaire 64 de chaine de chaque zone droite transversale Z1. Dans ce mode de réalisation, on allonge selon la direction circonférentielle XX' du cylindre de confection 80 chaque première portion filaire d'ancrage 76.

**Revendications**

1. Assemblage (24), qui comprend :

   - une première structure (10) de premiers éléments filaires (64, 66), la première structure (10) de premiers éléments filaires (64, 66) s'étendant selon une première direction générale (G1),
   - un deuxième structure (12) de deuxièmes éléments filaires (68, 70),
   - une structure porteuse (30) comprenant des éléments filaires porteurs (32) reliant la première structure de premiers éléments filaires (64, 66) et la deuxième structure (12) de deuxièmes éléments filaires (68, 70) entre elles, chaque élément filaire porteur (32) comprenant au moins une portion filaire porteuse (74) s'étendant entre la première structure (10) de premiers éléments filaires (64, 66) et la deuxième structure (12) de deuxièmes éléments filaires (68, 70), **caractérisé en ce que** la première structure (10) de premiers éléments filaires (64, 66) étant agencée de sorte que, pour une longueur au repos L de la première structure (10) selon la première direction générale (G1), exprimée en m, l'allongement à force maximale Art de la première structure (10) de premiers éléments filaires (64, 66) selon la première direction générale (G1) vérifie :

   $$Art > (2\pi \times H) / L$$

   dans lequel H0 x K ≤ H avec H0 la distance droite moyenne entre une face interne (42) de la première structure (10) de premiers éléments filaires (64, 66) et une face interne (46) de la deuxième structure (12) de deuxièmes éléments filaires (68, 70) lorsque chaque portion filaire porteuse (74) est au repos, H et H0 étant exprimées en m, et K=0,50.

2. Assemblage (24) selon la revendication précédente, dans lequel la première structure (10) de premiers éléments filaires (64, 66) est un premier tissu (26), le premier tissu (26) comprenant des premiers éléments filaires (64), dits de chaine, sensiblement parallèles entre eux et s'étendant selon une première direction (C1), dite de chaine, sensiblement parallèle à la première direction générale (G1).

3. Assemblage (24) selon l'une quelconque des revendications précédentes, dans lequel la première structure (10) de premiers éléments filaires (64, 66) comprend :

   - au moins une zone droite transversale (Z1) d'un premier groupe de zone(s) droite(s) transversale(s), chaque zone droite transversale (Z1) du premier groupe de zone(s) droite(s) transversale(s) étant agencée de façon à permettre un allongement sans rupture de chaque zone droite transversale (Z1) du premier groupe de zone(s) droite(s) transversale(s) selon la première direction générale (G1),
   - au moins une zone droite transversale (Z2) d'un deuxième groupe de zone (s) droite(s) transversale(s), chaque zone droite transversale (Z2) du deuxième groupe de zone(s) droite(s) transversale(s) étant agencée de façon à empêcher une rupture de chaque zone droite transversale (Z2) du deuxième groupe de zone(s) droite(s) transversale(s).

chaque zone droite transversale (Z1, Z2) de chaque premier et deuxième groupe de zone(s) droite(s) transversale(s) s'étendant sur toute la largeur de la première structure (10) de premiers éléments filaires (64, 66).

4. Assemblage (24) selon la revendication 3, dans lequel, le premier tissu (26) comprenant des premiers éléments filaires (66), dits de trame, sensiblement parallèles entre eux et s'entrecroisant avec les premiers éléments filaires de chaine (64), chaque zone droite transversale (Z1) du premier groupe de zone(s) droite(s) transversale(s) est agencée de façon à permettre un écartement des éléments filaire de trame (66) les uns par rapport aux autres selon la première direction générale (G1) dans chaque zone droite transversale (Z1) du premier groupe de zone(s) droite(s) transversale(s).

5. Assemblage (24) selon l'une quelconque des revendications 3 à 4, dans lequel chaque élément filaire porteur (32) comprenant une première portion filaire d'ancrage (76) de chaque élément filaire porteur (32) dans la première structure (10) de premiers éléments filaires (64, 66) prolongeant la portion filaire porteuse (74) dans la première structure (10) de premiers éléments filaires (64, 66) :

   - chaque zone droite transversale (Z1) du premier groupe de zone(s) droite(s) transversale(s) est dépourvue de toute première portion filaire d'ancrage (76) sur toute la largeur de la première structure (10) de premiers éléments filaires (64, 66),
   - chaque zone droite transversale (Z2) du deuxième groupe de zone(s) droite(s) transversale(s) comprend au moins une première portion filaire d'ancrage (76) sur la largeur de la première structure (10) de premiers éléments filaires (64, 66).

6. Assemblage imprégné (21), **caractérisé en ce qu'**il comprend :

- des première et deuxième couches (33, 35) respectivement de première et deuxième compositions polymériques (34, 36) ;
- un assemblage (24) selon l'une quelconque des revendications précédentes dans lequel :

- la première structure (10) de premiers éléments filaires (64, 66) est imprégnée au moins en partie de la première composition polymérique (34);
- la deuxième structure (12) de deuxièmes éléments filaires (68, 70) est imprégnée au moins en partie de la deuxième composition polymérique (36).

7. Pneumatique (20) de révolution autour d'un axe principal (YY'), qui comprend :

- une première structure de révolution (25) comprenant une première structure (10) de premiers éléments filaires (64, 66),
- une deuxième structure de révolution (27) comprenant une deuxième structure (12) de deuxièmes éléments filaires (68, 70), la deuxième structure de révolution étant agencée radialement à l'intérieur de la première structure de révolution (25),
- une structure porteuse (30) comprenant des éléments filaires porteurs (32) reliant la première structure de premiers éléments filaires (64, 66) et la deuxième structure (12) de deuxièmes éléments filaires (68, 70) entre elles, chaque élément filaire porteur (32) comprenant au moins une portion filaire porteuse (74) s'étendant entre la première structure de premiers éléments filaires (64, 66) et la deuxième structure (12) de deuxièmes éléments filaires (68, 70),
- un espace annulaire intérieur (52) délimité radialement par une face interne (42) de la première structure de premiers éléments filaires (64, 66) et une face interne (46) de la deuxième structure (12) de deuxièmes éléments filaires (68, 70), caractérisé avec :

  ∘ H0 étant la hauteur radiale moyenne de l'espace annulaire intérieur (52) lorsque chaque portion filaire porteuse (74) est au repos,
  ∘ H étant la hauteur radiale moyenne de l'espace annulaire intérieur (52) en l'absence de charge appliquée au pneumatique (20) et en l'absence de pression dans le pneumatique (20), tel que H0 x K ≤ H avec K=0,50,

et dans lequel la première structure (10) de premiers éléments filaires (64, 66) présente, au moins sur une partie de sa longueur, un allongement non nul selon la direction circonférentielle (XX') du pneumatique (20) et est non rompue.

8. Pneumatique (20) selon la revendication 7, dans lequel la première structure (10) de premiers éléments filaires (64, 66) comprend :

- au moins une zone droite transversale (Z1) d'un premier groupe de zone(s) droite(s) transversale(s), chaque zone droite transversale (Z1) du premier groupe de zone(s) droite(s) transversale(s) présentant un allongement non nul selon la direction circonférentielle (XX') du pneumatique (20) et est non rompue,
- au moins une zone droite transversale (Z2) d'un deuxième groupe de zone (s) droite(s) transversale(s), chaque zone droite transversale (Z2) du deuxième groupe de zone(s) droite(s) transversale(s) étant non rompue,

chaque zone droite transversale (Z1, Z2) de chaque premier et deuxième groupe de zone(s) droite(s) transversale(s) s'étendant sur toute la largeur de la première structure (10) de premiers éléments filaires (64, 66).

9. Pneumatique (20) selon l'une quelconque des revendications 7 à 8, dans lequel la première structure (10) de premiers éléments filaires (64, 66) est un premier tissu (26) comprenant des premiers éléments filaires (64), dits de chaine, sensiblement parallèles entre eux et s'étendant selon une première direction (C1), dite de chaine, la direction circonférentielle (XX') du pneumatique (20) formant un angle inférieur ou égal à 10° avec la première direction de chaine (C1).

10. Pneumatique (20) selon l'une quelconque des revendications 7 à 9, dans lequel, chaque élément filaire porteur (32) comprenant une première portion filaire d'ancrage (76) de chaque élément filaire porteur (32) dans la première structure (10) de premiers éléments filaires (64, 66) prolongeant la portion filaire porteuse (74) dans la première structure (10) de premiers éléments filaires (64, 66) :

- chaque zone droite transversale (Z1) du premier groupe de zone(s) droite(s) transversale(s) est dépourvue de toute première portion filaire d'ancrage (76) sur toute la largeur de la première structure (10) de premiers éléments filaires (64, 66),
- chaque zone droite transversale (Z2) du deuxième groupe de zone(s) droite(s) transversale(s) comprend au moins une première portion filaire d'ancrage (76) sur la largeur la première structure (10) de premiers éléments filaires (64, 66).

11. Ensemble monté (23), **caractérisé en ce qu'**il comprend un pneumatique (20) selon l'une quelconque des revendications 7 à 10 monté sur un moyen de montage (22) de l'ensemble monté (23) sur un véhicule.

12. Procédé de fabrication d'un pneumatique (20), comprenant

    - on enroule, autour d'un cylindre de confection (80) sensiblement de révolution autour d'un axe de révolution (YY'), un assemblage (24) comprenant :

        - une première structure (10) de premiers éléments filaires (64, 66),
        - une deuxième structure (12) de deuxièmes éléments filaires (68, 70),
        - une structure porteuse (30) comprenant des éléments filaires porteurs (32) reliant la première structure (10) de premiers éléments filaires (64, 66) et la deuxième structure (12) de deuxièmes éléments filaires (68, 70) entre elles, chaque élément filaire porteur (32) comprenant au moins une portion filaire porteuse (74) s'étendant entre la première structure (10) de premiers éléments filaires (64, 66) et la deuxième structure (12) de deuxièmes éléments filaires (68, 70),

    - on écarte radialement par rapport à l'axe de révolution la première structure (10) de premiers éléments filaires (64, 66) de façon à :

        - former un espace annulaire intérieur (52) délimité radialement par une face interne (42) de la première structure (10) de premiers éléments filaires (64, 66) et une face interne (46) de la deuxième structure (12) de deuxièmes éléments filaires (68, 70) et distante l'une de l'autre d'une distance radiale moyenne H telle que H0 x K ≤ H avec K=0,50 et H0 étant la hauteur radiale moyenne entre la face interne (42) de la première structure (10) de premiers éléments filaires (64, 66) et la face interne (46) de la deuxième structure (12) de deuxièmes éléments filaires (68, 70) lorsque chaque portion filaire porteuse (74) est au repos,
        - ce que la première structure de premiers éléments filaires (64, 66) s'allonge selon la direction circonférentielle (XX') du cylindre de confection (80) sur au moins une partie de sa longueur sans rompre.

13. Procédé selon la revendication 12, dans lequel, la première structure (10) de premiers éléments filaires (64, 66) étant un premier tissu (26) comprenant des premiers éléments filaires (64), dits de chaine, sensiblement parallèles entre eux et s'étendant selon une première direction (C1), dite de chaine :

    - on enroule l'assemblage (24) autour du cylindre de confection (80) de sorte que la première direction de chaine (C1) et la direction circonférentielle (XX') du cylindre de confection (80) forment un angle inférieur ou égal à 10°, et
    - on écarte radialement par rapport à l'axe de révolution le premier tissu (26) de façon à ce que chaque premier élément filaire (64) de chaine s'allonge selon la première direction de chaine (C1) sur au moins une partie de sa longueur sans rompre.

14. Procédé selon l'une quelconque des revendications 12 à 13, dans lequel la première structure (10) de premiers éléments filaires (64, 66) comprend :

    - au moins une zone droite transversale (Z1) d'un premier groupe de zone(s) droite(s) transversale(s),
    - au moins une zone droite transversale (Z2) d'un deuxième groupe de zone (s) droite(s) transversale(s),

    chaque zone droite transversale (Z1, Z2) de chaque premier et deuxième groupe de zone (s) droite(s) transversale(s) s'étendant sur toute la largeur de la première structure (10) de premiers éléments filaires (64, 66),
    on allonge sans rompre chaque zone droite transversale (Z1) du premier groupe de zone(s) droite(s) transversale(s) selon la direction circonférentielle (XX') du cylindre de confection (80), et
    on ne rompt sensiblement aucune zone droite transversale (Z2) du deuxième groupe de zone(s) droite(s) transversale(s).

15. Procédé selon l'une quelconque des revendications 12 à 14, dans lequel la première structure (10) de premiers éléments filaires (64, 66) est un premier tissu (26) comprenant des premiers éléments filaires (64), dits de chaine, sensiblement parallèles entre eux et s'étendant selon une première direction (C1), dite de chaine, la direction circonférentielle (XX') du cylindre de confection (80) formant un angle inférieur ou égal à 10° avec la première direction de chaine (C1).

**Patentansprüche**

1. Anordnung (24), welche umfasst:

- eine erste Struktur (10) von ersten fadenförmigen Elementen (64, 66), wobei sich die erste Struktur (10) von ersten fadenförmigen Elementen (64, 66) in einer ersten allgemeinen Richtung (G1) erstreckt,
- eine zweite Struktur (12) von zweiten fadenförmigen Elementen (68, 70),
- eine Stützstruktur (30), die tragende fadenförmige Elemente (32) umfasst, welche die erste Struktur von ersten fadenförmigen Elementen (64, 66) und die zweite Struktur (12) von zweiten fadenförmigen Elementen (68, 70) miteinander verbinden, wobei jedes tragende fadenförmige Element (32) wenigstens einen tragenden fadenförmigen Abschnitt (74) umfasst, der sich zwischen der ersten Struktur (10) von ersten fadenförmigen Elementen (64, 66) und der zweiten Struktur (12) von zweiten fadenförmigen Elementen (68, 70) erstreckt, **dadurch gekennzeichnet, dass**

die erste Struktur (10) von ersten fadenförmigen Elementen (64, 66) so ausgebildet ist, dass für eine Länge im Ruhezustand L der ersten Struktur (10) in der ersten allgemeinen Richtung (G1), ausgedrückt in m, die Dehnung bei maximaler Kraft Art der ersten Struktur (10) von ersten fadenförmigen Elementen (64, 66) in der ersten allgemeinen Richtung (G1) der Beziehung

$$Art > (2\pi \times H) / L$$

genügt, wobei H0 x K ≤ H, wobei H0 der mittlere gerade Abstand zwischen einer Innenseite (42) der ersten Struktur (10) von ersten fadenförmigen Elementen (64, 66) und einer Innenseite (46) der zweiten Struktur (12) von zweiten fadenförmigen Elementen (68, 70) ist, wenn sich jeder tragende fadenförmige Abschnitt (74) im Ruhezustand befindet, wobei H und H0 in m ausgedrückt werden und K = 0,50 ist.

2. Anordnung (24) nach dem vorhergehenden Anspruch, wobei die erste Struktur (10) von ersten fadenförmigen Elementen (64, 66) ein erstes Gewebe (26) ist, wobei das erste Gewebe (26) erste fadenförmige Elemente (64), Kettelemente genannt, umfasst, die im Wesentlichen zueinander parallel sind und sich in einer ersten Richtung (C1), Kettrichtung genannt, erstrecken, die im Wesentlichen parallel zu der ersten allgemeinen Richtung (G1) ist.

3. Anordnung (24) nach einem der vorhergehenden Ansprüche, wobei die erste Struktur (10) von ersten fadenförmigen Elementen (64, 66) umfasst:

   - wenigstens einen geraden Querbereich (Z1) einer ersten Gruppe von (einem) geraden Querbereich(en), wobei jeder gerade Querbereich (Z1) der ersten Gruppe von (einem) geraden Querbereich(en) dafür ausgebildet ist, eine Dehnung ohne Bruch jedes geraden Querbereichs (Z1) der ersten Gruppe von (einem) geraden Querbereich(en) in der ersten allgemeinen Richtung (G1) zu ermöglichen,
   - wenigstens einen geraden Querbereich (Z2) einer zweiten Gruppe von (einem) geraden Querbereich(en), wobei jeder gerade Querbereich (Z2) der zweiten Gruppe von (einem) geraden Querbereich(en) dafür ausgebildet ist, einen Bruch jedes geraden Querbereichs (Z2) der zweiten Gruppe von (einem) geraden Querbereich(en) zu verhindern,

wobei jeder gerade Querbereich (Z1, Z2) jeder ersten und zweiten Gruppe von (einem) geraden Querbereich(en) sich über die gesamte Breite der ersten Struktur (10) von ersten fadenförmigen Elementen (64, 66) erstreckt.

4. Anordnung (24) nach Anspruch 3, wobei, wenn das erste Gewebe (26) erste fadenförmige Elemente (66), Schusselemente genannt, umfasst, die im Wesentlichen zueinander parallel sind und sich mit den ersten fadenförmigen Kettelementen (64) kreuzen, jeder gerade Querbereich (Z1) der ersten Gruppe von (einem) geraden Querbereich(en) dafür ausgebildet ist, ein Trennen der fadenförmigen Schusselemente (66) voneinander in der ersten allgemeinen Richtung (G1) in jedem geraden Querbereich (Z1) der ersten Gruppe von (einem) geraden Querbereich(en) zu ermöglichen.

5. Anordnung (24) nach einem der Ansprüche 3 bis 4, wobei, wenn jedes tragende fadenförmige Element (32) einen ersten fadenförmigen Abschnitt zur Verankerung (76) jedes tragenden fadenförmigen Elements (32) in der ersten Struktur (10) von ersten fadenförmigen Elementen (64, 66) umfasst, der den tragenden fadenförmigen Abschnitt (74) in der ersten Struktur (10) von ersten fadenförmigen Elementen (64, 66) verlängert:

   - jeder gerade Querbereich (Z1) der ersten Gruppe von (einem) geraden Querbereich(en) auf der gesamten Breite der ersten Struktur (10) von ersten fadenförmigen Elementen (64, 66) nicht mit einem ersten fadenförmigen Verankerungsabschnitt (76) versehen ist,
   - jeder gerade Querbereich (Z2) der zweiten Gruppe von (einem) geraden Querbereich(en) wenigstens einen ersten fadenförmigen Verankerungsabschnitt (76) auf der Breite der ersten Struktur (10) von ersten fadenförmigen Elementen (64, 66) umfasst.

6. Imprägnierte Anordnung (21), **dadurch gekennzeichnet, dass** sie umfasst:

- eine erste und eine zweite Schicht (33, 35) einer ersten bzw. zweiten Polymerzusammensetzung (34, 36);
- eine Anordnung (24) nach einem der vorhergehenden Ansprüche, wobei:

- die erste Struktur (10) von ersten fadenförmigen Elementen (64, 66) wenigstens teilweise mit der ersten Polymerzusammensetzung (34) imprägniert ist,
- die zweite Struktur (12) von zweiten fadenförmigen Elementen (68, 70) wenigstens teilweise mit der zweiten Polymerzusammensetzung (36) imprägniert ist.

7. Reifen (20), welcher um eine Hauptachse (YY') rotiert und umfasst:

- eine erste Rotationsstruktur (25), die eine erste Struktur (10) von ersten fadenförmigen Elementen (64, 66) umfasst,
- eine zweite Rotationsstruktur (27), die eine zweite Struktur (12) von zweiten fadenförmigen Elementen (68, 70) umfasst, wobei die zweite Rotationsstruktur radial innerhalb der ersten Rotationsstruktur (25) angeordnet ist,
- eine Stützstruktur (30), die tragende fadenförmige Elemente (32) umfasst, welche die erste Struktur von ersten fadenförmigen Elementen (64, 66) und die zweite Struktur (12) von zweiten fadenförmigen Elementen (68, 70) miteinander verbinden, wobei jedes tragende fadenförmige Element (32) wenigstens einen tragenden fadenförmigen Abschnitt (74) umfasst, der sich zwischen der ersten Struktur von ersten fadenförmigen Elementen (64, 66) und der zweiten Struktur (12) von zweiten fadenförmigen Elementen (68, 70) erstreckt,
- einen inneren Ringraum (52), der radial von einer Innenseite (42) der ersten Struktur von ersten fadenförmigen Elementen (64, 66) und einer Innenseite (46) der zweiten Struktur (12) von zweiten fadenförmigen Elementen (68, 70) begrenzt wird, **gekennzeichnet durch**:

∘ wenn H0 die mittlere radiale Höhe des inneren Ringraumes (52) ist, wenn sich jeder tragende fadenförmige Abschnitt (74) im Ruhezustand befindet,
∘ wenn H die mittlere radiale Höhe des inneren Ringraumes (52) bei Nichtvorhandensein einer auf den Reifen (20) einwirkenden Last und bei Nichtvorhandensein von Druck im Reifen (20) ist, so dass H0 × K ≤ H ist, mit K = 0,50,

und wobei die erste Struktur (10) von ersten fadenförmigen Elementen (64, 66) wenigstens auf einem Teil ihrer Länge eine von null verschiedene Dehnung in der Umfangsrichtung (XX') des Reifens (20) aufweist und nicht gebrochen ist.

8. Reifen (20) nach Anspruch 7, wobei die erste Struktur (10) von ersten fadenförmigen Elementen (64, 66) umfasst:

- wenigstens einen geraden Querbereich (Z1) einer ersten Gruppe von (einem) geraden Querbereich(en), wobei jeder gerade Querbereich (Z1) der ersten Gruppe von (einem) geraden Querbereich(en) eine von null verschiedene Dehnung in der Umfangsrichtung (XX') des Reifens (20) aufweist und nicht gebrochen ist,
- wenigstens einen geraden Querbereich (Z2) einer zweiten Gruppe von (einem) geraden Querbereich(en), wobei jeder gerade Querbereich (Z2) der zweiten Gruppe von (einem) geraden Querbereich(en) nicht gebrochen ist,

wobei jeder gerade Querbereich (Z1, Z2) jeder ersten und zweiten Gruppe von (einem) geraden Querbereich(en) sich über die gesamte Breite der ersten Struktur (10) von ersten fadenförmigen Elementen (64, 66) erstreckt.

9. Reifen (20) nach einem der Ansprüche 7 bis 8, wobei die erste Struktur (10) von ersten fadenförmigen Elementen (64, 66) ein erstes Gewebe (26) ist, das erste fadenförmige Elemente (64), Kettelemente genannt, umfasst, die im Wesentlichen zueinander parallel sind und sich in einer ersten Richtung (C1), Kettrichtung genannt, erstrecken, wobei die Umfangsrichtung (XX') des Reifens (20) mit der ersten Kettrichtung (C1) einen Winkel bildet, der kleiner oder gleich 10° ist.

10. Reifen (20) nach einem der Ansprüche 7 bis 9, wobei, wenn jedes tragende fadenförmige Element (32) einen ersten fadenförmigen Abschnitt zur Verankerung (76) jedes tragenden fadenförmigen Elements (32) in der ersten Struktur (10) von ersten fadenförmigen Elementen (64, 66) umfasst, der den tragenden fadenförmigen Abschnitt (74) in der ersten Struktur (10) von ersten fadenförmigen Elementen (64, 66) verlängert:

- jeder gerade Querbereich (Z1) der ersten Gruppe von (einem) geraden Querbereich(en) auf der gesamten Breite der ersten Struktur (10) von ersten fadenförmigen Elementen (64, 66) nicht mit einem ersten fadenförmigen Verankerungsabschnitt (76) versehen ist,
- jeder gerade Querbereich (Z2) der zweiten Gruppe von (einem) geraden Querbereich(en) wenigstens einen ersten fadenförmigen Verankerungsabschnitt (76) auf der Breite der ersten Struktur (10) von ersten fadenförmigen Elementen (64, 66) umfasst.

11. Montierte Einheit (23), **dadurch gekennzeichnet, dass** sie einen Reifen (20) nach einem der Ansprüche 7 bis 10 umfasst, der auf einem Mittel zur Montage (22) der montierten Einheit (23) an einem Fahrzeug montiert ist.

12. Verfahren zur Herstellung eines Reifens (20), welches umfasst:

- Um eine Konfektionierungstrommel (80), die im Wesentlichen um eine Rotationsachse (YY') rotiert, wird eine Anordnung (24) gewickelt, welche umfasst:

    - eine erste Struktur (10) von ersten fadenförmigen Elementen (64, 66),
    - eine zweite Struktur (12) von zweiten fadenförmigen Elementen (68, 70),
    - eine Stützstruktur (30), die tragende fadenförmige Elemente (32) umfasst, welche die erste Struktur (10) von ersten fadenförmigen Elementen (64, 66) und die zweite Struktur (12) von zweiten fadenförmigen Elementen (68, 70) miteinander verbinden, wobei jedes tragende fadenförmige Element (32) wenigstens einen tragenden fadenförmigen Abschnitt (74) umfasst, der sich zwischen der ersten Struktur (10) von ersten fadenförmigen Elementen (64, 66) und der zweiten Struktur (12) von zweiten fadenförmigen Elementen (68, 70) erstreckt,

- die erste Struktur (10) von ersten fadenförmigen Elementen (64, 66) wird bezüglich der Rotationsachse radial wegbewegt, so dass:

    - ein innerer Ringraum (52) gebildet wird, der radial von einer Innenseite (42) der ersten Struktur (10) von ersten fadenförmigen Elementen (64, 66) und einer Innenseite (46) der zweiten Struktur (12) von zweiten fadenförmigen Elementen (68, 70) begrenzt wird, die um einen mittleren radialen Abstand H voneinander beabstandet sind, so dass H0 $\times$ K $\leq$ H ist, mit K = 0,50, und wobei H0 die mittlere radiale Höhe zwischen der Innenseite (42) der ersten Struktur (10) von ersten fadenförmigen Elementen (64, 66) und der Innenseite (46) der zweiten Struktur (12) von zweiten fadenförmigen Elementen (68, 70) ist, wenn sich jeder tragende fadenförmige Abschnitt (74) im Ruhezustand befindet,
- die erste Struktur von ersten fadenförmigen Elementen (64, 66) sich in der Umfangsrichtung (XX') der Konfektionierungstrommel (80) auf wenigstens einem Teil ihrer Länge dehnt, ohne zu brechen.

13. Verfahren nach Anspruch 12, wobei, wenn die erste Struktur (10) von ersten fadenförmigen Elementen (64, 66) ein erstes Gewebe (26) ist, das erste fadenförmige Elemente (64), Kettelemente genannt, umfasst, die im Wesentlichen zueinander parallel sind und sich in einer ersten Richtung (C1), Kettrichtung genannt, erstrecken:

    - die Anordnung (24) so um die Konfektionierungstrommel (80) gewickelt wird, dass die erste Kettrichtung (C1) und die Umfangsrichtung (XX') der Konfektionierungstrommel (80) einen Winkel bilden, der kleiner oder gleich 10° ist, und
    - das erste Gewebe (26) bezüglich der Rotationsachse radial wegbewegt wird, derart, dass jedes erste fadenförmige Kettelement (64) sich in der ersten Kettrichtung (C1) auf wenigstens einem Teil seiner Länge dehnt, ohne zu brechen.

14. Verfahren nach einem der Ansprüche 12 bis 13, wobei die erste Struktur (10) von ersten fadenförmigen Elementen (64, 66) umfasst:

    - wenigstens einen geraden Querbereich (Z1) einer ersten Gruppe von (einem) geraden Querbereich(en),
    - wenigstens einen geraden Querbereich (Z2) einer zweiten Gruppe von (einem) geraden Querbereich(en),

wobei jeder gerade Querbereich (Z1, Z2) jeder ersten und zweiten Gruppe von (einem) geraden Querbereich(en) sich über die gesamte Breite der ersten Struktur (10) von ersten fadenförmigen Elementen (64, 66) erstreckt,
jeder gerade Querbereich (Z1) der ersten Gruppe von (einem) geraden Querbereich(en) in der Umfangsrichtung (XX') der Konfektionierungstrommel (80) gedehnt wird, ohne zu brechen, und
im Wesentlichen kein gerader Querbereich (Z2) der zweiten Gruppe von (einem) geraden Querbereich(en) gebrochen wird.

15. Verfahren nach einem der Ansprüche 12 bis 14, wobei die erste Struktur (10) von ersten fadenförmigen Elementen (64, 66) ein erstes Gewebe (26) ist, das erste fadenförmige Elemente (64), Kettelemente genannt, umfasst, die im Wesentlichen zueinander parallel sind und sich in einer ersten Richtung (C1), Kettrichtung genannt, erstrecken, wobei die Umfangsrichtung (XX') der Konfektionierungstrommel (80) mit der ersten Kettrichtung (C1) einen Winkel bildet, der kleiner oder gleich 10° ist.

## Claims

1.  Assembly (24) comprising:

    - a first fabric (10) of first filamentary elements (64, 66), the first fabric (10) of first filamentary elements (64, 66) extending in a first overall direction (G1), ,
    - a second fabric (12) of second filamentary elements (68, 70),
    - a bearing structure (30) comprising filamentary bearing elements (32) connecting the first fabric of first filamentary elements (64, 66)and the second fabric (12) of second filamentary elements (68, 70) together, each filamentary bearing element (32) comprising at least one filamentary bearing portion (74) extending between the first fabric (10) of first filamentary elements (64, 66) and the second fabric (12) of second filamentary elements (68, 70), **characterized in that**

    the first fabric (10) of first filamentary elements (64, 66) being arranged in such a way that, for an at-rest length L of the first fabric (10) in the first overall direction (G1), expressed in m, elongation at maximum strength Art of the first fabric (10) of first filamentary elements (64, 66) in the first overall direction (G1) is Art > (2π x H) /L
    in which H0 x K ≤ H where H0 is the mean straight-line distance between an internal face (42) of the first fabric (10) of first filamentary elements (64, 66) and an internal face (46) of the second fabric (12) of second filamentary elements (68, 70) when each filamentary bearing portion (74) is at rest, H and H0 being expressed in m, and K=0.50.

2.  Assembly (24) according to the preceding claim, in which the first fabric (10) of first filamentary elements (64, 66) is a first woven fabric (26), said first woven fabric (26) comprising first filamentary elements (64), referred to as warp elements, which are substantially parallel to one another and extending in a first direction (C1), referred to as the warp direction, substantially parallel to the first overall direction (G1).

3.  Assembly (24) according to any one of the preceding claims, in which the first fabric (10) of first filamentary elements (64, 66) comprises:

    - at least one transverse straight zone (Z1) of a first transverse straight zone(s) group, each transverse straight zone (Z1) of the first transverse straight zone(s) group being arranged in such a way as to allow elongation without breakage of each transverse straight zone (Z1) of the first transverse straight zone(s) group in the first overall direction (G1),
    - at least one transverse straight zone (Z2) of a second transverse straight zone(s) group, each transverse straight zone (Z2) of the second transverse straight zone(s) group being arranged in such a way as to prevent breakage of each transverse straight zone (Z2) of the second transverse straight zone(s) group,

    each transverse straight zone (Z1, Z2) of each first and second transverse straight zone(s) group extending across the entire width of the first fabric (10) of first filamentary elements (64, 66).

4.  Assembly (24) according to Claim 3, in which, with the first fabric (26) comprising first filamentary elements (66), known as weft elements, that are substantially mutually parallel and that intertwine with the first filamentary warp elements (64), each transverse straight zone (Z1) of the first transverse straight zone(s) group is arranged in such a way as to allow the filamentary weft elements (66) to be parted from one another in the first overall direction (G1) in each transverse straight zone (Z1) of the first transverse straight zone(s) group.

5.  Assembly (24) according to any one of Claims 3 to 4, in which, each filamentary bearing element (32) comprising a first filamentary portion (76) for anchoring each filamentary bearing element (32) in the first fabric (10) of first filamentary elements (64, 66) prolonging the filamentary bearing portion (74) in the first fabric (10) of first filamentary elements (64, 66):

    - each transverse straight zone (Z1) of the first transverse straight zone(s) group is devoid of any first filamentary anchoring portion (76) across the entire width of the first fabric (10) of first filamentary elements (64, 66),
    - each transverse straight zone (Z2) of the second transverse straight zone(s) group comprises at least a first filamentary anchoring portion (76) across the width of the first fabric (10) of first filamentary elements (64, 66).

6.  Impregnated assembly (21), **characterized in that** it comprises:

    - first and second layers (33, 35) respectively made of first and second polymer compounds (34, 36);
    - an assembly (24) according to any one of the preceding claims, in which:

        - the first fabric (10) of first filamentary elements (64, 66) is at least partially impregnated with the first polymer composition (34);

- the second fabric (12) of second filamentary elements (68, 70) is at least partially impregnated with the second polymer composition (36).

7. Tyre (20) of revolution about a main axis (YY'), **characterized in that** it comprises:

- a first structure exhibiting symmetry of revolution (25) comprising a first fabric (10) of first filamentary elements (64, 66),
- a second structure exhibiting symmetry of revolution (27) comprising a second fabric (12) of second filamentary elements (68, 70), the second structure exhibiting symmetry of revolution being arranged radially on the inside of the first structure exhibiting symmetry of revolution (25),
- a bearing structure (30) comprising filamentary bearing elements (32) connecting the first fabric of first filamentary elements (64, 66) and the second fabric (12) of second filamentary elements (68, 70) together, each filamentary bearing element (32) comprising at least one filamentary bearing portion (74) extending between the first fabric of first filamentary elements (64, 66) and second fabric (12) of second filamentary elements (68, 70),
- an interior annular space (52) delimited radially by an internal face (42) of the first fabric of first filamentary elements (64, 66) and an internal face (46) of the second fabric (12) of second filamentary elements (68, 70), characterized with:

  ◦ H0 is the mean radial height of the interior annular space (52) when each filamentary bearing portion (74) is at rest,
  ◦ H is the mean radial height of the interior annular space (52) in the absence of load applied to the tyre (20) and in the absence of pressure in the tyre (20), such that H0 x K ≤ H where K = 0.50,

And in which the first fabric (10) of first filamentary elements (64, 66) exhibits, at least over part of its length, a non-zero elongation in the circumferential direction (XX') of the tyre (20) and is non-broken.

8. Tyre (20) according to the claim 7, in which the first fabric (10) of first filamentary elements (64, 66) comprises:

- at least one transverse straight zone (Z1) of a first transverse straight zone(s) group, each transverse straight zone (Z1) of the first transverse straight zone(s) group exhibiting non-zero elongation in the circumferential direction (XX') of the tyre (20) and being non-broken,
- at least one transverse straight zone (Z2) of a second transverse straight zone(s) group, each transverse straight zone (Z2) of the second transverse straight zone(s) group being unbroken,

each transverse straight zone (Z1, Z2) of each first and second transverse straight zone(s) group extending across the entire width of the first fabric (10) of first filamentary elements (64, 66).

9. Tyre (20) according to any one of Claims 7 to 8, in which the first fabric (10) of first filamentary elements (64, 66) is a first woven fabric (26) comprising first filamentary elements (64), referred to as warp elements, which are substantially parallel to one another and extending in a first direction (C1), referred to as the warp direction, the circumferential direction (XX') of Tyre (20) forming an angle less than or equal to 10° with the first warp direction (C1).

10. Tyre (20) according to any one of Claims 7 to 9, in which each filamentary bearing element (32) comprising a first filamentary portion (76) for anchoring each filamentary bearing element (32) in the first fabric (10) of first filamentary elements (64, 66) prolonging the filamentary bearing portion (74) in the first fabric (10) of first filamentary elements (64, 66):

- each transverse straight zone (Z1) of the first transverse straight zone(s) group is devoid of any first filamentary anchoring portion (76) across the entire width of the first fabric (10) of first filamentary elements (64, 66),
- each transverse straight zone (Z2) of the second transverse straight zone(s) group comprises at least a first filamentary anchoring portion (76) across the width of the first fabric (10) of first filamentary elements (64, 66).

11. Mounted assembly (23), **characterized in that** it comprises a tyre (20) according to any one of Claims 7 to 10 mounted on a mounting means (22) for mounting the mounted assembly (23) on a vehicle.

12. Method for manufacturing a tyre (20), comprising:

- there is wound, about a tyre-building drum (80) substantially of revolution about an axis of revolution (YY'), an assembly (24) comprising:

  - a first fabric (10) of first filamentary elements (64, 66),
  - a second fabric (12) of second filamentary elements (68, 70),

- a bearing structure (30) comprising filamentary bearing elements (32) connecting the first fabric (10) of first filamentary elements (64, 66) and the second fabric (12) of second filamentary elements (68, 70) together, each filamentary bearing element (32) comprising at least one filamentary bearing portion (74) extending between the first fabric (10) of first filamentary elements (64, 66) and the second fabric (12) of second filamentary elements (68, 70),
- the first fabric (10) of first filamentary elements (64, 66) is moved radially away from the axis of revolution in such a way:
- as to form an interior annular space (52) delimited radially by an internal face (42) of the first fabric (10) of first filamentary elements (64, 66) and an internal face (46) of the second fabric (12) of second filamentary elements (68, 70) and distant from one another by a mean radial distance H such that H0 x K $\leq$ H where K=0.50 and H0 is the mean radial height between the internal face (42) of the first fabric (10) of first filamentary elements (64, 66) and the internal face (46) of the second fabric (12) of second filamentary elements (68, 70) when each filamentary bearing portion (74) is at rest,
- that the first fabric of first filamentary elements (64, 66) becomes elongated in the circumferential direction (XX') of the tyre-building drum (80) along at least part of its length without breaking.

13. Method according to Claim 12, in which the first fabric (10) of first filamentary elements (64, 66) is a first woven fabric (26) comprising first filamentary elements (64), referred to as warp elements, which are substantially parallel to one another and extending in a first direction (C1), referred to as the warp direction:

   - Assembly (24) is wound about a tyre-building drum (80) such that the first warp direction (C1) and the circumferential direction (XX') of the tyre-building drum (80) form an angle less than or equal to 10° and,
   - the first woven fabric (26) is moved radially away from the axis of revolution so that each first filamentary warp elements (64) is elongated along the first warp direction (C1) on at least part of its length without breaking.

14. Method according to any one of Claims 12 to 13, in which the first fabric (10) of first filamentary elements (64, 66) comprises:

   - at least one transverse straight zone (Z1) of a first transverse straight zone(s) group,
- at least one transverse straight zone (Z2) of a second transverse straight zone(s) group,

each transverse straight zone (Z1, Z2) of each first and second transverse straight zone(s) group extending across the entire width of the first fabric (10) of first filamentary elements (64, 66), and one breaks substantially no transverse straight zone (Z2) of the second transverse straight zone(s) group.

15. Method according to any one of Claims 12 to 14, in which the first fabric (10) of first filamentary elements (64, 66) is a first woven fabric (26) comprising first filamentary elements (64), referred to as warp elements, which are substantially parallel to one another and extending in a first direction (C1), referred to as the warp direction, the circumferential direction (XX') of Tyre (20) forming an angle less than or equal to 10° with the first warp direction (C1).

FIG. 1

FIG. 2

FIG. 3

FIG. 4

EP 3 568 289 B1

FIG. 5

43

FIG. 6

FIG. 7

E = D

Sp

74

Lp

## FIG. 8

G1

64

C1

26A

64

26

10

41

P

T1

66

66

26B

64

66

P'

Ld2

Ld1

Ld2

Z1

Z2

Z1

Z2

Z1

## FIG. 9

FIG. 10

FIG. 11

EP 3 568 289 B1

FIG. 12

EP 3 568 289 B1

49

FIG. 13

FIG. 14

FIG. 15

FIG. 16

FIG. 17

FIG. 18

FIG. 19

FIG. 20

FIG. 21

FIG. 22

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4235270 A
- WO 2009087291 A
- WO 2005007422 A
- WO 2013017421 A
- WO 2013017422 A
- WO 2013017423 A
- WO 2015007641 A
- WO 2015007642 A